(19) Europäisches Patentamt
European Patent Office
Office européen des brevets

(11) EP 2 833 172 A1

(12) # EUROPEAN PATENT APPLICATION
published in accordance with Art. 153(4) EPC

(43) Date of publication:
**04.02.2015 Bulletin 2015/06**

(21) Application number: **13768354.6**

(22) Date of filing: **25.03.2013**

(51) Int Cl.:
***G02B 5/26*** *(2006.01)* ***B32B 7/02*** *(2006.01)*
***C03C 27/12*** *(2006.01)* ***G02B 5/30*** *(2006.01)*

(86) International application number:
**PCT/JP2013/058546**

(87) International publication number:
**WO 2013/146664 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.03.2012 JP 2012070107**

(71) Applicant: **FUJIFILM Corporation**
**Tokyo 106-8620 (JP)**

(72) Inventor: **WATANABE Hidetoshi**
**Ashigarakami-gun**
**Kanagawa 258-8577 (JP)**

(74) Representative: **Hoffmann Eitle**
**Patent- und Rechtsanwälte PartmbB**
**Arabellastraße 30**
**81925 München (DE)**

(54) **LIGHT-REFLECTING LAYER, LIGHT-REFLECTING PLATE, INTERLAYER SHEET FOR LAMINATED GLASS, LAMINATED GLASS AND PROCESSES FOR PRODUCITON OF SAME**

(57) A light reflection layer, comprising a first liquid crystal layer obtained by fixing a first curable liquid crystal composition through curing in a state of a cholesteric liquid crystal phase, wherein the first curable liquid crystal composition contains a polymerizable liquid crystal compound, a fluoroalkyl group-containing alignment control agent, and a hydrophilic group-containing coating property imparting agent exhibits low haze, excellent heat shielding properties and improved coating properties when the light reflection layer obtained by fixing the cholesteric liquid crystal phase on the light reflection layer is laminated and coated.

Fig. 1

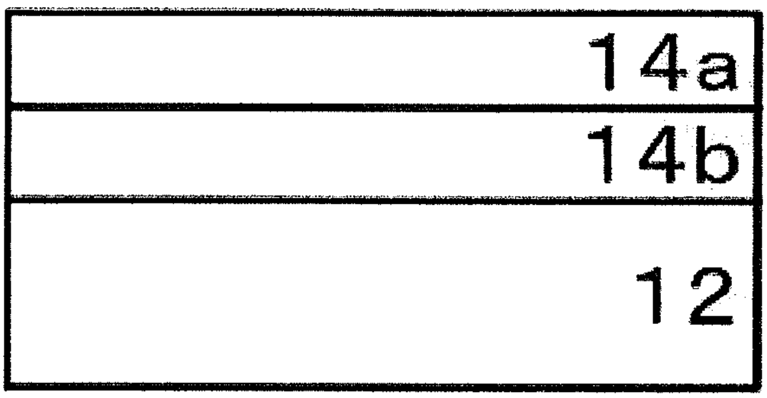


EP 2 833 172 A1

Fig. 2

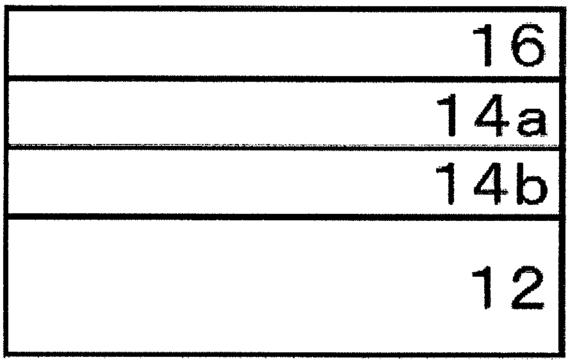


Fig. 3

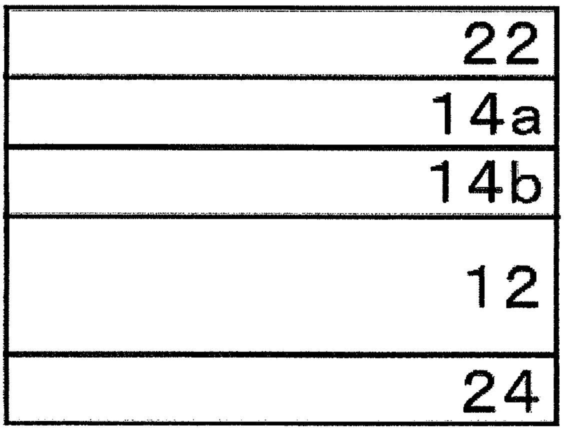


Fig. 4

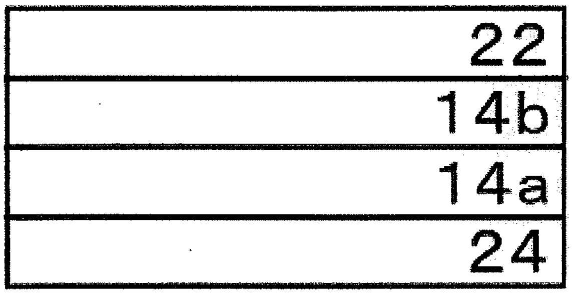

## Description

Technical Field

The present invention relates to a light reflection layer obtained by fixing a cholesteric liquid crystal phase and to a light reflection plate which includes a plurality of the light reflection layers and is used for shielding windows of mainly a building, a vehicle, and the like. In addition, the present invention relates to a light reflection layer obtained by removing a substrate from the light reflection plate, a laminated interlayer film sheet for light-reflective laminated glass using the light reflection layer or the light reflection plate, laminated glass using a laminated interlayer film sheet, and a method of manufacturing these.

Background Art

In recent years, since demand for industrial products related to energy savings is high due to the growing interest in the environment and energy, glass and a film which are effective for shielding of window glass of a house, a vehicle, and the like, that is, effective for reducing heat load due to sunlight have been in demand. In order to reduce heat load due to sunlight, it is necessary to prevent transmission of either sunlight in a visible light region or an infrared light region of the solar spectrum.

Glass which is frequently used for Eco-glass having high heat insulation properties and heat shielding properties is multi-layered glass while glass using a special metal film that blocks heat radiation referred to as Low-E pair glass is coated. The special metal film can be manufactured by laminating a plurality of layers by a vacuum deposition method disclosed in Patent Literature 1. Coating of such special metal films which are prepared by vacuum deposition films is extremely excellent in reflective performance, but productivity of a vacuum process is low and the manufacturing cost thereof is high. In addition, since electromagnetic waves are shielded at the same time when the metal film is used, there are problems in that electromagnetic wave interference occurs when used for a mobile phone or the like, and GPS or the like cannot be used when used for a vehicle.

As a heat-shielding film, a selective wavelength reflection film has a configuration provided with a liquid crystal layer obtained by fixing a cholesteric liquid crystal phase on an arbitrary support. For example, Patent Literature 2 discloses a laminated optical film having a phase difference film and a reflective circular polarization plate with predetermined characteristics and having reflectivity with respect to infrared rays, and an example using a cholesteric liquid crystal phase as the phase difference film.

Further, Patent Literature 3 discloses an infrared light reflective product including a visible light transparent substrate and an infrared light reflective cholesteric liquid crystal layer.

In a case where a light reflective film is prepared using a liquid crystal layer obtained by fixing a cholesteric liquid crystal phase, a system of laminating a plurality of layers for obtaining a desired reflection wavelength band and reflection performance is used as disclosed in Patent Literature 2. As means for laminating cholesteric liquid crystal layers, a method of adhesion and lamination through an adhesive material as disclosed in Patent Literature 4 and a method of repeatedly performing spin coating as disclosed in Patent Literature 5 exists.

However, in the method of adhesion and lamination, since an adhesive material is used, extra layers which do not contribute to light reflection performance are increased so the thickness of the light reflection film is increased. Further, the number of working processes is increased, and thus the manufacturing cost is increased.

In the method of repeatedly performing spin coating, since there is a limit to the size or substrates to which spin coating can be applied, and there is a limitation in satisfying various demands.

Further, when cholesteric liquid crystal layers are laminated, a huge task is to suppress deterioration of haze due to a decrease in coating properties (occurrence of unevenness or cissing). Since the value of the haze is increased as the number of lamination of liquid crystal layers are increased in order to improve the light reflection performance, quality as the liquid reflection film is decreased.

Here, as a method of improving degradation of coating properties in general, a method of adding a wettability imparting agent to a coating liquid is known. For example, Patent Literature 6 discloses a method of providing an optical anisotropic film having a dye alignment film excellent in bending resistance by adding at least one wettability imparting agent selected from a group consisting of an acetylene glycol-based compound and an acetylene alcohol-based compound to an isotropic solution containing a dichroic dye having a liquid crystal forming ability. However, an example of adding an additive for controlling the alignment of a liquid crystal component on the surface side of a coating liquid is not described in Patent Literature 6.

Further, Patent Literature 7 discloses that the alignment of a liquid crystal can be changed by heating and applying a voltage using a cholesteric liquid crystal resin composition for which a chiral agent having a hydrophilic ethylene oxide structure is used. However, the coating properties of the coating liquid have not been examined in Patent Literature 7.

Citation List

Patent Literatures

Patent Literature 1: JP-A-6-263486
Patent Literature 2: Japanese Patent No. 4109914
Patent Literature 3: JP-T-2009-514022
Patent Literature 4: JP-A-9-304770
Patent Literature 5: Japanese Patent No. 3745221
Patent Literature 6: JP-A-2009-75197
Patent Literature 7: JP-A-2006-282828

Summary of Invention

Technical Problem

Accordingly, it is necessary that an infrared light reflection plate having a plurality of light reflection layers obtained by fixing a cholesteric liquid crystal phase can be manufactured at a low cost with few restrictions and that the coating properties are maintained during lamination so that the value of the haze is suppressed.

From the above, a problem to be solved by the present invention is to provide a light reflection layer in which the value of haze is suppressed, heat shielding properties are high, and whose coating properties can be improved when the light reflection layer obtained by fixing the cholesteric liquid crystal phase on the light reflection layer is laminated and coated.

Solution to Problem

As a result of thorough investigation conducted by the present inventor, it is understood that the value of the haze of the light reflection layer obtained by fixing the cholesteric liquid crystal phase can be significantly decreased and the heat shielding performance can be significantly improved by adding a fluoroalkyl group-containing alignment control agent to a coating liquid. However, in a case where such a fluoroalkyl group-containing alignment control agent is used, the coating property at the time of lamination is deteriorated, the value of the haze is suppressed, and the heat shielding property becomes high, so that the balance between the heat shielding property and the coating property is still difficult to achieve.

In order to solve the problem, as a result of intensive research conducted by the present inventor, in a lamination coating system using a fluoroalkyl group-containing alignment control agent, it is understood that the haze can be prevented from becoming larger even when the lamination is repeatedly performed if the surface of a coated film is adjusted to have sufficient wettability with respect to a coating liquid to be applied next. Based on such knowledge, the present invention is completed using a polymerizable composition containing a polymerizable liquid crystal compound, a fluoroalkyl group-containing alignment control agent, and a hydrophilic group-containing coating property imparting agent.

Means for solving the above-described problems is as follows.

[1] A light reflection layer including a first liquid crystal layer obtained by fixing a first curable liquid crystal composition through curing in a state of a cholesteric liquid crystal phase, in which the first curable liquid crystal composition contains a polymerizable liquid crystal compound, a fluoroalkyl group-containing alignment control agent, and a hydrophilic group-containing coating property imparting agent.

[2] In the light reflection layer according to [1], it is preferable that the fluoroalkyl group-containing alignment control agent in the first curable liquid crystal composition be contained in the range of 0.003% by mass to 0.02% by mass with respect to the polymerizable liquid crystal compound in the first curable liquid crystal composition.

[3] In the light reflection layer according to [1] or [2], it is preferable that the hydrophilic group-containing coating property imparting agent in the first curable liquid crystal composition be contained in the range of 0.03% by mass to 0.2% by mass with respect to the polymerizable liquid crystal compound in the first curable liquid crystal composition.

[4] It is preferable that the light reflection layer according to any one of [1] to [3] further include at least one second liquid crystal layer obtained by being laminated on the first liquid crystal layer and fixing a second curable liquid crystal composition through curing in a state of a cholesteric liquid crystal phase.

[5] In the light reflection layer according to [4], it is preferable that the second curable liquid crystal composition contain a polymerizable liquid crystal compound, a fluoroalkyl group-containing alignment control group, and a hydrophilic group-containing coating property imparting agent.

[6] In the light reflection layer according to [4] or [5], it is preferable that the fluoroalkyl group-containing alignment control agent in the second curable liquid crystal composition be contained in the range of 0.003% by mass to 0.02% by mass with respect to the polymerizable liquid crystal compound in the second curable liquid crystal composition.

[7] In the light reflection layer according to any one of [4] to [6], it is preferable that the hydrophilic group-containing coating property imparting agent in the second curable liquid crystal composition be contained in the range of 0.03% by mass to 0.2% by mass with respect to the polymerizable liquid crystal compound in the second curable liquid crystal composition.

[8] In the light reflection layer according to any one of [1] to [7], it is preferable that the hydrophilic group-containing coating property imparting agent be an acetylene glycol-based compound.

[9] In the light reflection layer according to any one of [1] to [8], wherein a selective reflection characteristic be in an infrared light region.

[10] A light reflection plate including a substrate; and the light reflection layer according to any one of [1] to [9], which is arranged on the substrate.

[11] In the light reflection plate according to [10], it is preferable that the substrate be a polymer film.

[12] In the light reflection plate according to [10] or [11], it is preferable that a selective reflection characteristic be in an infrared light region.

[13] A laminated interlayer film sheet for glass including the light reflection layer according to any one of [1] to [9] or the light reflection plate according to any one of [10] to [12] ; and an interlayer film sheet which is arranged on at least one outermost layer of the light reflection layer or the light reflection plate.

[14] It is preferable that the laminated interlayer film sheet for glass according to [13] further include interlayer film sheets on both of the outermost layers of the light reflection layer and the light reflection plate respectively.

[15] A laminated glass including two sheets of glass; and the laminated interlayer film sheet for glass according to [13] or [14], which is interposed between the two sheets of glass.

[16] In the laminated glass according to [15], it is preferable that at least one sheet among the two sheets of glass is a heat-absorbing glass, a visible light transmittance of the heat-absorbing glass at a standard A light source be in the range of 80% to 90%, and a dominant wavelength measured using the standard A light source be in the range of 495 nm to 560 nm.

[17] A method of manufacturing a laminated interlayer film sheet for laminated glass including a first process of bonding a first interlayer film sheet to one surface of the light reflection plate according to any one of [10] to [12] to obtain a first laminate; and a second process of bonding a second interlayer film sheet to a surface on the opposite side of the surface to which the first interlayer film sheet of the first laminate is bonded.

[18] In the method of manufacturing the laminated interlayer film sheet for glass according to [17], it is preferable that the first process includes a process of peeling a substrate included in the light reflection plate from the first laminate, which is performed simultaneously or after a process of bonding the light reflection plate to the first interlayer film sheet, and the second process includes a process of bonding the second interlayer film sheet to the surface from which the substrate of the first laminate is peeled.

[19] A method of manufacturing laminated glass, including a process of manufacturing a laminate sandwiched between glass plates by interposing the laminated interlayer film sheet for laminated glass according to [17] or [18] between two sheets of glass plates; and a process of heating and pressing the laminate sandwiched between the glass plates.

[20] A window member for a building or a vehicle which uses the light reflection layer according to any one of [1] to [9], the light reflection plate according to any one of [10] to [12], the interlayer film sheet for glass according to [13] or [14], or the laminated glass according to [15] or [16].

## Advantageous Effects of Invention

According to the present invention, it is possible to provide a light reflection layer in which the value of haze is suppressed, heat shielding properties are high, and whose coating properties can be improved when the light reflection layer obtained by fixing the cholesteric liquid crystal phase on the light reflection layer is laminated and coated.

## Brief Description of Drawings

[Fig. 1] Fig. 1 is a cross-sectional view illustrating an example of a light reflection plate of the present invention.

[Fig. 2] Fig. 2 is a cross-sectional view illustrating an example of a light reflection plate of the present invention.
[Fig. 3] Fig. 3 is a cross-sectional view illustrating an example of a laminated interlayer film sheet of laminated glass of the present invention.
[Fig. 4] Fig. 4 is a cross-sectional view illustrating an example of a laminated interlayer film sheet of laminated glass of the present invention.
[Fig. 5] Fig. 5 is a cross-sectional view illustrating an example of a laminated interlayer film sheet of laminated glass of the present invention.
[Fig. 6] Fig. 6 is a cross-sectional view illustrating an example of laminated glass of the present invention.
[Fig. 7] Fig. 7 is a cross-sectional view illustrating an example of laminated glass of the present invention.
[Fig. 8] Fig. 8 is a cross-sectional view illustrating an example of laminated glass of the present invention.
[Fig. 9] Fig. 9 is a graph showing intensity distribution of the energy of solar light.

Description of Embodiments

Hereinafter, the present invention will be described in detail. The description of the constituent elements described below is made based on typical embodiments of the present invention, but the present invention is not limited thereto. In this description, the numerical range expressed by the wording "a number to another number" in the present specification means a range that falls between the former number indicating the lower limit of the range and the latter number indicating the upper limit thereof. Further, in the present specification, a laminate sandwiched between glass plates indicates a laminate which is laminated in order of a glass plate, an interlayer film, a light reflection layer (or light reflection plate), interlayer film, and a glass plate, and also indicates a laminate before heating and pressing are performed thereon. In addition, laminated glass indicates glass obtained by heating and pressing a laminate sandwiched between the glass plates.
Further, a birefringence $\Delta n$ is obtained by dividing a bandwidth by a pitch as shown in Expression 1 of "$\Delta\lambda = \Delta n \cdot P$" described in Japanese Patent No. 4208990. In the present specification, the birefringence $\Delta n$ of a layer obtained by fixing a cholesteric liquid crystal phase is defined as follows.
In the present specification, the birefringence $\Delta n$ of a layer formed by fixing a cholesteric liquid crystal phase means $\Delta n$ at a wavelength (specifically, in the vicinity of a 1000 nm wavelength) indicating a selective reflection characteristic. Specifically, firstly, as a sample, a layer obtained by fixing a cholesteric liquid crystal phase in which a helical axis is uniformly aligned with respect to the surface of a film is subjected to an alignment treatment or is formed on a substrate (glass or film) to which an alignment film is applied. The selective reflection of the layer is measured to acquire a peak width Hw. Further, a helical pitch p of the same is separately measured. The helical pitch can be measured by performing cross-sectional TEM observation. The birefringence $\Delta n$ of the sample can be acquired by substituting these values in the following expression.

$$\Delta n = Hw/p$$

The term "reflection center wavelength" in the present specification means a wavelength indicating the maximum peak of a reflection spectrum measured from a front direction (actually, in a direction within 5° from the front surface).
Further, in the present specification, in regard to the expression of "the reflection center wavelengths are substantially the same (as each other)," errors which are generally accepted in the related art to which the present invention pertains are definitely considered. In general, in regard to the reflection center wavelength, a difference of approximately ±30 nm is considered to be substantially the same, the difference thereof is preferably within ±20 nm and more preferably within ± 10 nm.

[Light reflection layer and light reflection plate]

The light reflection layer of the present invention includes a first liquid crystal layer obtained by fixing a first curable liquid crystal composition through curing in a state of a cholesteric liquid crystal phase, and the first curable liquid crystal composition contains a polymerizable liquid crystal compound, a fluoroalkyl group-containing alignment control agent, and a hydrophilic group-containing coating property imparting agent. It is preferable that the light reflection layer of the present invention be an infrared light reflection laminate in which the reflection center wavelength becomes the infrared light region.
Further, the light reflection plate of the present invention includes a substrate and the light reflection layer of the present invention, which is arranged on the substrate.
The light reflection plate of the present invention may be used by being integrated with another support member

such as laminated glass. At this time, the substrate may be integrated with another support member together with the light reflection layer or the light reflection layer may be integrated with a support member by peeling the substrate therefrom. That is, the light reflection layer of the present invention may or may not include the substrate, for example, the light reflection layer including no substrate, which is sandwiched between interlayer films for two sheets of laminated glass is included in the present invention.

Hereinafter, preferred embodiments of the present invention will be described. In addition, common points between the light reflection plate of the present invention and the light reflection layer of the present invention will be described in the section of the light reflection plate of the present invention.

<Configurations of light reflection layer and light reflection plate>

Hereinafter, preferred embodiments of the light reflection layer and the light reflection plate of the present invention will be described with reference to drawings.

(Aspect having two layers of light reflection layers)

The light reflection plate illustrated in Fig. 1 includes a light reflection layer X1 (hereinafter, also referred to as a light reflection layer 14a) and a light reflection layer X2 (hereinafter, also referred to as a light reflection layer 14b) obtained by fixing the cholesteric liquid crystal phase on one surface of a substrate 12. However, in the present invention, the order of lamination of light reflection layers 14a and 14b is not particularly limited, and a light reflection plate with the order of lamination other than the above-described order in Fig. 1 is included in the present invention.

Since light reflection layers 14a and 14b are layers obtained by fixing a cholesteric liquid crystal phase, the light reflection layers 14a and 14b exhibit light selective reflectivity which is a property of reflecting light having a specific wavelength based on a helical pitch of the cholesteric liquid crystal phase. According to an embodiment of the present invention, the helical directions of the respective cholesteric liquid crystal phases of the adjacent light reflection layers 14a and 14b are opposite to each other and reflection center wavelengths $\lambda_1$ and $\lambda_1'$ thereof are substantially the same as each other.

(Aspect of having three light reflection layers)

Fig. 2 illustrates a cross-sectional view of a light reflection plate of another embodiment of the present invention. A light reflection plate 10' illustrated in Fig. 2 includes a light reflection layer X1 (light reflection layer 14a), a light reflection layer X2 (light reflection layer 14b), and a light reflection layer X3 (hereinafter, also referred to as a light reflection layer 16) on one surface of the substrate 12. Here, a reflection center wavelength $\lambda_3$ of the light reflection layer 16 is different from the reflection center wavelengths $\lambda_1$ and $\lambda_1'$ of the light reflection layers 14a and 14b. The order of lamination of the light reflection layers 14a, 14b, and 16 is not particularly limited, and a light reflection plate with an order of lamination other than the above-described order in Fig. 2 is included in the present invention, but it is preferable that the light reflection layers 14a and 14b be arranged so as to be adjacent to each other in a case where heat shielding performance is emphasized as the light reflection plate.

(Other embodiments)

The embodiment of the cholesteric liquid crystal layer of the light reflection plate of the present invention is not limited to embodiments illustrated in Figs. 1 and 2. The configuration may be a configuration in which three or more light reflection layers are laminated on one surface of the substrate or a configuration in which two or more light reflection layers are laminated on both surfaces of the substrate.

In addition, the configuration may be a configuration in which only one layer of the light reflection layer is laminated on one surface of the substrate.

In addition, an object of the light reflection plate of the present invention is to widen the bandwidth of the reflection wavelength and may be used by being combined with other light reflection plates. Further, a light reflection layer reflecting light having a predetermined wavelength according to a principle other than the selective reflection characteristic of the cholesteric liquid crystal phase may be included. As members which can be combined, a composite film and respective layers constituting the composite film disclosed in JP-T-4-504555 and a multilayer laminate disclosed in JP-T 2008-545556 are exemplified.

<Materials of respective layers>

Hereinafter, preferred examples of materials or the like used for manufacturing the light reflection plate of the

present invention will be described in detail.

1. Material for forming light reflection layer

In the light reflection plate of the present invention, a curable liquid crystal composition is used for forming respective light reflection layers. A preferred example of the curable liquid crystal composition is an embodiment containing a polymerizable liquid crystal compound, a fluoroalkyl group-containing alignment control agent, a hydrophilic group-containing coating property imparting agent, and an embodiment containing an optically-active compound (chiral agent) and a polymerizable initiator is more preferable. Two or more kinds of each component may be included. For example, use of a combination of a polymerizable liquid crystal compound and a non-polymerizable liquid crystal compound is possible. In addition, use of a combination of a low molecular liquid crystal compound and a high molecular liquid crystal compound is possible. Further, at least one kind selected from various additives of an unevenness preventing agent, a cissing preventing agent, a polymerizable monomer, and the like may be contained for improving uniformity of alignment, suitability of coating, and film strength. In addition, a polymerizable inhibitor, an antioxidant, a UV absorbent, a light stabilizer, a coloring material, a metal oxide fine particle, or the like can be added to the liquid crystal composition in the range of not deteriorating optical performance as needed.

(1) Polymerizable liquid crystal compound

The polymerizable liquid crystal compound that can be used for the present invention may be a so-called rod-shaped liquid crystal compound or a disk-shaped liquid crystal compound, which is not particularly limited. Among these, a rod-shaped liquid crystal compound is preferably used.

A discotic liquid crystalline molecule is described in various literature (C. Destrade et al., Mol crysr. Liq. Cryst., vol. 71, page 111 (1981); Chemical Quarterly Review, No. 22, edited by the Chemical Society of Japan, Chemistry of Liquid Crystal, Chapter 5, Section 2 of Chapter 10 (1994); B. Kohne et al., Angew. Chem. Soc. Chem. Comm., page 1794 (1985); and J. Zhang et al. , J. Am. Chem. Soc., vol. 116, page 2655 (1944)). Polymerization of the discotic liquid crystalline molecules is described in JP-A-8-27284. In order to fix the discotic liquid crystalline molecules through polymerization, it is necessary to link a polymerizable group as a substituent to a disk-shaped core of the discotic liquid crystalline molecule. However, when a polymerizable group is directly linked to the disk-shaped core, it is difficult to maintain the alignment state in the polymerization reaction. Therefore, a bonding group is introduced between the disk-shaped core and the polymerizable group. Accordingly, a discotic liquid crystalline molecule having a polymerizable group is preferably a compound represented by the following formula.

$D(-L-Q)_d$

In the formula above, D represents a disk-shaped core, L represents a divalent bonding group, Q represents a polymerizable group, and d represents an integer of 4 to 12. Specific examples of the disk-shaped core (D) of the formula above are shown below.

In the specific examples described below, LQ (or QL) represents a combination of a divalent bonding group (L) and a polymerizable group (Q). In the specific example below, triphenylene (D4) is particularly preferable.

[Chem. 1]

(D1)

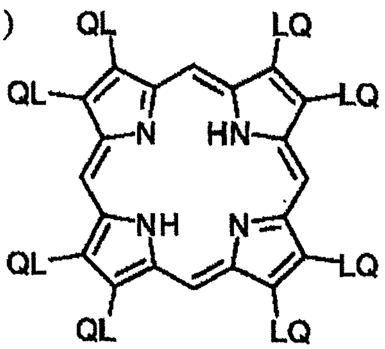

(D2)

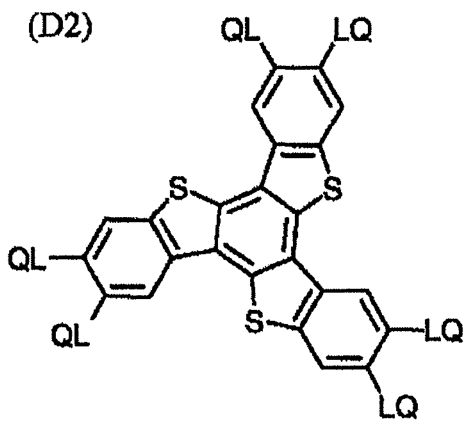

(D3)

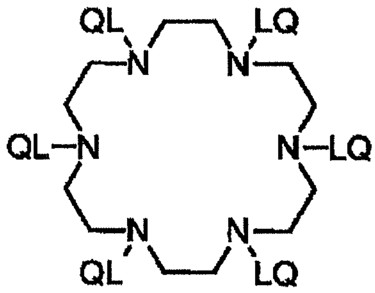

(D4)

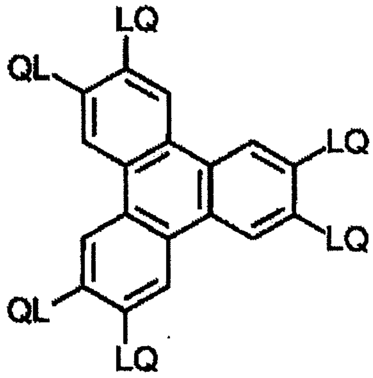

(D5)

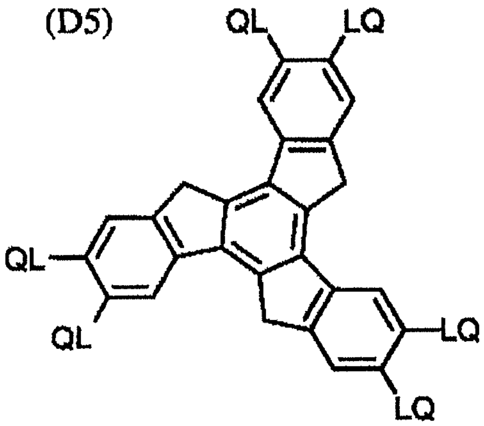

(D6)

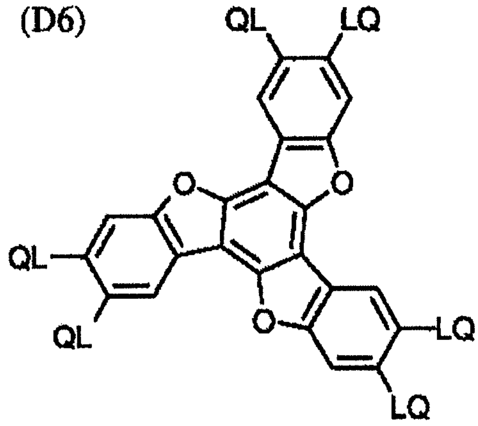

[Chem. 2]

(D7)

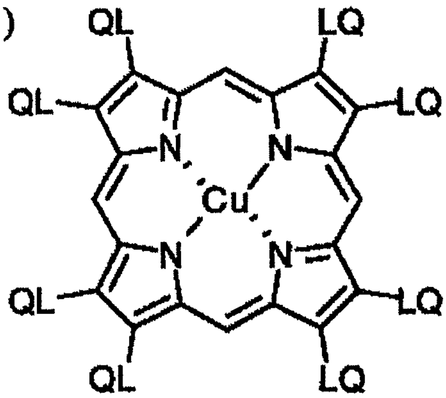

(D8)

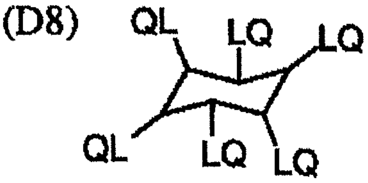

(D9)

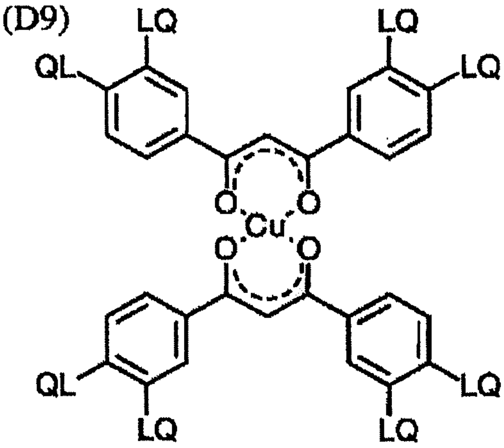

(D10)

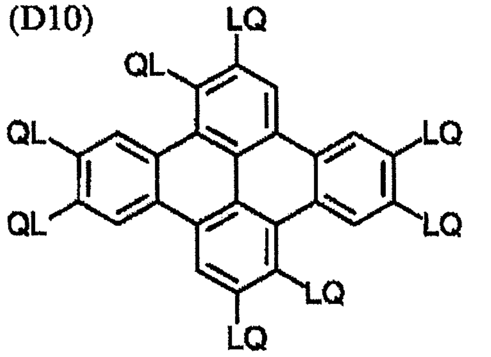

(D11)

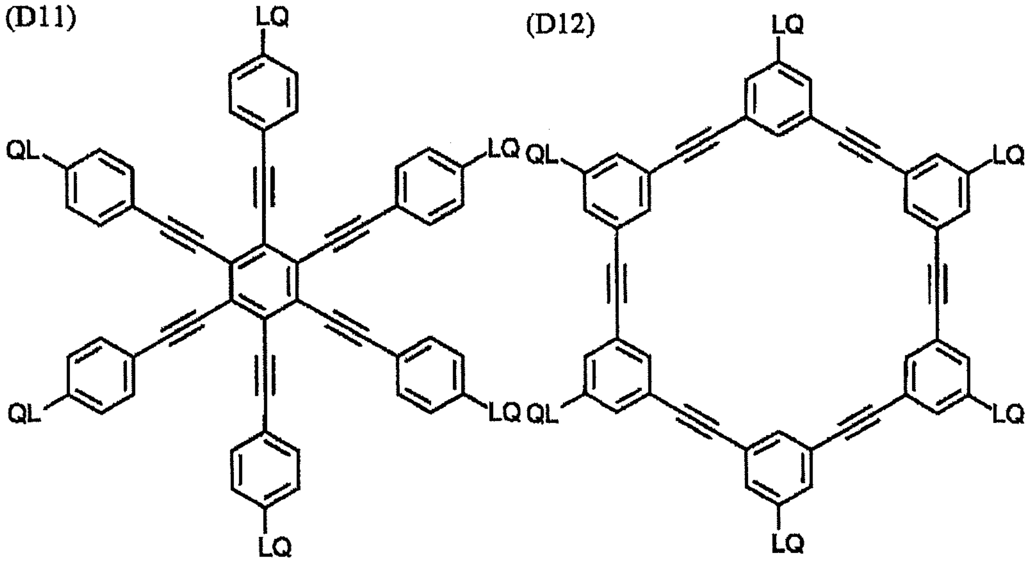

(D12)

[Chem. 3]

(D13)

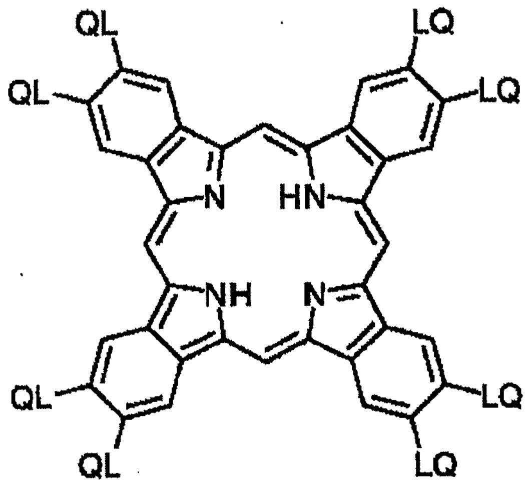

(D14)

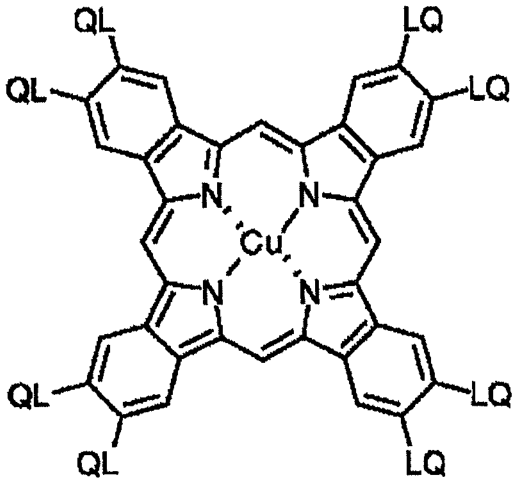

(D15)

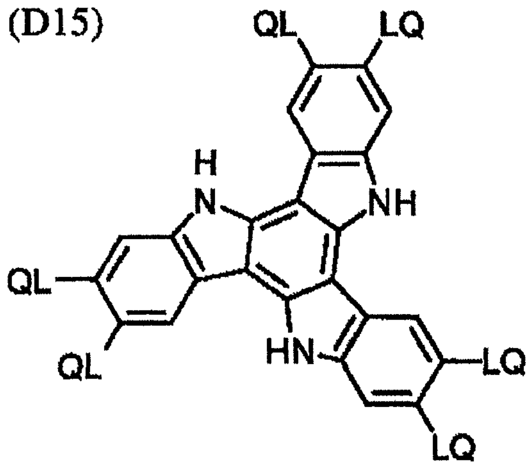

Details or a preferred range of a bonding group L or a polymerizable group Q can be referenced to paragraphs [0161] to [0171] in JP-A-2002-129162.

Examples of the rod-shaped liquid crystal molecules, which are preferably used, include azomethines, azoxys, cyanobiphenyls, cyanophenyl esters, benzoic acid esters, cyclohexane carboxylic acid phenyl esters, cyanophenyl cyclohexanes, cyano-substituted phenyl pyrimidines, alkoxy-substituted phenyl pyrimidines, phenyl dioxanes, tolanes, and alkenyl cyclohexyl benzonitriles.

The birefringence of the rod-shaped liquid crystal molecule is preferably in the range of 0.001 to 0.7. Specific examples of the polymerizable group can be referenced to the paragraph [0169] in JP-A-2002-129162. It is preferable that the rod-shaped liquid crystal molecule have a molecular structure which is substantially symmetric with respect to the short axis direction. Accordingly, it is preferable to include polymerizable groups at both ends of the rod-shaped molecular structure.

The compound represented by the following general formula (Ia) is preferable as the polymerizable liquid crystal molecule.

General Formula (Ia) $Z^1-Y^1-A^1-Y^3-M^1-Y^4-A^2-Y^2-Z^2$

(In the general formula (Ia), $Z^1$ and $Z^2$ each independently represent a polymerizable group, $A^1$ and $A^2$ each independently represent a spacer (here, the spacer represents an alkylene group or a bonding group to which a plurality of alkylene groups are linked through -O- and -CO-) having an atom-bonding chain length of 1 to 30, $M^1$ represents $(-T^1-Y^8)_n-T^2-$, n represents a natural number, a plurality of $(-T^1-Y^8)$'s may be the same as or different from each other in a case where n is 2 or higher, and $T^1$ and $T^2$ each independently represent a saturated or unsaturated hydrocarbon ring or a saturated or unsaturated heterocyclic ring (here, the hydrocarbon ring and the heterocyclic ring may have an alkyl group or an alkoxy group), and $Y^1$, $Y^2$, $Y^3$, $Y^4$, and $Y^8$ each independently represent a single bond, -O-, -CO-, -O-CO-, -CO-O-, or -O-CO-O-).

($Z^1$ and $Z^2$)

In the general formula (Ia), $Z^1$ and $Z^2$ each independently represent a polymerizable group.

In relation to the crosslinking components of $Y^1$ to $Y^8$, the polymerizable groups of $Z^1$ to $Z^2$ correspond to, for example, the following:

[Chem. 4]

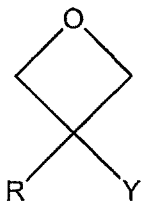

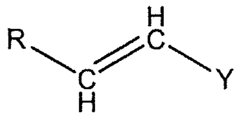

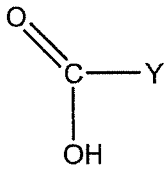

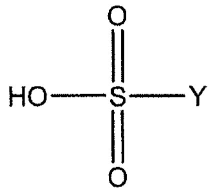

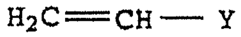 , 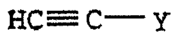 , 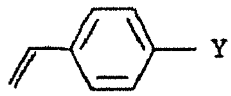 , 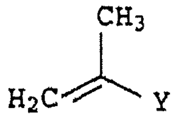 ,

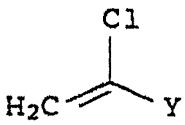 , 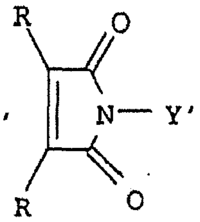 , 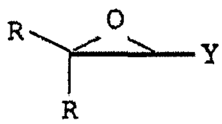 , 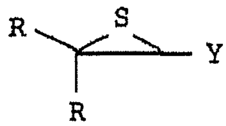 ,

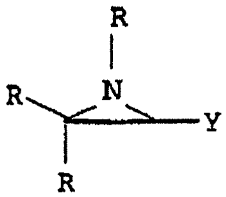 , 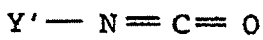 , 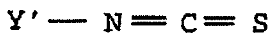 and

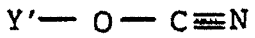 ,

[In the formulae, Y represents the definition of the crosslinking groups $Y^1$ to $Y^8$, or that is, a chemical single bond, oxygen, sulfur, -O-CO-, -CO-O-, -O-CO-O-, -CO-NR-, -NR-CO-, -O-CO-NR-, -NR-CO-O- or -NR-CO-NR-; R represents hydrogen or $C_1$-$C_4$-alkyl, or that is, methyl, ethyl, n-propyl, i-propyl, n-butyl, i-butyl, sec-butyl or t-butyl; and Y' represents a chemical single bond (in the following, the polymerizable groups of $Z^1$ to $Z^4$ are represented as polymerizable units and as Z-Y and/or Z-Y' in relation to the crosslinking components of $Y^1$ to $Y^8$)].

Of those polymerizable units, the cyanate can be spontaneously trimerized into a cyanurate. A maleinimide group is especially suitable for radical copolymerization with the liquid crystal compound of the formula Ia and/or Ib having a styryl group as the polymerizable group therein.

The compound of the formula Ia and/or Ib having any of an epoxide group, an oxetane group, a carboxyl group, a sulfonic acid group, a thiirane group, an aziridine group, an isocyanate group and an isothiocyanate group needs any other compound having a complementary reactive unit for polymerization. In other words, for example, a suitable isocyanate may polymerize with an alcohol to obtain a urethane, or may polymerize with an amine to obtain a urea derivative. The same may apply to the corresponding thiirane and aziridine.

The complementary reactive unit may be contained in the liquid crystal compound that is composed of a liquid crystal compound similar to the formula Ia. However, in place of the group $Z^1$-$Y^1$- and $Z^2$-$Y^2$-, these compounds contain a hydroxyl group, a mercapto group or an NHR group, in which the last R means hydrogen or $C_1$-$C_4$-alkyl. Further, the complementary reactive unit may also be contained in the auxiliary compound that is brought in the liquid crystal substance mixture.

In the above-described general formula (Ia), $A^1$ and $A^2$ each independently represent a spacer having an atom-bonding chain length of 1 to 30 (here, the spacer represents an alkylene group, or a bonding group of a plurality of alkylene groups bonding to each other via -O- or -CO-).

Preferably, $A^1$ and $A^2$ each are independently a spacer having an atom-bonding chain length of 1 to 12. More preferably, $A^1$ and $A^2$ each are independently a spacer having 1 to 12 carbon atoms (here, the spacer is an unsubstituted alkylene group), and particularly preferably a spacer having 2 to 8 carbon atoms (here, the spacer is an unsubstituted alkylene group).

The spacer of $A^1$ and $A^2$ generally has 1 to 30 carbon atoms but preferably 1 to 12 carbon atoms, and is mainly composed of a linear aliphatic group. Further, the carbon chain may be substituted with one or more methyl, fluorine, chlorine or bromine and/or may be interrupted oxygen in an ether functional group or sulfur in a thioether functional group, or by a non-neighboring imino group or a $C_1$-$C_4$-alkylimino group. Methyl, ethyl, n-propyl, i-propyl, n-butyl, i-butyl, sec-butyl and t-butyl correspond to the $C_1$-$C_4$-alky group for the latter.

Typical spacers include, for example:

[Chem. 5]

$-(CH_2)_p-$ , $-(CH_2CH_2O)_m-CH_2CH_2-$ , $-(CH_2CH_2S)_m-CH_2CH_2-$ ,

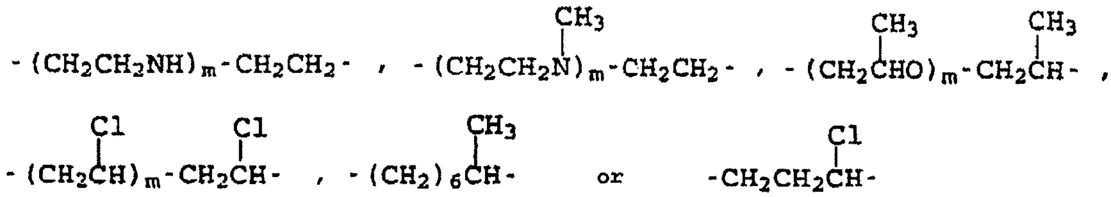

[In the formulae, p represents an integer of 1 to 30, preferably 1, 2, 3, 4, 5, 6, 7, 8, 9, 10, 11 or 12; andm represents an integer of 1 to 14, preferably 1, 2 or 3.]

In the general formula (Ia), $M^1$ represents $(-T^1-Y^8)_n-T^2-$.

n represents a natural number; when n is 2 or more, then a plurality of $(-T^1-Y^8)$'s may be the same as or different from each other.

n in $M^1$ in the above general formula (Ia) is preferably 1 to 5, more preferably 2 to 5, still more preferably 2 to 4, particularly preferably 3 or 4, and more particularly preferably 3.

The group of $T^1$ and $T^2$ may have a substituent within a possible range, and for example, the group may be substituted with the same or different, three or less substituents selected from a group containing $C_1$-$C_{20}$-alkyl, $C_1$-$C_{20}$-alkoxy, $C_1$-$C_{20}$-alkoxycarbonyl, $C_1$-$C_{20}$-monoalkylaminocarbonyl, $C_1$-$C_{20}$-alkylcarbonyl, $C_1$-$C_{20}$-alkylaminocarbonyloxy, $C_1$-$C_{20}$-alkylcarbonylamino, formyl, halogen, cyano, hydroxy or nitro. However, preferably, the substituent of $T^1$ and/or $T^2$ is mono-substituted.

In particular, the group of $T^1$ and $T^2$ corresponds to the following:

[Chem. 6]

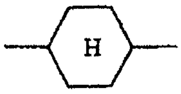 , 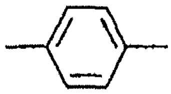 , 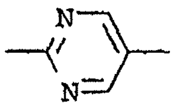 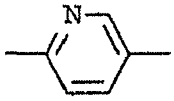 ,

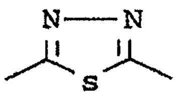 , 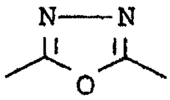 , 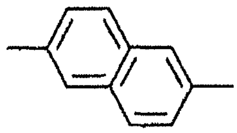 ,

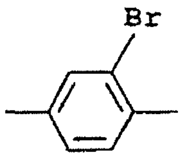 , 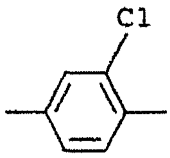 , 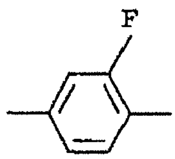 , 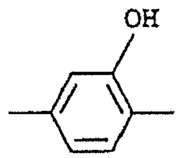 ,

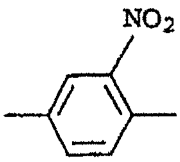 , 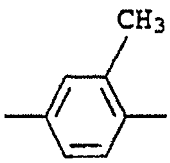 , 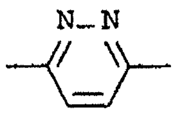 and 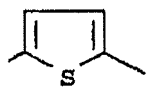 .

Especially preferably, the mesogen group of $M^1$ and $M^2$ each independently represent the following formula:

[Chem. 7]

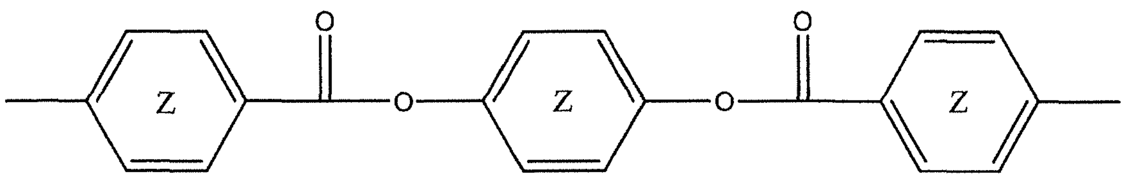

or

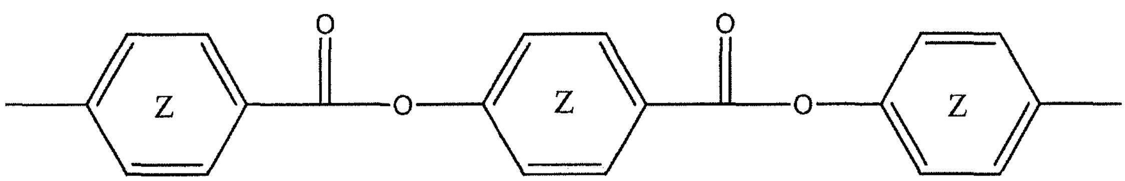

In the above, the respective ring Z' s independently may have the same or different, three or less substituents selected from a group containing $C_1$-$C_{20}$-alkyl, $C_1$-$C_{20}$-alkoxy, $C_1$-$C_{20}$-alkoxycarbonyl, $C_1$-$C_{20}$-monoalkylaminocarbonyl, $C_1$-$C_{20}$-alkylcarbonyl, $C_1$-$C_{20}$-alkylcarbonyloxy, $C_1$-$C_{20}$-alkylcarbonylamino, formyl, halogen, cyano, hydroxy or nitro.

Advantageous substituents for the aromatic ring Z include fluorine, chlorine, bromine, cyano, formyl, hydroxy, a short-chain aliphatic group (preferably having 1 to 4 carbon atoms, for example, methyl, ethyl, n-propyl, i-propyl, n-butyl, i-butyl, or t-butyl), as well as an alkoxy group, an alkoxycarbonyl group, an alkylcarbonyl group, an alkylcarbonyloxy group, an alkylcarbonylamino group and a monoalkylaminocabonyl group containing such an alkyl group.

An especially advantageous benzene ring Z for $M^1$ may preferably have the following substituent pattern:

[Chem. 8]

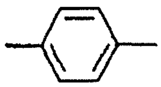 , 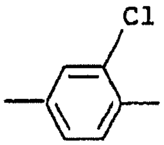 , 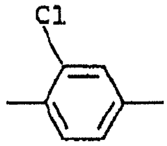 , 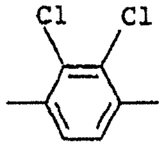 , 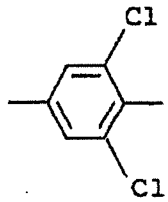 ,

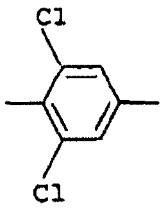 or 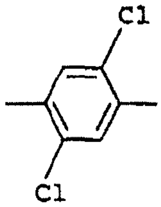 ,

In place of Cl, the above may also be similarly substituted with any of F, Br, an alkyl group (preferably an alkyl group having 1 to 4 carbon atoms and more preferably $CH_3$) , an alkoxy group (preferably an alkoxy group having 1 to 4 carbon atoms and more preferably $OCH_3$), CHO, $COCH_3$, $OCOCH_3$ or CN. At this time, the substituents can be present by a form of a mixture. Also preferred is the following structure:

[Chem. 9]

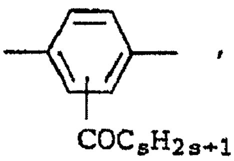 , 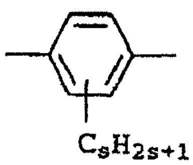 or 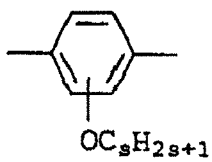

In the above, s represents an integer of 2 to 20, and preferably 8, 9, 10, 11, 12, 13, 14 or 15.

More advantageous substituents for the benzene ring Z for $M^1$ include the following:

[Chem. 10]

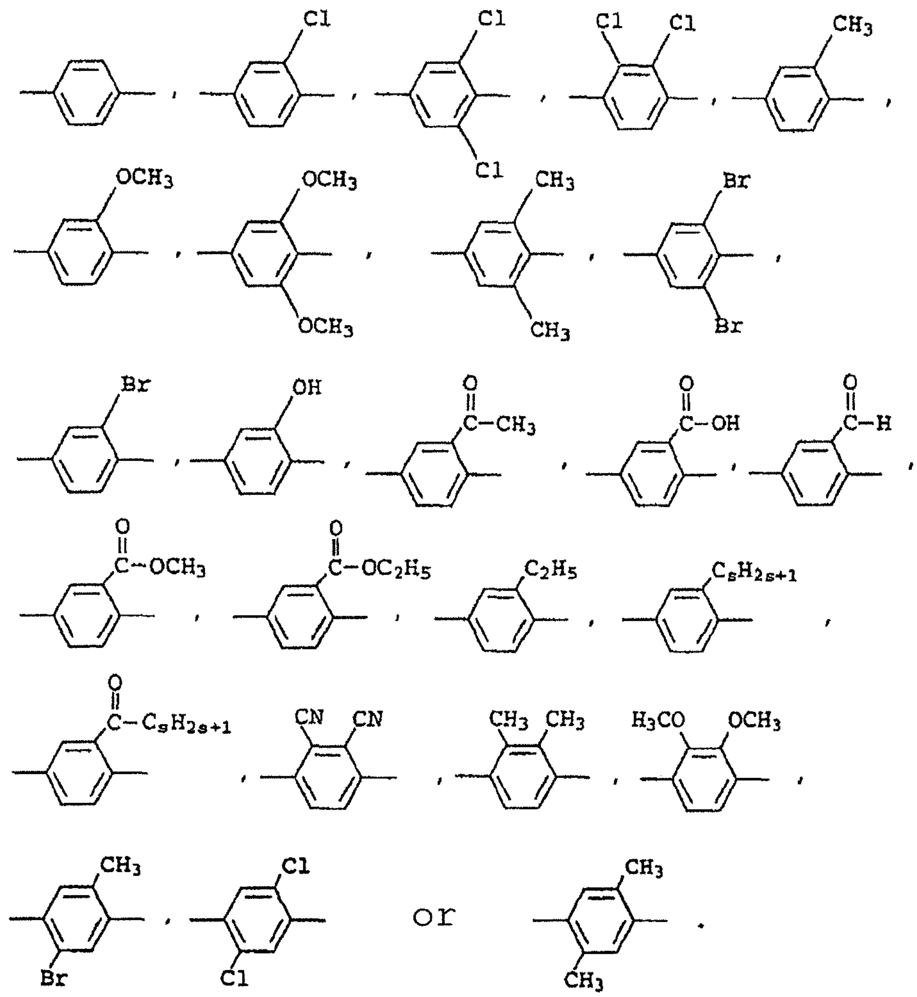

or

Preferably, the compound represented by the above general formula (Ia) is a compound in which at least one hydrocarbon ring or heterocyclic ring of the hydrocarbon ring and the heterocyclic ring represented by $T^1$ and $T^2$ has an alkyl group or an alkoxy group.

More preferably above all, the compound represented by the above general formula (Ia) is a compound in which one hydrocarbon ring or heterocyclic ring of the hydrocarbon ring and the heterocyclic ring represented by $T^1$ and $T^2$ has an alkyl group or an alkoxy group. Still more preferred is a compound in which one hydrocarbon ring has an alkyl group (preferably an alkyl group having 1 to 4 carbon atoms and more preferably $CH_3$) or an alkoxy group (preferably, an alkoxy group having 1 to 4 carbon atoms and more preferably $OCH_3$) ; and particularly preferred is a compound in which one hydrocarbon ring or heterocyclic ring has an alkyl group.

In the case where n in $M^1$ in the compound represented by the general formula (Ia) is 3, preferably, the central one hydrocarbon ring or heterocyclic ring of the hydrocarbon rings and the heterocyclic rings has an alkyl group or an alkoxy group, and more preferred ranges of the case are the same as described above.

($Y^1$, $Y^2$, $Y^3$, $Y^4$, and $Y^8$)

In the above general formula (Ia), $Y^1$, $Y^2$, $Y^3$, $Y^4$, and $Y^8$ each independently represent a single bond, -O-, -CO-, -O-CO-, -CO-O- or -O-CO-O-.

Preferably, in the compound of the formula (Ia), $Y^1$ to $Y^4$, and $Y^8$ each independently represent oxygen, -O-CO-, -CO-O-or -O-CO-O-.

Preferably, the liquid crystal substance mixture and its advantageous embodiments include compounds of the formula (Ia) where the polymerizable units of $Z^1$-$Y^1$- and $Z^2$-$Y^2$- are selected from a group containing methacryloyloxy, acryloyloxy and vinyloxy.

Hereinafter, specific examples of the compound represented by the above general formula (Ia) is shown below. However, the compound represented by the above general formula (Ia) that can be employable in the present invention should not be limitatively interpreted by the following specific examples.

[Chem. 11]

Compounds represented by General Formula (Ia)

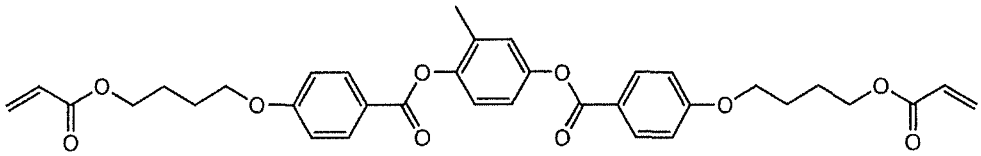

[Chem. 12]

IV-1

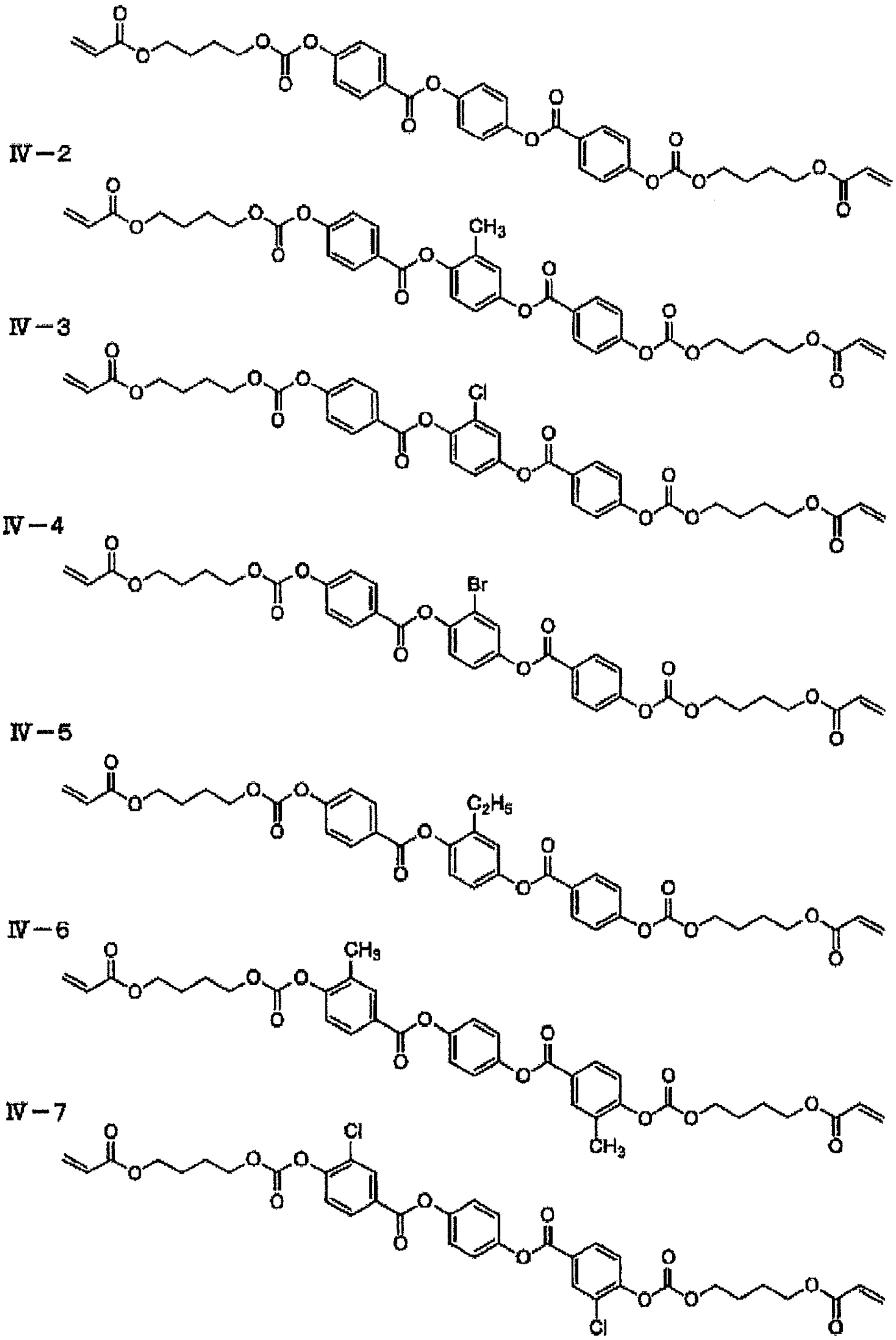

IV-2

IV-3

IV-4

IV-5

IV-6

IV-7

[Chem. 13]

IV-8

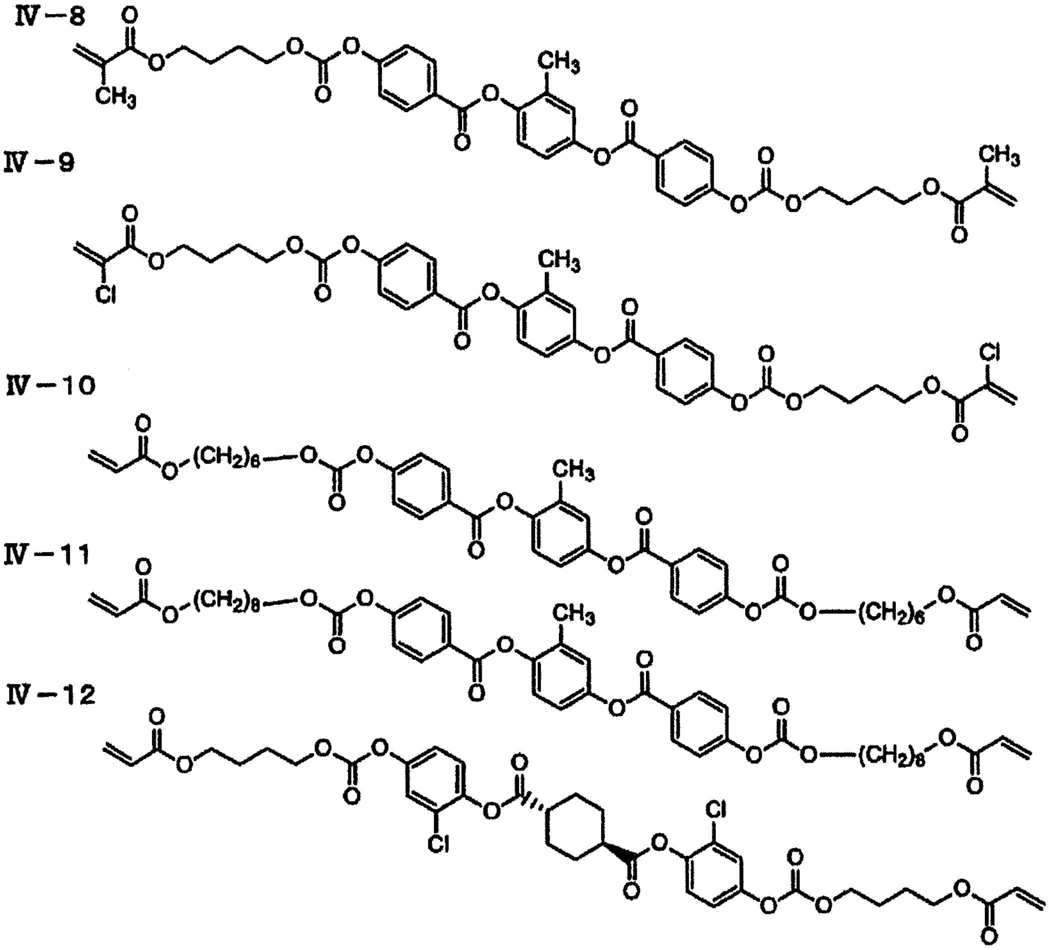

IV-9

IV-10

IV-11

IV-12

[Chem. 14]

IV-13

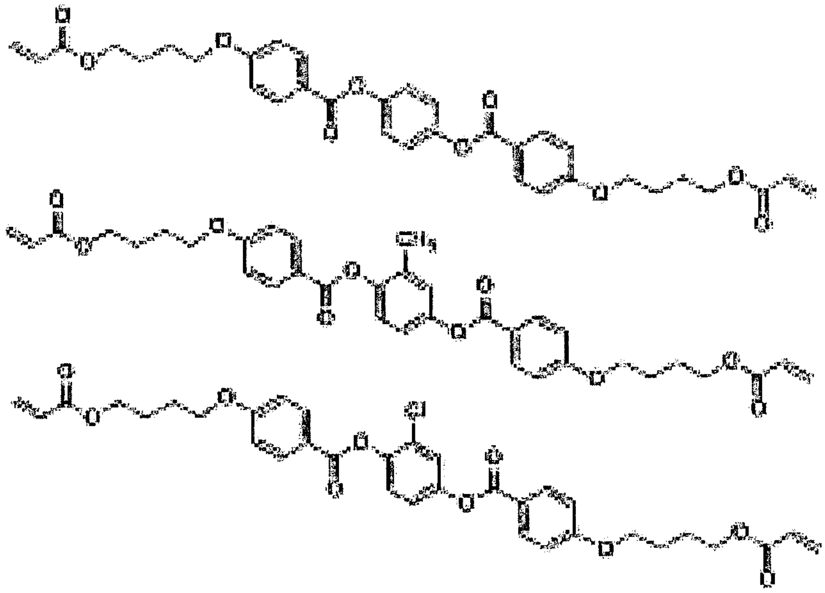

IV-14

IV-15

IV-16

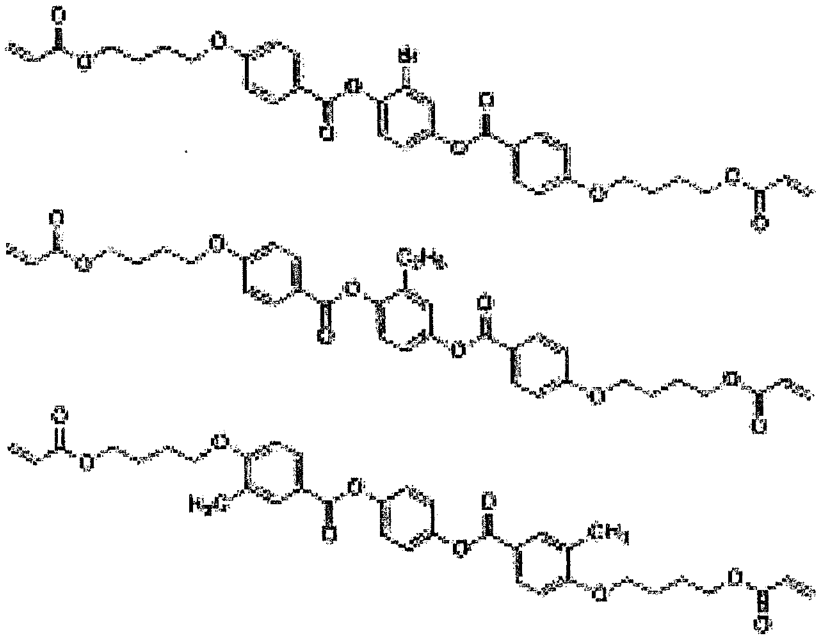

IV-17

IV-18

IV-19

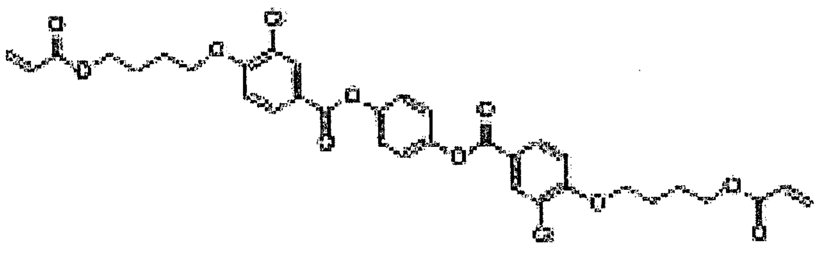

[Chem. 15]

IV-20

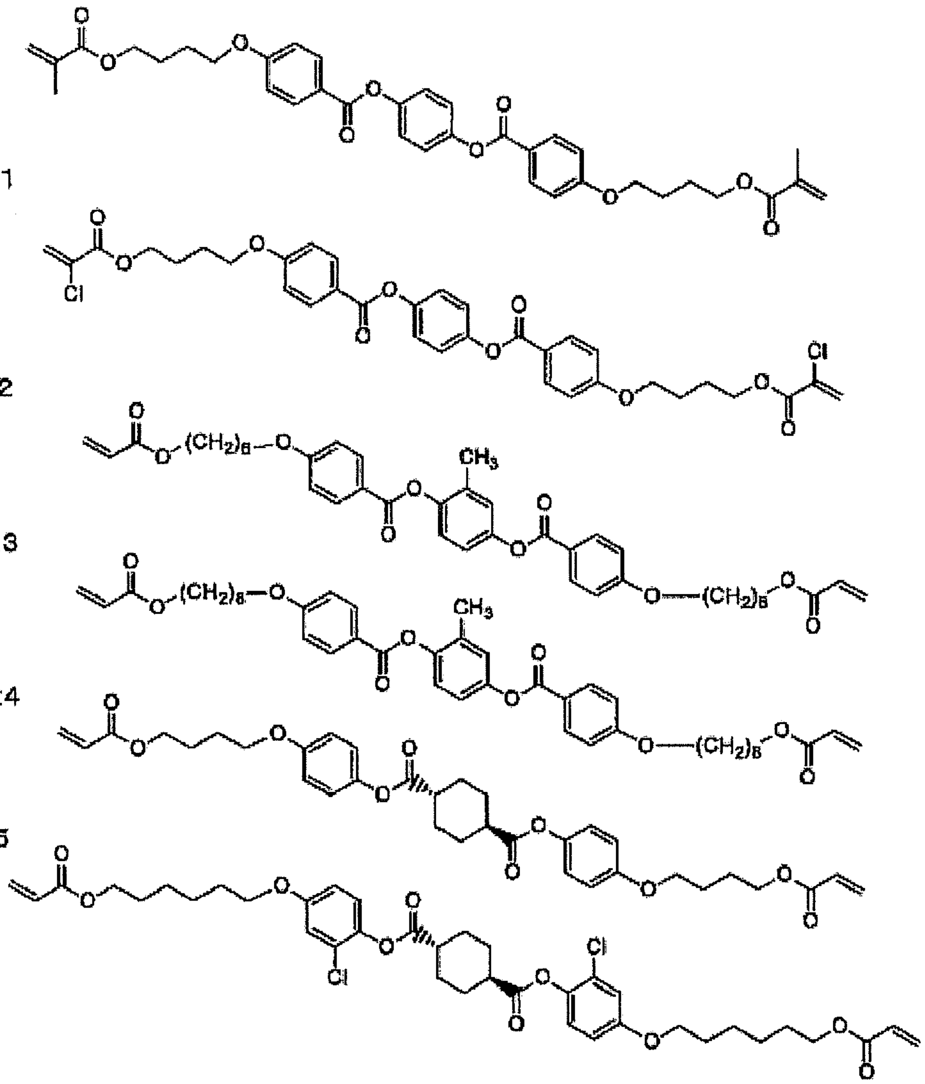

IV-21

IV-22

IV-23

IV-24

IV-25

(2) Optically-active compound (chiral agent)

It is desirable that the liquid crystal composition exhibit a cholesteric liquid crystal phase, and for this, the composition preferably contains an optically-active compound. However, when the above-described rod-shaped liquid crystal compound is a molecule having asymmetric carbon atoms, then the mixture could stably form a cholesteric liquid crystal phase even though an optically-active compound is not added thereto. The optically-active compound can be selected from various types of known chiral agents (for example, described in Liquid crystal Device Handbook, Chap. 3, Sec. 4-3, TN, STN Chiral Agents, p. 199, edited by the Japan Society for the Promotion of Science, No. 142 Committee, 1989). The optically-active compound generally contains an asymmetric carbon, but an axial asymmetric compound or a planar asymmetric compound which does not have any asymmetric carbon may also be employable here as a chiral agent. Examples of the axial asymmetric compound or the planar asymmetric compound include binaphthyl, helicene, paracyclophane and their derivatives. The optically-active compound (chiral agent) may have a polymerizable group. In a case where the optically-active compound has a polymerizable group and where the rod-shaped liquid crystal compound to be used here along with the optically-active compound also has a polymerizable group, the polymerization reaction of the polymerizable optically-active compound and the polymerizable rod-shaped compound can form a polymer having a recurring unit derived from the rod-shaped liquid crystal compound and the recurring unit derived from the optically-active compound. In this embodiment, it is desirable that the polymerizable group which the polymerizable optically-active compound has is the same type of the polymerizable group which the polymerizable rod-shaped liquid crystal compound has. Accordingly, it is preferable that the polymerizable group of the optically-active compound is also an

unsaturated polymerizable group, an epoxy group, or an aziridinyl group, more preferably an unsaturated polymerizable group, and particularly preferably an ethylenic unsaturated polymerizable group.

The optically-active compound may be a liquid crystal compound.

Preferably, the amount of the optically-active compound in the liquid crystal composition is 1% by mole to 30% by mole with respect to the liquid crystal compound to be used together. It is preferable that the amount of the optically-active compound to be used be small so as not to be capable of influencing the liquid crystallinity of a compound. Consequently, the optically-active compound that is used here as a chiral agent is preferably one having high torsion strength in order to attain the intended helical pitch torsion alignment even though its amount is small. As the chiral agent having such high torsion strength, for example, there are described the chiral agents described in JP-A 2003-287623, and these are favorably used in the present invention.

(3) Polymerization initiator

Preferably, the polymerizable liquid crystal composition used for forming the light reflection layer contains a polymerization initiator. In the present invention, since it is preferable that the curing reaction be promoted through irradiation with UV light, the polymerization initiator to be used is preferably a photo-polymerization initiator capable of initiating polymerization reaction through irradiation with UV light. Examples of the photo-polymerization initiator include $\alpha$-carbonyl compounds (described in each specification of USP 2367661 and 2367670), acyloin ethers (described in the specification of USP 2448828), $\alpha$-hydrocarbon-substituted aromatic acyloin compounds (described in the specification of USP 2722512), polynuclear quinone compounds (described in each specification of USP 3046127 and 2951758), combination of triarylimidazole dimer and p-aminophenylketone (described in specification of USP 3549367), acridine and phenazine compounds (described in JP-A-60-105667 and USP 4239850), and oxadiazole compounds (described in USP 4212970).

The amount of the photo-polymerization initiator to be used is preferably 0.1% by mass to 20% by mass of the liquid crystal composition (solid content in case where the composition is a coating liquid) and more preferably 1% by mass to 8% by mass.

(4) Fluoroalkyl group-containing alignment control agent

It is preferable that the fluoroalkyl group-containing alignment control agent of the present invention be represented by the following general formula (I). The compound of the general formula (I) includes a divalent group in the center thereof and a fluoroalkyl group at the terminal thereof. The compound including a fluoroalkyl group at the terminal thereof is effective as an alignment accelerator, and an effect of suppressing the haze can be obtained because the solubility in the liquid crystal composition is improved by adjusting a linking portion centering on the divalent group. Further, the effect can be exerted by polymerization, so that the fluoroalkyl group-containing alignment control agent is useful for various applications such as an optical member or the like. In addition, it is preferable that the fluoroalkyl group-containing alignment control agent of the present invention be a perfluoroalkyl group-containing alignment control agent.

General Formula (I) $$\mathbf{(Hb\text{-}Sp^1\text{-}L^1\text{-}Sp^2\text{-}L^2)_m\text{-}A^1\text{-}L^3\text{-}T\text{-}L^4\text{-}A^2\text{-}(L^5\text{-}Sp^3\text{-}L^6\text{-}Sp^4\text{-}Hb)_n}$$

In the general formula (I), $L^1$, $L^2$, $L^3$, $L^4$, $L^5$ and $L^6$ each independently represent a single bond, -O-, -S-, -CO-, -COO-, -OCO-, -COS-, -SCO-, -NRCO-, or -CONR- (R in the general formula (I) represents a hydrogen atom or an alkyl group having 1 to 6 carbon atoms). Since -NRCO- and -CONR- have an effect of reducing the solubility of the compound and tend to increase the haze in film formation, preferred are -O-, -S-, -CO-, -COO-, -OCO-, -COS- and -SCO-. In terms of the stability of the compound, more preferred are -O-, -CO-, -COO- and -OCO-. The alkyl group which R may represent may be linear or branched. The carbon number of the group is preferably 1 to 3; and a methyl group, an ethyl group and an n-propyl group can be exemplified.

$Sp^1$, $Sp^2$, $Sp^3$ and $Sp^4$ each independently represent a single bond or an alkylene group having 1 to 10 carbon atoms, preferably a single bond or an alkylene group having 1 to 7 carbon atoms, and more preferably a single bond or an alkylene group having 1 to 4 carbon atoms. However, the hydrogen atom of the alkylene group may be substituted with a fluorine atom. The alkylene group may be branched or may not be branched, but is preferably a non-branched linear alkylene group. In terms of synthesis, it is preferable that $Sp^1$ and $Sp^4$ be the same as each other and $Sp^2$ and $Sp^3$ be the same as each other.

$A^1$ and $A^2$ each represent a trivalent or tetravalent aromatic hydrocarbon. Preferably, the carbon number of the trivalent or tetravalent aromatic hydrocarbon group is preferably 6 to 22, more preferably 6 to 14, even more preferably 6 to 10, and still more preferably 6. The trivalent or tetravalent aromatic hydrocarbon group represented by $A^1$ and $A^2$ may have a substituent. Examples of the substituent include an alkyl group having 1 to 8 carbon atoms, an alkoxy group, a halogen atom, a cyano group and an ester group. For the description and the preferred ranges of these groups, the

corresponding description of T described below can be referenced. The substituent for the trivalent or tetravalent aromatic hydrocarbon group represented by $A^1$ and $A^2$ includes, for example, a methyl group, an ethyl group, a methoxy group, an ethoxy group, a bromine atom, a chlorine atom, and a cyano group. A molecule having many fluoroalkyl moieties therein can well align liquid crystal molecules even though the amount added is small, and therefore addition of such a molecule could bring about haze reduction. Preferably, therefore, $A^1$ and $A^2$ each are a tetravalent group so that the molecule could have a majority of perfluoroalkyl groups therein. In terms of synthesis, preferably, $A^1$ and $A^2$ are the same as each other.

T represents a divalent group represented by any of the following, or represents a divalent aromatic heterocyclic group.

[Chem. 17]

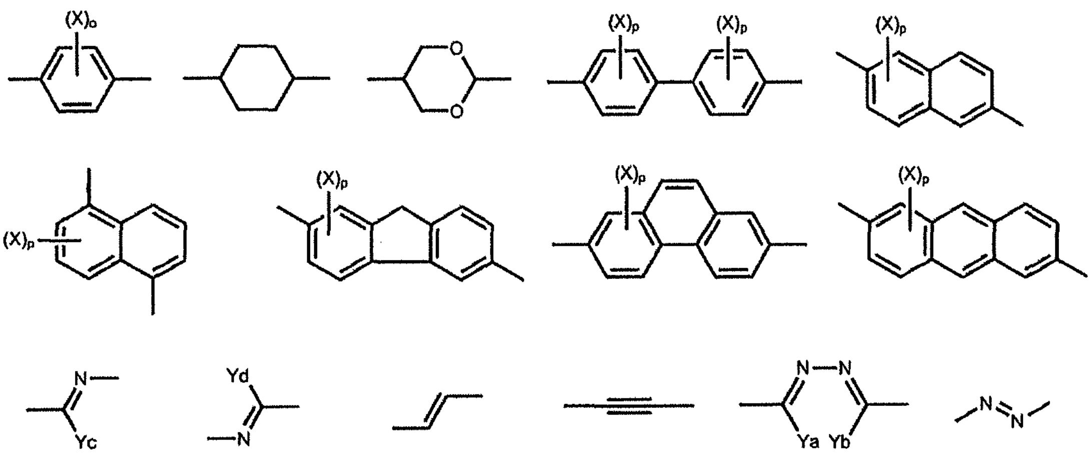

(X represents an alkyl group having 1 to 8 carbon atoms, an alkoxy group, a halogen atom, a cyano group or an ester group; Ya, Yb, Yc and Yd each independently represent a hydrogen atom or an alkyl group having 1 to 4 carbon atoms) More preferably, T represents:

[Chem. 18]

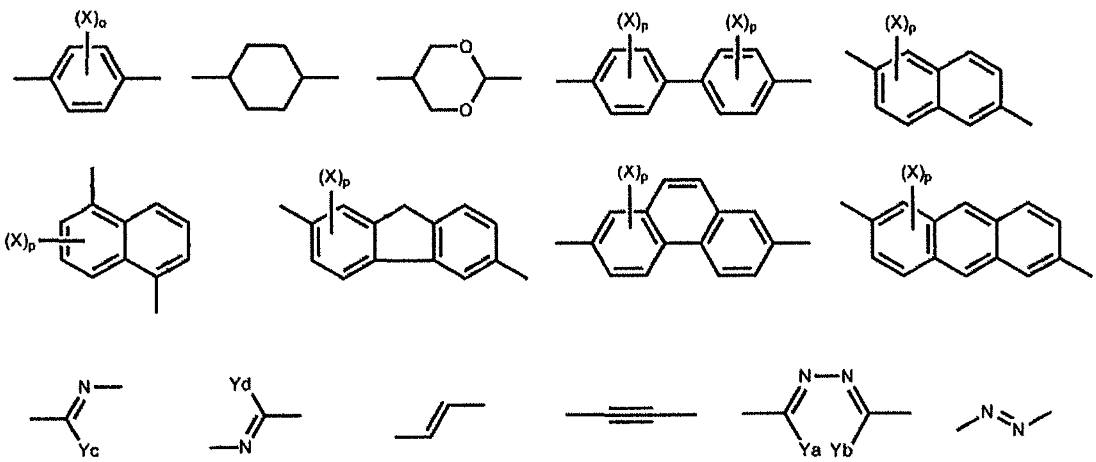

Even more preferably, T represents:

[Chem. 19]

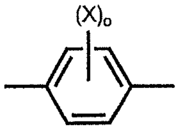
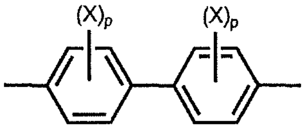
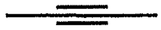
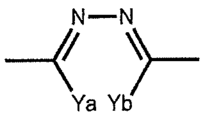
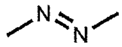

Still more preferably, T represents:

[Chem. 20]

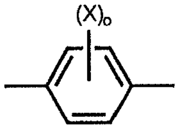

The carbon number of the alkyl group which is X is 1 to 8, preferably 1 to 5, and more preferably 1 to 3. The alkyl group may be linear, branched or cyclic, but is preferably linear or branched. Preferred examples of the alkyl group include a methyl group, an ethyl group, an n-propyl group, and an isopropyl group. Of those, preferred is a methyl group. In regard to the alkyl moiety of the alkoxy group which X may represent, the description and the preferred range of the alkyl group which X may represent can be referenced. The halogen atom which X may represent includes a fluorine atom, a chlorine atom, a bromine atom, and an iodine atom. Preferred are a chlorine atom and a bromine atom. As the ester group which X may represent, there is exemplified a group represented by R' COO-. R' may be an alkyl group having 1 to 8 carbon atoms. In regard to the description and the preferred range of the alkyl group which R' may represent, the description and the preferred range of the alkyl group which X may represent can be referenced. Specific examples of the ester include $CH_3COO$- and $C_2H_5COO$-. The alkyl group having 1 to 4 carbon atoms, which Ya, Yb, Yc and Yd each may represent, may be linear or branched. For example, there are exemplified a methyl group, an ethyl group, an n-propyl group, and an isopropyl group.

Preferably, the divalent aromatic heterocyclic group has a 5-membered, 6-membered or 7-membered heterocyclic ring. More preferred is a 5-membered or 6-membered ring; and most preferred is a 6-membered ring. The heterocyclic atom to constitute the heterocyclic ring is preferably a nitrogen atom, an oxygen atom, and a sulfur atom. The heterocyclic ring is preferably an aromatic heterocyclic ring. The aromatic heterocyclic ring is generally an unsaturated heterocyclic ring. More preferred is an unsaturated heterocyclic ring having a largest number of double bonds. Examples of the heterocyclic ring include a furan ring, a thiophene ring, a pyrrole ring, a pyrroline ring, a pyrrolidine ring, an oxazole ring, an isoxazole ring, a thiazole ring, an isothiazole ring, an imidazole ring, an imidazoline ring, an imidazolidine ring, a pyrazole ring, a pyrazoline ring, a pyrazolidine ring, a triazole ring, a furazane ring, a tetrazole ring, a pyran ring, a thiine ring, a pyridine ring, a piperidine ring, an oxazine ring, a morpholine ring, a thiazine ring, a pyridazine ring, a pyrimidine ring, a pyrazine ring, a piperazine ring and a triazine ring. The divalent heterocyclic group may have a substituent. In regard to the description and the preferred range of the substituent, the description relating to the substituent which the trivalent or tetravalent aromatic hydrocarbon for the above $A^1$ and $A^2$ may have can be referenced.

Hb represents a perfluoroalkyl group having 2 to 30 carbon atoms (further, a structure in which $-CF_2-H$ is bonded to the terminal of a perfluoroalkylene group is preferable in a fluoroalkyl group), preferably a perfluoroalkyl group having 2 to 30 carbon atoms, more preferably a perfluoroalkyl group having 3 to 20 carbon atoms, and still more preferably a perfluoroalkyl group having 3 to 10 carbon atoms. The fluoroalkyl group may be linear, branched or cyclic, but is preferably linear or branched, and more preferably linear.

m and n each independently represents 2 or 3, and multiple parenthesized structures may be the same as or different from each other, but are preferably the same as each other. m and n in the general formula (I) are defined by the valence of the above $A^1$ and $A^2$, and the preferred ranges thereof are also defined by the valence of $A^1$ and $A^2$. The reason why the compound in which m and n of the present invention represent 2 or 3 has significantly excellent haze reduction performance even though the addition amount is small when compared to the known compound in which m and n each represent 1 in the related art is the content of fluorine in the compound, but this is not intended that the present invention adheres to any theories.

o and p each independently represent an integer of 0 or more. When the formula has 2 or more o's and p' s, then multiple X's maybe the same or different. Preferably, o is 1 or 2. Preferably, p is an integer of 1 to 4, and more preferably 1 or 2.

The compound represented by the general formula (I) may have a symmetric molecular structure, or may be asymmetric. Here the symmetry includes any one corresponding to point symmetry, line symmetry, or rotation symmetry; and the asymmetry includes any one not corresponding to any of point symmetry, line symmetry, or rotation symmetry.

The compound represented by the general formula (I) is a compound obtained by combining the above-described fluoroalkyl group (Hb), the bonding groups $-(-Sp^1-L^1-Sp^2-L^2)_m-A^1-L^3-$ and $-L^4-A^2-(L^5-Sp^3-L^6-Sp^4-)_n-$, and the divalent group T preferably having an excluded volume effect. The two fluoroalkyl groups (Hb)'s existing in the molecule are preferably the same as each other; and the bonding groups $-(-Sp^1-L^1-Sp^2-L^2)_m-A^1-L^1-$ and $-L^4-A^2-(L^5-Sp^3-L^6-Sp^4-)_n-$ existing in the molecule are also preferably the same as each other. Preferably, the terminal $Hb-Sp^1-L^1-Sp^2-$ and $-Sp^3-L^6-Sp^4-Hb$ are a group represented by any of the following general formulae:

$(C_aF_{2a+1}) - (C_bH_{2b}) -$

$(C_aF_{2a+1})-(C_bH_{2b})-O-(CrH_{2r})-$

$(C_aF_{2a+1)}-(C_bH_{2b})-COO-(C_rH_{2r})-$

$(C_aF_{2a+1})-(C_bH_{2b})-OCO-(C_rH_{2r})-$

In the above formulae, a is preferably 2 to 30, more preferably 3 to 20, and still more preferably 3 to 10. b is preferably 0 to 20, more preferably 0 to 10, and still more preferably 0 to 5. a+b is 3 to 30. r is preferably 1 to 10 and more preferably 1 to 4.

The terminal $Hb-Sp^1-L^1-Sp^2-L^2-$ and $-L^5-Sp^3-L^6-Sp^4-Hb$ in the general formula (I) are preferably a group represented by any of the following general formulae:

$(C_aF_{2a+1})-(C_bH_{2b})-O$

$(C_aF_{2a+1})-(C_bH_{2b})-COO-$

$(C_aF_{2a+1})-(C_bH_{2b})-O-(C_rH_{2r})-O-$

$(C_aF_{2a+1})-(C_{bH2b})-COO- (C_rH_{2r})-COO-$

$(C_aF_{2a+1})-(C_bH_{2b})-OCO- (C_rH_{2r})-COO-$

In the above formulae, the definitions of a, b and r are the same as the definitions thereof described above.

Hereinafter, specific examples of the compound represented by the general formula (I) will be described. The compound represented by the general formula (I) which can be adopted by the presented invention should not be limitatively interpreted by the following specific examples.

[Chem. 21]

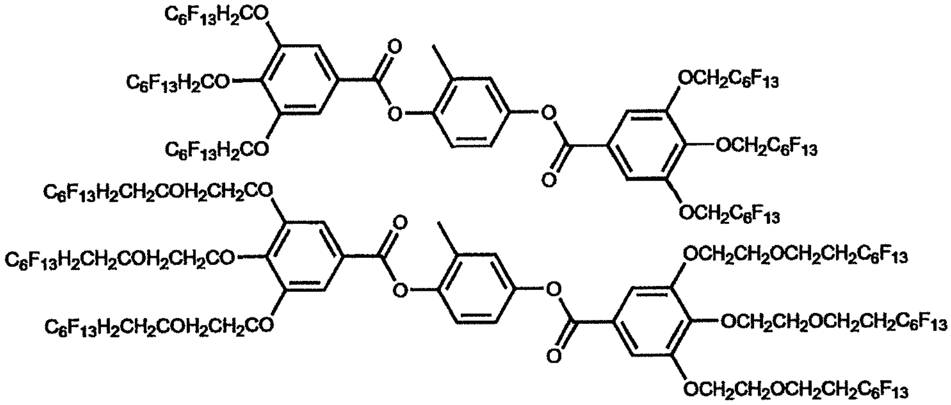

(1)

(2)

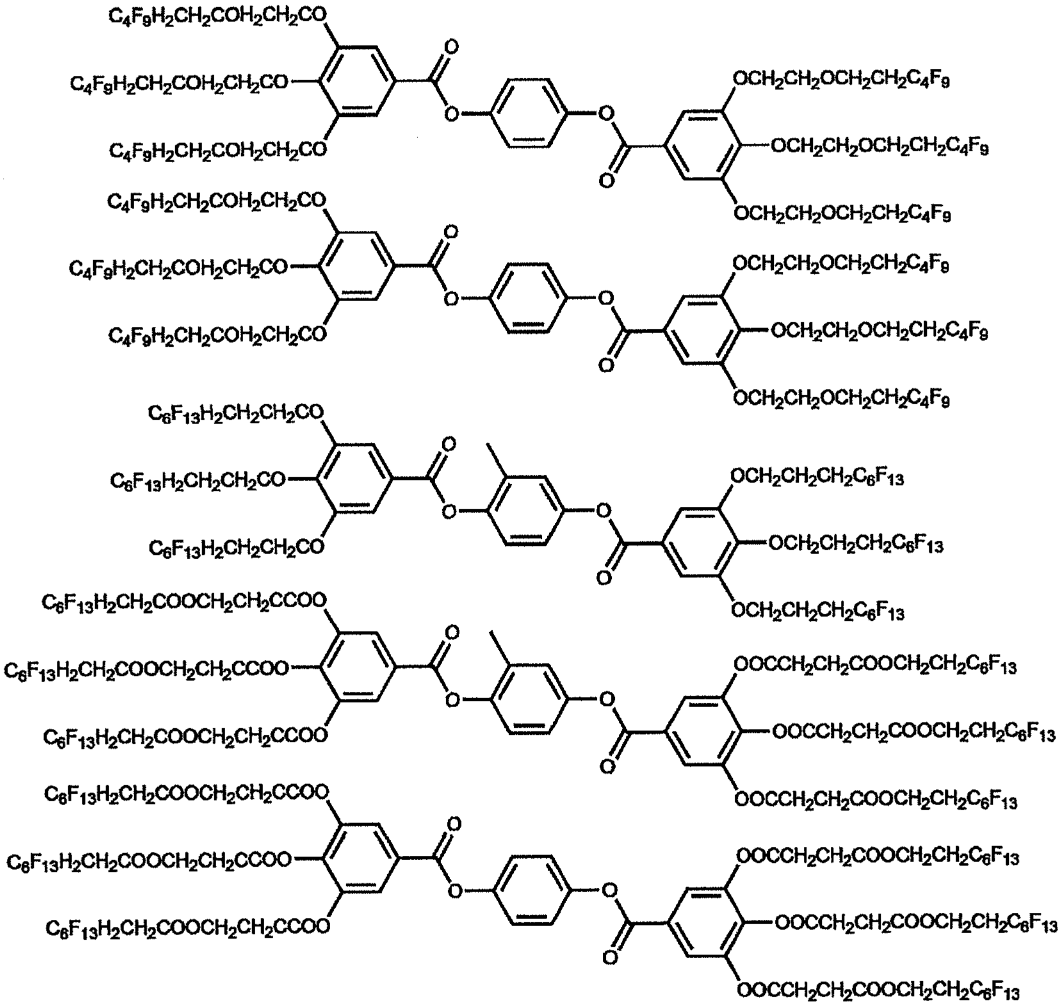

(3)

(4)

(5)

(6)

(7)

[Chem. 22]

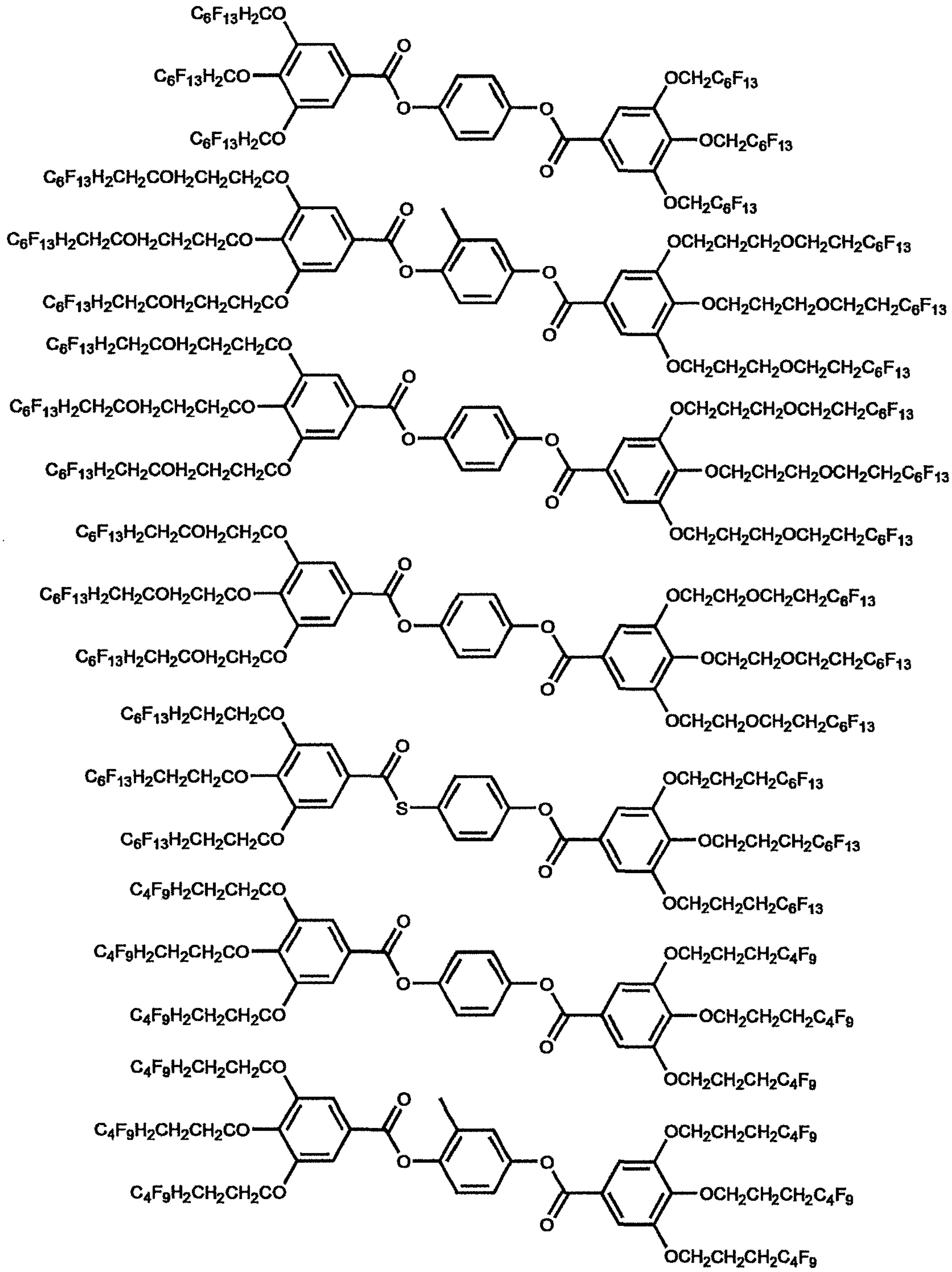

(8)

(9)

(10)

(11)

(12)

(13)

(14)

[Chem. 23]

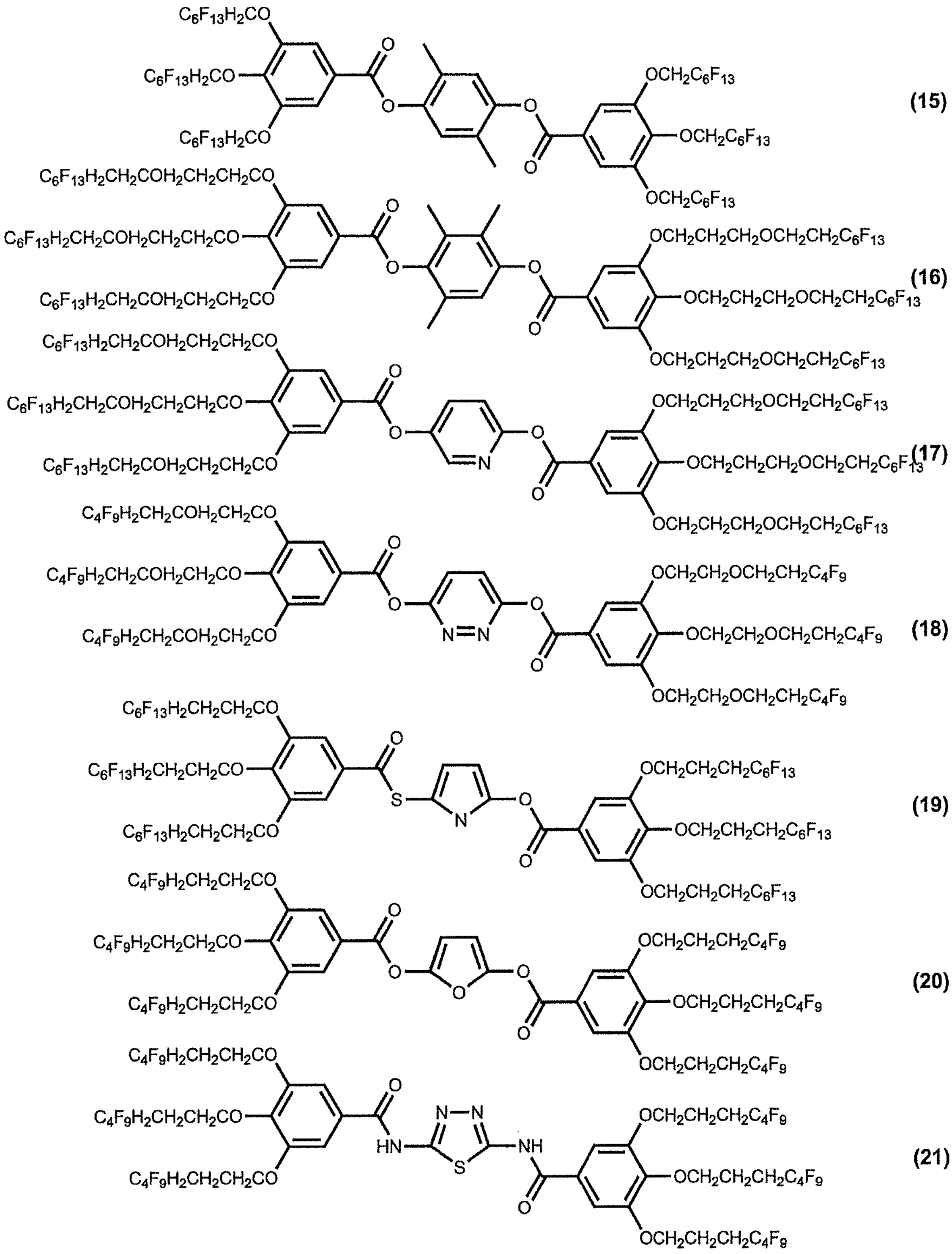

(15)

(16)

(17)

(18)

(19)

(20)

(21)

[Chem. 24]

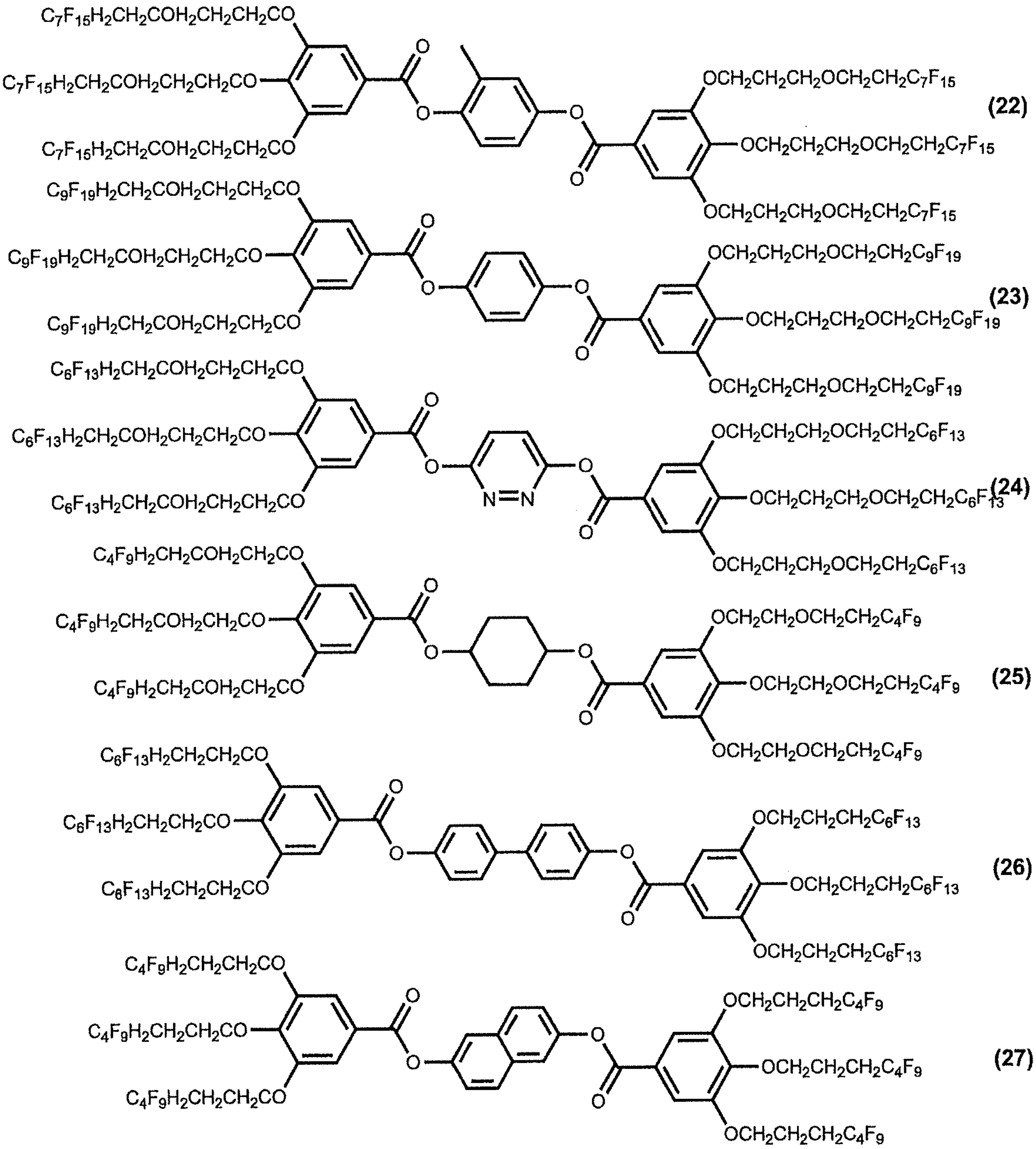

(22)

(23)

(24)

(25)

(26)

(27)

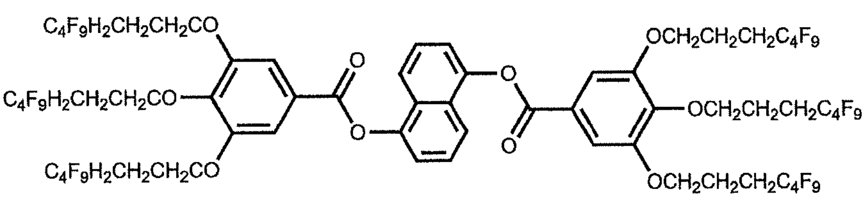

(28)

[Chem. 25]

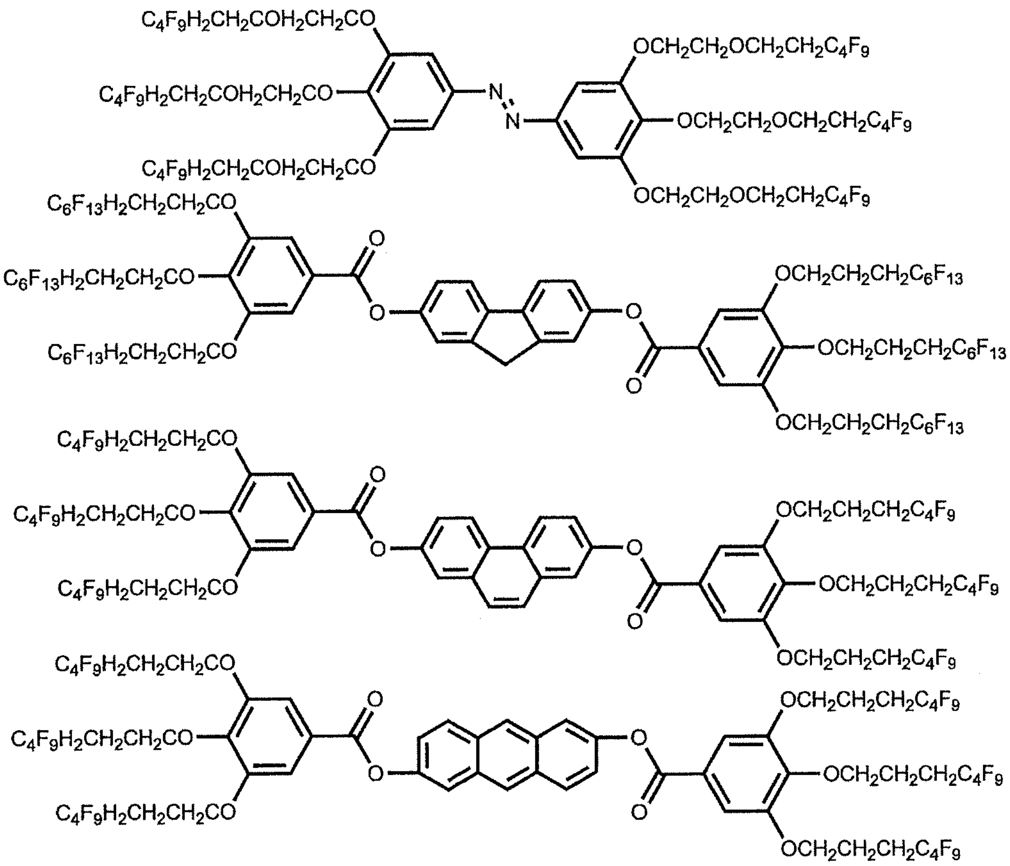

(29)

(30)

(31)

(32)

[Chem. 26]

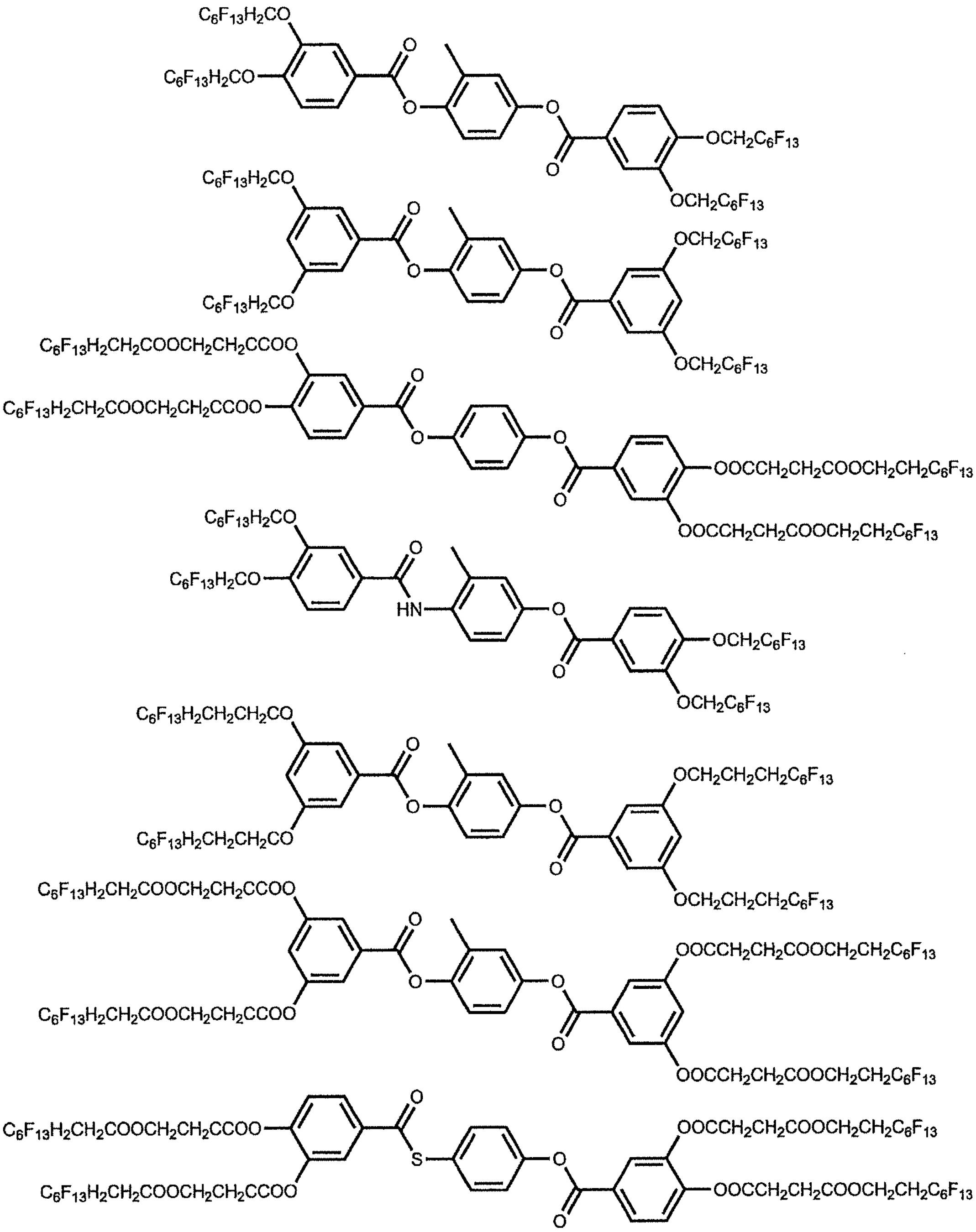

(33)

(34)

(35)

(36)

(37)

(38)

(39)

[Chem. 27]

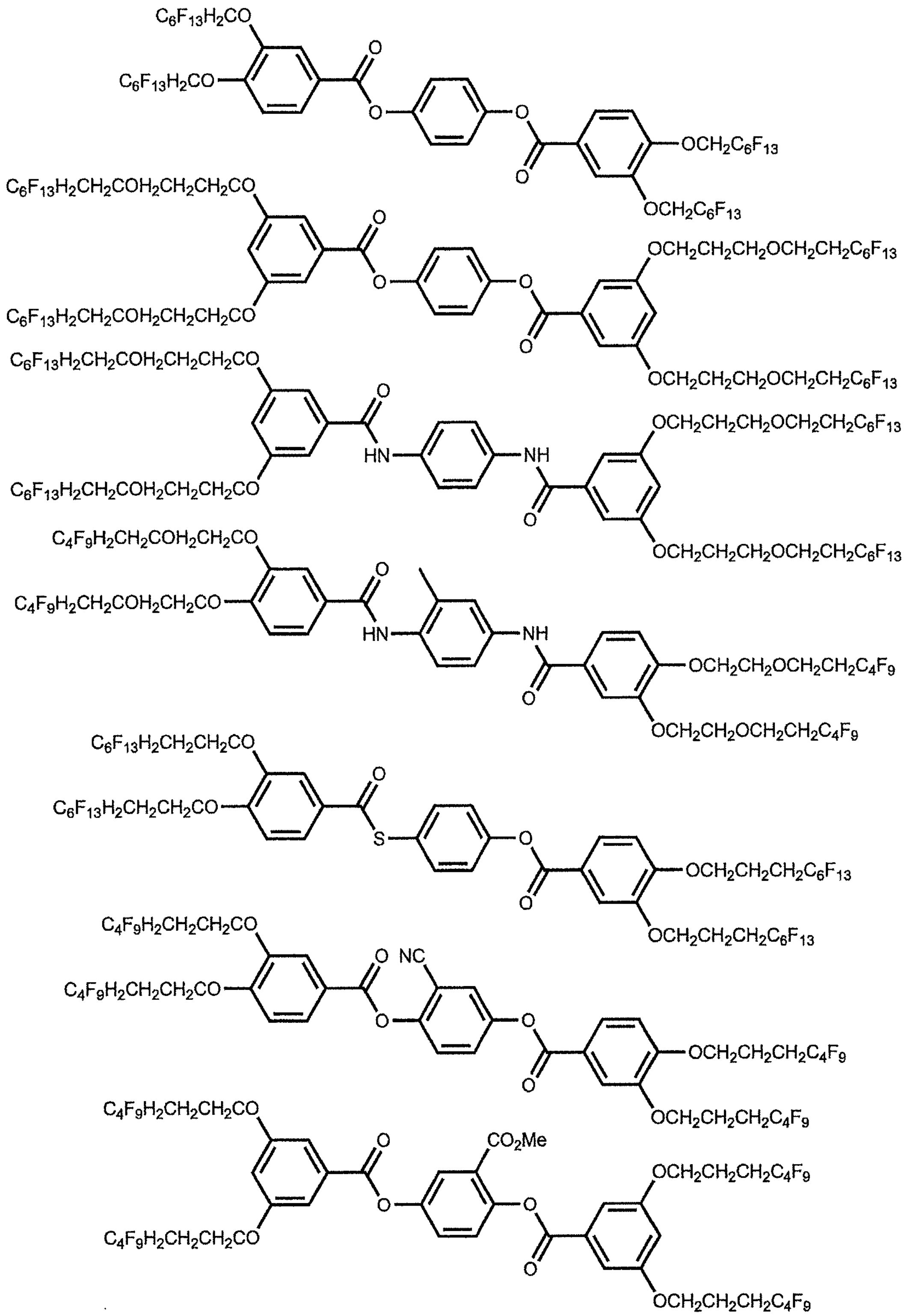

(40)

(41)

(42)

(43)

(44)

(45)

(46)

[Chem. 28]

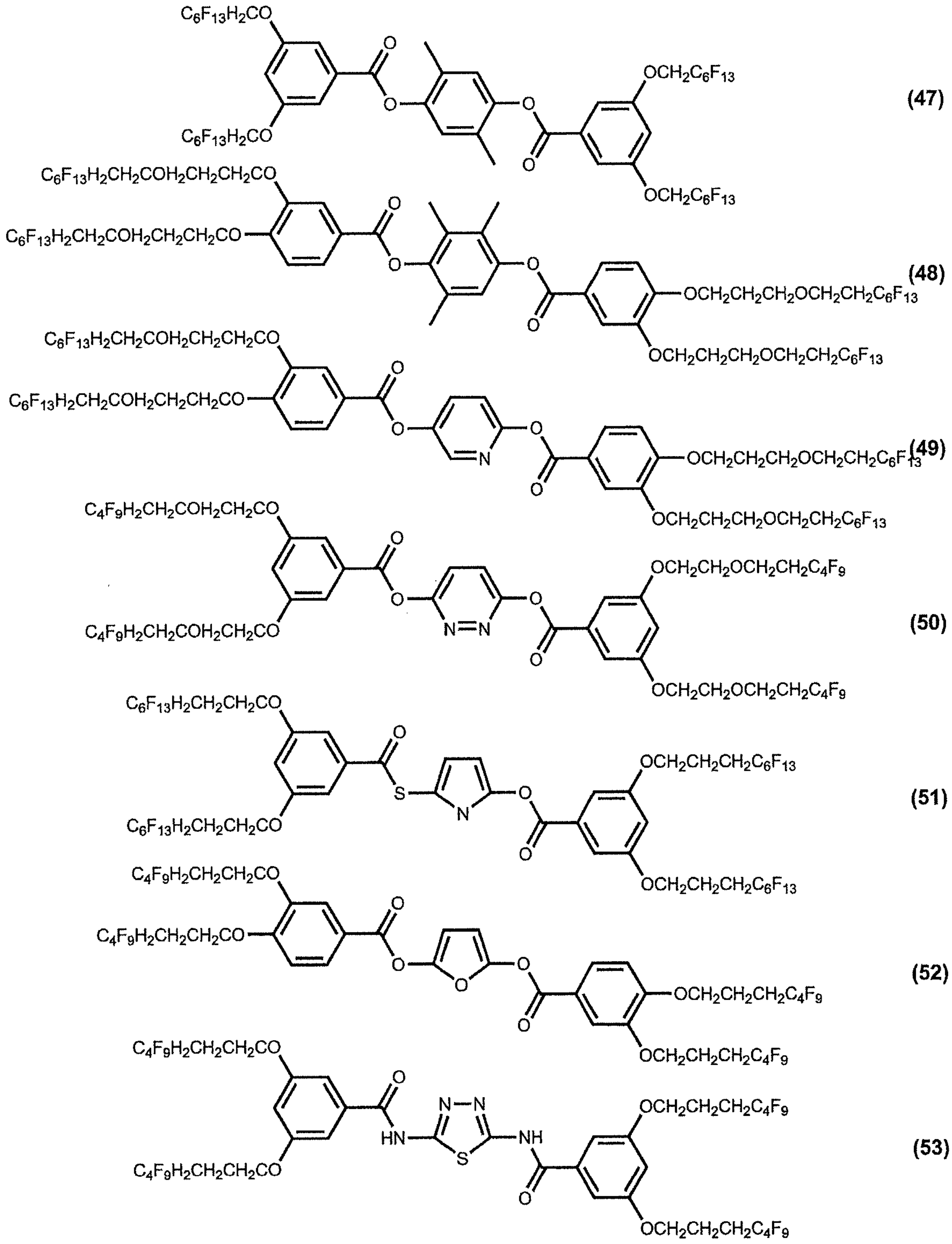

(47)

(48)

(49)

(50)

(51)

(52)

(53)

[Chem. 29]

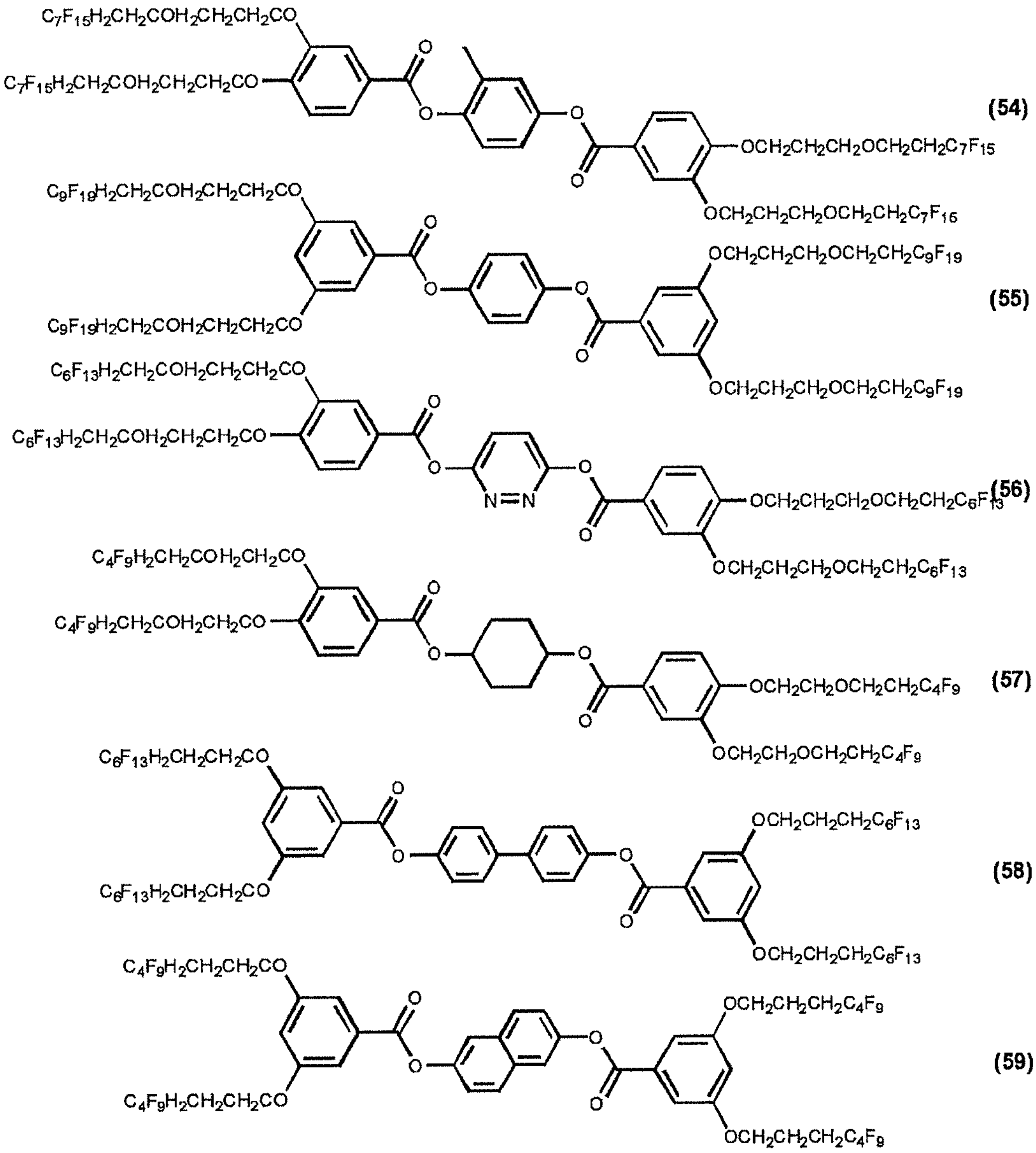

(54)

(55)

(56)

(57)

(58)

(59)

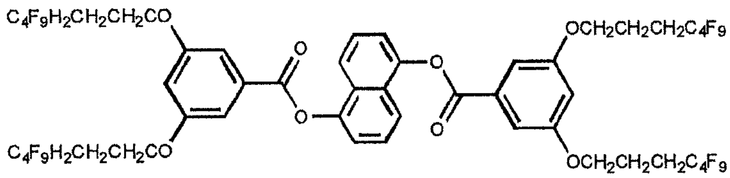

(60)

[Chem. 30]

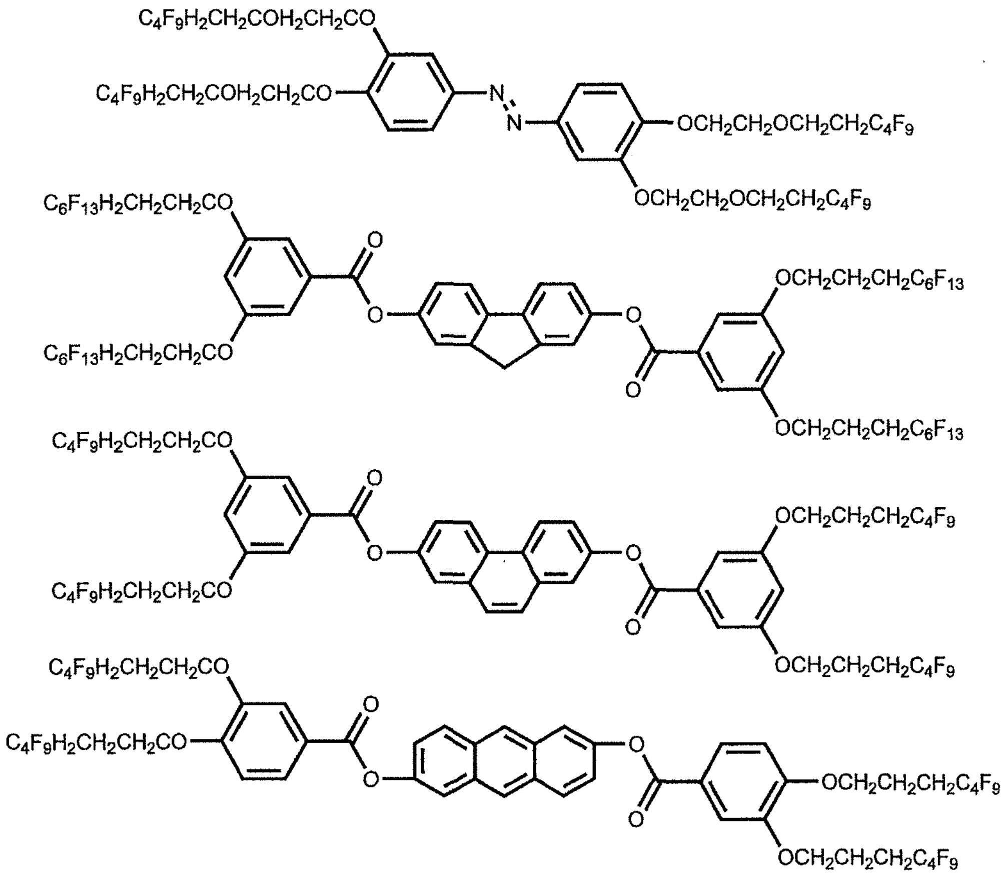

(61)

(62)

(63)

(64)

The compound represented by the general formula (I) can be synthesized by appropriately selecting a synthesis method described in literature cited in JP-A-2002-129162, JP-A-2002-97170, or the corresponding publication and combinining. Further, the compound can be synthesized by combining using other known synthesis methods as needed.

The amount of the fluoroalkyl group-containing alignment control agent to be used is preferably 0.003% by mass to 0.02% by mass and more preferably 0.003% by mass to 0.015% by mass with respect to the polymerizable liquid crystal compound in the liquid crystal composition (solid content in a case of a coating liquid).

(5) Hydrophilic group-containing coating property imparting agent

In the curable liquid crystal composition, since the fluoroalkyl group-containing compound is used as an alignment control agent, hydrophobicity of the surface of the liquid reflection layer which is coated with a liquid crystal composition and then cured becomes increased because the fluoroalkyl group-containing compound is unevenly distributed. Accordingly, the haze is likely to be easily generated due to cissing failure or liquid crystal phase alignment failure by decreasing the coating property of the liquid crystal composition coating liquid to be laminated thereon. In the manufacturing process, influence of deteriorating the coating property can be decreased by decreasing the coating speed of the coating liquid, but this is not a preferable coping method in terms of the manufacturing cost. In the present invention, deterioration of the coating property of the coating liquid to be laminated thereon is suppressed by adjusting the hydrophilicity or hydrophobicity of the surface of the liquid reflection layer to which coating and curing are applied with the hydrophilic group-containing coating property imparting agent.

It is desirable that the hydrophilic group-containing coating property imparting agent to be used for the liquid crystal composition to which coating and curing are applied have a structure with high compatability with a liquid crystal compound because the hydrophilic group-containing coating property imparting agent should not adversely affect the alignment of the liquid crystal phase.

As the hydrophilic group-containing coating property imparting agent, a surfactant which is free from fluorine and silicon and has an average molecular weight of 6000 or less (hereinafter, also referred to as a "non-F·Si-based

surfactant") is preferable.

The non-F·Si-based surfactant is not particularly limited as long as the condition of not containing fluorine and silicon is satisfied. The average molecular weight (mass average molecular weight) of the non-F·Si-based surfactant is preferably 6000 or less, more preferably 5000 or less, particularly preferably 4000 or less, and more particularly preferably 3000 or less.

Specific examples of the non-F·Si-based surfactant include polyoxyethylene alkyl ether, sorbitan ester, alkyl polyglucoside, fatty acid diethanolamide, alkyl monoglyceryl ether, acetylene alcohol, acetylene glycol, and their derivatives. Among them, acetylene alcohol, acetylene glycol and their derivatives are preferred.

As the hydrophilic group-containing coating property imparting agent, an acetylene glycol-based compound (acetylene glycol and their derivatives) is more preferable. As the derivatives of the acetylene glycol, acetylene glycol which is an ethylene oxide adduct is particularly preferable.

Examples of the acetylene glycol-based compound include 104 series of SURFINOL 104E, SURFINOL 104H, and SURFINOL 104A; 400 series of SURFINOL 420, SURFINOL 440, SURFINOL 465, and SURFINOL 485; SURFINOL SE, SURFINOLSE-F, DYNOL 604, DYNOL 607, OLFINE E1004, OLFINE 1010, OLFINE PD-0014, and OLFINE PD-005 (manufactured by Nissin Chemical Industry Co., Ltd.).

The amount of the hydrophilic group-containing coating property imparting agent is preferably 0.03% by mass to 0.2% by mass and more preferably 0.05% by mass to 0.15% by mass with respect to the polymerizable liquid crystal compound in the liquid crystal composition (solid content in a case of the coating liquid).

2. Substrate

The light reflection plate of the present invention includes a substrate. However, the light reflection plate of the present invention may be used as the light reflection layer of the present invention having no substrate according to the embodiment of the usage.

The substrate has a self-supporting characteristic, and is not particularly limited in terms of materials and optical characteristics as long as the substrate supports the light reflection layer. According to the usage, high transparency with respect to UV light is required.

The substrate (substrate 12 in Figs. 1 and 2) is, for example, a polymer film and the optical characteristic is not particularly limited. In the infrared light reflection plate of the present invention, the substrate is preferably a polymer film. According to the present invention, a member with unevenness in an in-plane retardation Re may be used as a substrate. In this regard, it is distinguished from the related art in which the optical characteristics are actively used for improving the light reflection characteristics by means of using a $\lambda/2$ plate as a substrate. However, usage of a phase difference plate whose phase difference is accurately adjusted such as a $\lambda/2$ plate or the like as the substrate 12 is not prevented.

As the polymer film with high transparency with respect to visible light, a polymer film for various optical films used for members of a display device such as a liquid crystal display device is exemplified. Examples of the substrate include polyester films such as polyethylene terephthalate (PET), polybutylene terephthalate, and polyethylene naphthalate (PEN); polycarbonate (PC) films; polymethyl methacrylate films; polyolefin films such as polyethylene and polypropylene; polyimide films; and triacetyl cellulose (TAC) films. Among these, polyethylene terephthalate and triacetyl cellulose are preferable.

3. Non-light reflective layer

In addition, the light reflection plate of the present invention may have a non-light reflective layer containing an organic material and/or an inorganic material. As an example of the non-light reflective layer that can be used for the present invention, an adhesion-improving layer used for adhesion with other members (for example, an interlayer film sheet or the like) easy is included. The adhesion-improving layer is preferably arranged as the outermost layer of one side or both sides. For example, according to an embodiment in which at least five light reflection layers are arranged on one surface of the substrate, the adhesion-improving layer can be arranged on the light reflection layer of the outermost layer. Alternatively, the adhesion-improving layer can be arranged on the rear surface of the substrate (surface of the substrate on the side in which the light reflection layer is not arranged) . Materials to be used for forming the adhesion-improving layer are selected from various materials depending on whether the adhesion-improving layer is formed adjacent to the light reflection layer or formed adjacent to the substrate, or according to the materials or the like of other members to be adhered. Further, other examples of the layer having non-light reflective property that can be used for the present invention include a light reflection layer of a cholesteric liquid crystal phase, an undercoat layer increasing adhesion power with a substrate, and an alignment layer which is used when the light reflection layer is formed and more precisely defines the alignment direction of a liquid crystal compound. The undercoat layer and the alignment layer are preferably arranged between the substrate and at least one light reflection layer. Moreover, the alignment layer may

be arranged between the light reflection layers.

(Adhesion-improving layer)

The light reflector of the present invention may have an adhesion-improving layer as the outermost layer of one side or both sides. The adhesion-improving layer has a function of improving the adhesion property with the interlayer film for laminated glass. More specifically, the adhesion-improving layer has a function of improving adhesion with the light reflection layer of the cholesteric liquid crystal phase and/or the substrate, and the interlayer film for laminated glass. As materials that can be used for forming the adhesion-improving layer, polyvinyl butyral (PVB) resin is exemplified. The polyvinyl butyral resin is a type of polyvinyl acetal that is formed through reaction of polyvinyl alcohol (PVA) and butylaldehyde in the presence of an acid catalyst, and has a recurring unit having the following structure.

[Chem. 31]

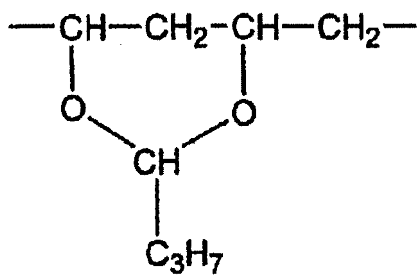

It is preferable that the adhesion-improving layer be formed through coating. For example, the adhesion-improving layer may be formed through coating on the surface of the light reflection layer of the cholesteric liquid crystal phase and/or the surface of the substrate (surface on the side in which the light reflection layer is not formed). More specifically, one kind of the polyvinyl butyral resin is dissolved in an organic solvent to prepare a coating liquid, and the surface of the light reflection layer of the cholesteric liquid crystal phase and/or the rear surface of the substrate is coated with the coating liquid to be heated and dried as needed, and then an adhesion-improving layer can be formed. As the solvent used for preparation of the coating liquid, for example, methoxy propyl acetate (PGMEA), methyl ethyl ketone (MEK), isopropanol (IPA), or the like can be used. As the coating method, various known methods in the related art can be used. A preferred range of the temperature at the time of drying varies by materials used for preparation of the coating liquid, but the temperature thereof is preferably 140°C to 160°C in general. The drying time is not particularly limited, but the time thereof is generally 5 minutes to 10 minutes.

The adhesion-improving layer may also be a so-called undercoat layer that includes an acrylic resin, a styrene/acrylic resin, a urethane resin, and a polyester resin. The adhesion-improving layer formed of these materials can be formed by coating. In addition, some commercially-available polymer films may have an undercoat layer formed therein, and such commercial products can be used as the substrate.

The thickness of the adhesion-improving layer is preferably 0.1 $\mu$m to 2.0 $\mu$m.

(Undercoat layer)

The light reflector of the present invention may have an undercoat layer between the light reflection layer of the cholesteric liquid crystal phase and the substrate. When the adhesion power between the light reflection layer of the cholesteric liquid crystal phase and the substrate is weak, peeling failure is likely to occur in the process of laminating and manufacturing the light reflection layer of the cholesteric liquid crystal phase or the strength (impact resistance) in a case of using laminated glass as the light reflection plate is reduced. Accordingly, as the undercoat layer, a layer capable of improving adhesion between the cholesteric liquid crystal layer and the substrate can be used. On the other hand, in a case where the substrate or the substrate and the undercoat layer are peeled, and a member such as an interlayer film sheet or the like is integrated with the light reflection layer, an adhesion in which the degree is not that strong so that the layer is peelable is required at the interface between the substrate and the undercoat layer or the undercoat layer and the light reflection layer of the cholesteric liquid crystal phase. In consideration of being used as the laminated interlayer film sheet in the subsequent process, it is preferable to be peelable at the interface between the undercoat layer and the substrate.

Examples of the material usable in forming the undercoat layer include an acrylate copolymer, polyvinylidene chloride, styrene-butadiene rubber (SBR), and aqueous polyester. In an embodiment where the surface of the undercoat layer is adhered to an interlayer film, it is preferable that the adhesion between the undercoat layer and the interlayer

film be excellent; and from the viewpoint, it is preferable that the undercoat layer contain a polyvinyl butyral resin in addition to the above-described materials. In addition, since the adhesion power of the undercoat layer is necessary to be appropriately adjusted as described above, it is preferable that the layer be cured with a suitable curing agent, for example, with dialdehydes such as glutaraldehyde, 2,3-dihydroxy-1,4-dioxane, or the like, or with boric acid or the like. The amount of the curing agent to be added is preferably 0.2% by mass to 3.0% by mass of the dry mass of the undercoat layer.

Preferably, the thickness of the undercoat layer is 0.05 μm to 0.5 μm.

(Alignment layer)

The light reflector of the present invention may include an alignment layer between the light reflection layer of the cholesteric liquid crystal phase and the substrate. The alignment layer has a function of more precisely defining the alignment direction of the liquid crystal compound in the cholesteric liquid crystal layer. The alignment layer can be provided by means of forming a layer with a rubbing treatment of an organic compound (preferably, a polymer), oblique vapor deposition of an inorganic compound, and microgrooves. Further, an alignment layer in which an alignment function is generated due to application of an electric field, application of a magnetic field, or photo-irradiation is known. The alignment layer is preferably formed on the surface of a film of a polymer by a rubbing treatment.

Since the alignment layer is necessary to be in close contact with the light reflection layer of the cholesteric liquid crystal phase, it is preferable that the alignment layer be provided between the light reflection layer of the cholesteric liquid crystal phase and the substrate or the undercoat layer. However, the undercoat layer may have a function of the alignment layer. In addition, the alignment layer may be included between the light reflection layers.

It is preferable that the alignment layer have a certain degree of adhesion power with respect to all of the light reflection layers of the adjacent cholesteric liquid crystal phase, undercoat layer, and substrate. However, in a case where a laminated interlayer film sheet is prepared while the substrate is peeled off from the light reflection layer of the cholesteric liquid crystal phase, which is an example of the embodiment of the present invention described below, the adhesion whose degree is not that strong so that the layer is peelable is required at any of the interfaces of the light reflection layer of the cholesteric liquid crystal phase/the alignment layer/the undercoat layer/the substrate. The interface in which peeling is carried out can be any of the interfaces, but it is preferable that peeling be carried out at the interface between the alignment layer and the undercoat layer in consideration of being used as the laminated interlayer film sheet in the subsequent process.

As a material used for the alignment layer, a polymer of an organic compound is preferable, and a polymer which can be crosslinked by itself or a polymer which is crosslinked using a crosslinking agent is frequently used. Certainly, a polymer having both functions is used. Examples of the polymer include compounds of a polymer, a silane coupling agent, and the like such as a polymethyl methacrylate, an acrylic acid/methacrylic acid copolymer, a styrene/malein imide copolymer, polyvinyl alcohol, modified-polyvinyl alcohol, poly(N-methylol acrylamide), a styrene/vinyl toluene copolymer, chlorosulfonated polyethylene, nitrocellulose, polyvinyl chloride, chlorinated polyolefin, polyester, polyimide, a vinyl acetate/vinyl chloride copolymer, an ethylene/vinyl acetate copolymer, carboxymethyl cellulose, gelatin, polyethylene, polypropylene, and polycarbonate. Examples of preferred polymers include water-soluble polymers such as poly (N-methylol acrylamide), carboxymethyl cellulose, gelatin, polyvinyl alcohol, and modified-polyvinyl alcohol, more preferred examples thereof include gelatin, polyvinyl alcohol, and modified-polyvinyl alcohol, and particularly preferred examples thereof include polyvinyl alcohol and modified polyvinyl alcohol. In addition, in an embodiment of adhering the interlayer film to the surface of the alignment layer, it is preferable that the adhesion between the alignment layer and the interlayer film be excellent. From this viewpoint, it is preferable that the alignment layer contain a polyvinyl butyral resin and in addition to the above-described materials.

The thickness of the alignment layer is preferably 0.1 μm to 2.0 μm.

4. Additive

Further, the heat shielding effect of the light reflection layer and the light reflector of the present invention can improve the heat shielding effect by light absorbing characteristics of the materials in addition to the reflection characteristics. The light reflection layer and the light reflector of the present invention may include an additive in an arbitrary layer.

For example, light in the near infrared region can be absorbed and the heat shielding property can be further improved by adding a coloring material exhibiting absorbing characteristics in a near infrared light region, preferably a wavelength range of 780 nm to 940 nm to the substrate or at least one light reflection layer, or separately arranging a layer containing the coloring material.

Moreover, materials having absorbing characteristics and/or reflection characteristics in an infrared region of 1400 nm to 2500 nm are present in metal oxide fine particles. In the present invention, metal oxide fine particles exhibiting the corresponding properties can be used, for example, light having a wavelength range of 1400 nm to 2500 nm is

absorbed and/or reflected so that the heat shielding property can be further improved by adding the metal oxide fine particles to the substrate or at least one light reflection layer or separately arranging the layer containing the metal oxide fine particles.

In this manner, the embodiment in which the heat shielding property is improved using coloring materials and/or metal oxide fine particles is more preferable compared to an embodiment of widening the bandwidth by further laminating the light reflection layer to which the cholesteric liquid crystal phase is fixed, in terms of suitability for manufacture and the manufacturing cost.

Further, the present inventors found that each light reflection layer formed by fixing the cholesteric liquid crystal phase is likely to be deteriorated by UV light irradiation, and, particularly, the deterioration with respect to UV light having a wavelength of 380 nm or less is significant. Accordingly, in the present invention, for example, it is preferable to suppress deterioration significantly by adding a material (UV absorbent) absorbing light in the wavelength region to the substrate or at least one light reflection layer, or separately arranging layers containing the materials.

Further, since the coloring material, metal oxide fine particles, and a UV absorbent influence the alignment of the liquid crystal in some cases, these materials are preferably added to the members in the case where the materials are added to a layer other than the substrate, the light reflection layer, or the light reflection layer is integrated with another member. These materials may be added to the same layer or different layers from each other. Members (a layer, a substrate, and the like) to which respective materials are added are determined such that effects by functions of respective materials can be more effectively obtained. Moreover, in consideration of various properties of these materials (influence on the haze, solubility, meltability, coating properties, and meltability), members to be added are determined such that surface failure is not generated and transparency is not significantly decreased.

For example, it is preferable that the UV absorbent be added to a member to which light is incident before the light reflection layer. Deterioration of the light reflection layer due to UV light can be suppressed by adding the UV absorbent to the member.

Further, it is preferable that the coloring material or the metal oxide fine particles be added to a member to which light is incident after the light reflection layer.

Examples are not shown in the figures, but additives such as a UV absorbent, according to the embodiment of the present invention, a coloring material, and metal oxide fine particles may be contained in an arbitrary layer of the light reflection layer and the light reflector of the present invention. Specifically, it is preferable that the additives be contained in the substrate or the non-light reflective layer, and the additives are preferably contained in any of the adhesion-improving layer, the alignment layer, the undercoat layer, and the substrate. The layer to which the additive is added is selected according to a positional relationship of solar light and the light reflection layer of the cholesteric liquid crystal phase. The UV absorbent is preferably contained in the layer on the side closer to solar light than the light reflection layer of the cholesteric liquid crystal phase and the coloring material and the metal oxide fine particles are preferably contained in the layer on the side farther from solar light than the light reflection layer of the cholesteric liquid crystal phase. According to embodiments, since the layer which is preferable for the UV absorbent, the coloring material, or the metal oxide fine particles to be contained is changed, it is necessary that compositions, solvents, or used amounts of respective materials are appropriately adjusted and a containing method considered to be optimum is adopted.

(UV absorbent)

In the light reflector of the present invention, it is preferable that at least one of the light reflection layer, the adhesion-improving layer, the undercoat layer, the alignment layer, and the substrate contain the UV absorbent. Depending on the kinds of the UV absorbents, since alignment of the liquid crystal is influenced, it is preferable to be added to a member (a layer or a substrate) other than the light reflection layer. According to the embodiment of the present invention, various modes may be adopted, but it is preferable to be added to a member to which light is incident before the light reflection layer. For example, it is preferable to be added to a layer arranged between a glass plate arranged on the outdoor side and the light reflection layer of the cholesteric liquid crystal phase. Alternatively, it is also preferable to be contained in the interlayer film to be adhered to the glass plate arranged on the outdoor side or the glass plate itself arranged on the outdoor side.

Examples of compounds that can be used as the UV absorbent include benzotriazole-based, benzodithiol-based, coumarin-based, benzophenone-based, salicylic acid ester-based, and cyanoacrylate-based UV absorbents; titanium oxide, and zinc oxide. Particularly preferred examples of the UV absorbent include Tinuvin 326, 328, and 479 (all manufactured by BASF Japan Ltd.). Further, the kind and the blending amount of the UV absorbent are not particularly limited, and can be appropriately selected according to purposes. Particularly, when a member containing the UV absorbent has an effect of adjusting the transmittance of UV light having a wavelength of 380 nm or less to be 0.1% or less, deterioration of the light reflection layer can be remarkably suppressed and yellowing due to UV light can be remarkably suppressed, which are preferable. Accordingly, it is preferable to determine the kind and the blending amount of the UV absorbent so as to satisfy the above-described characteristics.

(Coloring material)

In the light reflector of the present invention, it is preferable that at least one of the light reflection layer, the adhesion-improving layer, the undercoat layer, the alignment layer, and the substrate contain the coloring material. Depending the kinds of the coloring materials, since alignment of the liquid crystal is influenced, it is preferable to be added to a member (a layer or a substrate) other than the light reflection layer. Further, in some cases, efficiency of light reflection on the light reflection layer of the cholesteric liquid crystal phase is reduced and the heat shielding performance is reduced by diffusion or absorption occurring at the time when light passes through the member containing the coloring material. According to the embodiment of the present invention, various modes may be adopted, but it is preferable to be added to a member to which light is incident after the light reflection layer. More specifically, it is preferable to be contained in a layer arranged between the glass plate arranged on the indoor side and the light reflection layer of the cholesteric liquid crystal phase. Alternatively, it is also preferable to be contained in the interlayer film to be adhered to the glass plate arranged on the indoor side or in the glass plate itself arranged on the indoor side.

As the coloring material, both a dye and a pigment can be used. Particularly, when a material exhibiting absorber characteristics with respect to a wavelength range of 780 nm to 940 nm is used, the heat shielding property can be more improved, which is preferable. Further, it is preferable in terms of reducing coloring. As absorbent materials with respect to a wavelength range of 780 nm to 940 nm, a cyan dye and a cyan pigment are preferable.

Examples of dyes to be used as the cyan dye include azomethine dyes such as an indoaniline dye and an indophenol dye; polymethine dyes such as a cyanine dye, an oxonol dye, and a merocyanine dye; carbonium dyes such as a diphenylmethane dye, a triphenylmethane dye, and a xanthene dye; a phthalocyanine dye; an anthraquinone dye; an aryl dye or a heterylazo dye having phenols, naphthols, and anilines as coupling components; and an indigo thioindigo dye. These dyes may show cyan at first by a part of the chromophore being dissociated, and a counter cation in this case may be an inorganic cation such as an alkali metal or ammonium, may be an organic cation such as pyridinium or quaternary ammonium salts, or may be a polymer cation having these in a partial structure thereof. In addition, a black dye such as a polyazo dye can be used.

Preferred examples of pigments used as the cyan pigment include a phthalocyanine pigment, an anthraquinone-based indanthrone pigment (for example, C. I. Pigment Blue 60 or the like), and a dyeing lake pigment-based triarylcarbonium pigment. Among these, a phthalocyanine pigment (as preferred examples, copper phthalocyanine such as C. I. Pigment Blue 15:1, C. I. Pigment Blue 15:2, C. I. Pigment Blue 15:3, C. I. Pigment Blue 15:4, or C. I. Pigment Blue 15:6; monochloro or low chlorinated copper phthalocyanine; a pigment described in European Patent No. 860475 as aluminum phthalocyanine; metal-free phthalocyanine as C. I. Pigment Blue 16; or phthalocyanine whose central metal is Zn, Ni, or Ti, and among these, as more preferred examples, C. I. Pigment Blue 15:3, C. I. Pigment Blue 15:4, or aluminum phthalocyanine) is most preferable.

As described above, when a coloring material which is a light absorbing material is used, unevenness is generated in a transmittance spectrum of a visible light wavelength range, and a color tone is generated in transmitted light in some cases. Depending on the usage, the characteristics are actively used such that a coloring material can be selected so as to be a desired color. Meanwhile, depending on the usage (for example, windshields or the like of a vehicle), there is a case in which coloring is not preferable. As a result of examination conducted by the present inventor, it is understood that a color tone can be adjusted to be neutral by combining an absorbent material having an absorption maximum wavelength of 780 nm to 940 nm with an absorbent material exhibiting other absorbing characteristics. For example, in order to adjust the coloring tone of the transmitted light of the light reflection plate to be neutral, it is preferable to use the above-described cyan dye and/or the cyan pigment together with coloring materials (a yellow dye, a yellow pigment, a magenta die, a magenta pigment, and the like) other than those. As the coloring materials, known materials described in various literature can be used (dyes are described in JP-A-2005-105175 and the like, and pigments are described in JP-A-2009-67956 and the like).

(Metal oxide fine particles)

In the light reflector of the present invention, it is preferable that at least one of the light reflection layer, the adhesion-improving layer, the undercoat layer, the alignment layer, and the substrate contain metal oxide fine particles having absorption and/or reflection characteristics in a range of 1400 nm to 2500 nm. Depending the kinds of the metal oxide fine particles, since alignment of the liquid crystal is influenced, it is preferable to be added to a member (a layer or a substrate) other than the light reflection layer. Further, in some cases, efficiency of light reflection on the light reflection layer of the cholesteric liquid crystal phase is reduced and the heat shielding performance is reduced by diffusion or absorption occurring at the time when light passes through the member containing the metal oxide fine particles. According to the embodiment of the present invention, various modes may be adopted, but it is preferable to be added to a member to which light is incident after the light reflection layer. More specifically, it is preferable to be contained in a layer arranged between the glass plate arranged on the indoor side and the light reflection layer of the

cholesteric liquid crystal phase. Alternatively, it is also preferable to be contained in the interlayer film to be adhered to the glass plate arranged on the indoor side or in the glass plate itself arranged on the indoor side.

As an example of the metal oxide fine particles that can be used, it is preferable to contain at least one metal oxide selected from Zn, Ge, Ti, Zr, Hf, Si, Sn, Mn, Ga, Mo, In, Sb, Ta, V, Y, and Nb, or a composite metal oxide obtained by combining two or more of these metals.

Examples of the metal oxide include ZnO, $GeO_2$, $TiO_2$, $ZrO_2$, $HfO_2$, $SiO_2$, $Sn_2O_3$, $Mn_2O_3$, $Ga_2O_3$, $Mo_2O_3$, $In_2O_3$, $Sb_2O_3$, $Ta_2O_5$, $V_2O_5$, $Y_2O_3$, and $Nb_2O_5$.

Examples of the composite metal oxide include a composite oxide of titanium and zirconium, a composite oxide of titanium and hafnium, a composite oxide of titanium and barium, a composite oxide of titanium and silicon, and a composite oxide of titanium, zirconium, and silicon, and a composite oxide of titanium and tin, and a composite oxide of titanium, zirconium, and tin.

A method of manufacturing the metal oxide fine particles is not particularly limited, and a known method can be used. For example, desired oxide fine particles can be obtained by hydrolyzing metal salts or metal alkoxide as a raw material in a reaction system containing water.

In addition, instead of the method of performing hydrolysis in water, inorganic fine particles may be prepared in an organic solvent or in an organic solvent in which a thermoplastic resin is dissolved. Examples of the solvent used for these methods include acetone, 2-butanone, dichloromethane, chloroform, toluene, ethyl acetate, cyclohexanone, and anisole. These may be used alone or by mixing plural kinds thereof.

<Method of manufacturing light reflection plate>

In the light reflection plate of the present invention, respective light reflection layers can be formed using various methods, but it is particularly preferable that respective light reflection layers be prepared by a coating method. More specifically, a curable liquid crystal composition which can form a cholesteric liquid crystal phase is applied to the surfaces of the substrate, the alignment layer, or the light reflection layer, and the composition is made to be a cholesteric liquid crystal phase to be cured by accelerating a curing reaction (for example, a polymerization reaction or a crosslinking reaction), thereby forming respective light reflection layers.

An example of the manufacturing method includes at least the followings:

(1) the surface of the substrate or the like is coated with the curable liquid crystal composition to enter a state of the cholesteric liquid crystal phase, and
(2) the curable liquid crystal composition is irradiated with UV light to accelerate the curing reaction, and the cholesteric liquid crystal phase is fixed, and then a light reflection layer is formed.

A light reflection plate having a configuration which is the same as the configuration illustrated in Fig. 1 can be prepared by repeating the processes of (1) and (2) two times on one surface of the substrate. Further, a light reflection plate having a configuration which is the same as the configuration illustrated in Fig. 2 can be prepared by repeating the processes of (1) and (2) three times.

Moreover, a rotation direction of the cholesteric liquid crystal phase can be adjusted by the kind of liquid crystal to be used or the kind of chiral agent to be added, and a helical pitch (that is, a center reflection wavelength) can be arbitrarily adjusted by the concentration of these materials. It is known that the wavelength in a specific range reflected by a light reflective film can be shifted by various factors of the manufacturing method. The wavelength can be shifted under conditions of the temperature, illuminance, and the irradiation time at the time of fixing the cholesteric liquid crystal phase in addition to the concentration at the time of adding the chiral agent.

In the above process (1), first, the curable liquid crystal composition is applied to the surface of a substrate or to the surface of the underlying light reflection layer. The curable liquid crystal composition is preferably prepared as a coating liquid by dissolving and/or dispersing the materials in a solvent. Coating with the coating liquid may be attained in various methods such as a wire bar coating method, an extrusion coating method, a direct gravure coating method, a reverse gravure coating method, and a die coating method. Also employable here is an inkjet apparatus where the liquid crystal composition is ejected from the nozzle to form a coating film.

Next, the curable liquid crystal composition applied to the surface to be a coating film is processed to be a cholesteric liquid crystal phase. In the embodiment where the curable liquid crystal composition is prepared as a coating liquid that contains a solvent, the coating film is dried and the solvent is removed, whereby the coating film may enter a state having a cholesteric liquid crystal phase. To make the coating film have a transition temperature at which the coating film enters a cholesteric liquid crystal phase, the coating film may be optionally heated. For example, once the coating film is heated up to a temperature of the isotropic phase thereof, the coating film is then cooled to a cholesteric liquid crystal phase transition temperature, whereby the coating film could be stably converted into a state of cholesteric liquid crystal phase. The liquid crystal phase transition temperature of the curable liquid crystal composition is preferably

within a range of 10°C to 250°C in terms of the production suitability, and more preferably 10°C to 150°C. When the temperature is lower than 10°C, then the production process would require a cooling process for lowering the temperature of the coating film to a temperature range in which the film could exhibit a liquid crystal phase. On the other hand, when the temperature is higher than 200°C, the process would require a high temperature in order for the coating film to be in an isotropic liquid state at a further higher temperature than the temperature range in which the film could be once a liquid crystal phase, and as such, is unfavorable in terms of heat energy waste, substrate deformation, and degradation.

Next, in the process (2), the coating film that enters a state of a cholesteric liquid crystal phase is cured through irradiation with UV light. For UV irradiation, a light source of a UV lamp or the like is used. In this process, the coating film is irradiated with UV light whereby the liquid crystal composition is cured and the cholesteric liquid crystal phase is thereby fixed to form a light reflection layer.

The irradiation energy dose of UV light is not particularly limited. In general, preferred is a dose of 100 $mJ/cm^2$ to 800 $mJ/cm^2$. The time for which the coating film is irradiated with UV light is also not particularly limited. The time may be determined in terms of both the sufficient strength of the cured film and the productivity thereof.

To accelerate the curing reaction, the UV irradiation may be carried out under heat. Preferably, the temperature of irradiation with UV light is kept in a range of a liquid crystal phase temperature so as not to disturb the liquid crystal phase of the film. The oxygen concentration in the atmosphere participates in the degree of polymerization, and therefore, in case where the reaction could not secure the desired degree of polymerization in air and where the film strength is therefore insufficient, it is desirable that the oxygen concentration in the atmosphere is reduced according to a nitrogen-purging method or the like. The oxygen concentration is preferably 10% or less, more preferably 7% or less, and most preferably 3% or less. The reaction yield of the curing reaction (for example, polymerization reaction), which is promoted through irradiation with UV light, is preferably 70% or more, more preferably 80% or more, and still more preferably 90% or more in terms of holding the mechanical strength of the layers, suppressing the outflow of unreacted substances from the layers and the like. In order to improve the reaction yield, a method for increasing the radiation dose of UV light or polymerization in a nitrogen atmosphere or under heating conditions is effective. In addition, it is also possible to use a method in which the composition is temporarily polymerized, and held in a higher temperature state than the polymerization temperature, thereby further progressing the reaction through thermal polymerization or a method in which UV light are radiated again (in this case, UV light should be radiated under the conditions satisfying the present invention). The reaction yield can be measured by comparing the absorption intensities in the IR vibration spectra of the reactive group (for example, polymerizable group) before and after the reaction.

In the above process, the cholesteric liquid crystal phase is fixed to form the light reflection layer. Here, regarding the "fixed" state of the liquid crystal phase, a condition where the alignment of the liquid crystal compound that exhibits the cholesteric liquid crystal phase is maintained as such for a most typical and preferred embodiment. However, not limited thereto but concretely, the fixed state means that the layer has no more fluidity in a temperature range of generally 0°C to 50°C, but -30°C to 70°C in a more severe condition, and can continue to stably keep the fixed alignment state thereof without providing any change in the alignment state by any external field or external force. In the present invention, the alignment state of the cholesteric liquid crystal phase is fixed by the curing reaction that is promoted through irradiation with UV light.

In the present invention, it is enough that the optical properties of the cholesteric liquid crystal phase are maintained in the layer, and finally the liquid crystal composition in the light reflection layer would not need to exhibit anymore liquid crystallinity. For example, the liquid crystal composition is polymerized to have an increased molecular weight through the curing reaction to thereby have no more liquid crystallinity.

[Laminated interlayer film sheet for glass]

The laminated interlayer film sheet for glass of the present invention includes the light reflection layer of the present invention or the light reflection plate of the present invention, and an interlayer film sheet arranged on at least one of the outermost layers of the light reflection layer or the light reflection plate.

(Configuration of laminated interlayer film sheet for glass)

Fig. 3 is a cross-sectional view schematically illustrating an example of a laminated interlayer film sheet for laminated glass whose both surfaces are bonded to interlayer film sheets 22 and 24 respectively with respect to the light reflection plate of Fig. 1. The interlayer film sheet of Fig. 3 can be incorporated in the laminated glass as is.

Fig. 4 illustrates an example of a laminated interlayer film sheet in a case of peeling a substrate 12 off with respect to the light reflection plate of Fig. 1. The interlayer film sheet of Fig. 4 can be incorporated in the laminated glass as is.

Fig. 5 is a cross-sectional view schematically illustrating an example of a laminated interlayer film sheet for laminated glass whose both surfaces are bonded to interlayer film sheets 22 and 24 respectively with respect to the light

reflection plate of Fig. 2. The interlayer film sheet of Fig. 5 can be incorporated in the laminated glass as is.

(Characteristics of laminated interlayer film sheet for glass)

The interlayer film sheet can be bonded to one and/or both surfaces of the light reflector of the present invention. By bonding the interlayer film sheet, the interlayer film sheet can be easily incorporated in the laminated glass as a laminated interlayer film sheet for laminated glass. When the interlayer film sheet is bonded thereto, the interlayer film sheet may be bonded in a state in which the substrate remains or after the substrate is peeled off. However, when it is considered that the interlayer film sheet is incorporated in the laminated glass at the subsequent process, preferably, the substrate is peeled off and the interlayer film sheet is bonded in consideration of the thickness, flexibility, and compression resistance.

As the interlayer film sheet, a normal interlayer film sheet which is used to manufacture laminated glass can be used. Specific examples thereof include a sheet manufactured from a composition containing a polyvinyl butyral resin or an ethylene-vinyl acetate copolymer as a main component.

The thickness of the interlayer film sheet is generally 380 $\mu$m to 760 $\mu$m.

[Method of manufacturing laminated interlayer film sheet for laminated glass]

The light reflection plate of the present invention can be made into a laminated interlayer film sheet for laminated glass interposed between the interlayer film sheets by bonding both surfaces thereof with the interlayer film sheets.

The method of manufacturing a laminated interlayer film sheet for laminated glass of the present invention includes at least the following processes:

(1) a first process of bonding a first interlayer film sheet on one surface of the light reflection plate to obtain a first laminate, and

(2) a second process of bonding a second interlayer film sheet to the surface on the opposite side of the surface to which the first interlayer film sheet of the first laminate is bonded.

The first and second processes may be performed sequentially or simultaneously. In addition, after one process is carried out, another process such as temporarily holding and transporting the resultant may be carried out.

A known bonding method can be used for bonding the interlayer film sheet, but a lamination treatment is preferably used. When the lamination treatment is performed, it is preferable that the treatment is performed under the conditions of heating and pressing to a certain extent such that the light reflection plate and the interlayer film sheet are not peeled off after the processing.

In order to stably perform the lamination, the temperature of the film surface on the side to which the interlayer film sheet is adhered is preferably 50°C to 130°C and more preferably 70°C to 100°C.

The pressing is preferably performed at the time of lamination. The condition of pressing is preferably less than 2.0 kg/cm$^2$, more preferably 0.5 kg/cm$^2$ to 1.8 kg/cm$^2$, and still more preferably 0.5 kg/cm$^2$ to 1.5 kg/cm$^2$.

In addition, in the present invention, the substrate (or a laminate at least including a substrate) may be peeled off from the light reflection plate simultaneously, immediately after, or immediately before the lamination. That is, a substrate may not be present in a laminated interlayer film sheet obtained after the lamination. For example, a method of manufacturing a laminated interlayer film sheet for laminated glass of the present invention includes a method of manufacturing a laminated interlayer film sheet for laminated glass including a process of peeling a substrate included in the light reflection plate from the first laminate simultaneously or after a process of bonding the light reflection plate to the first interlayer film sheet in the first process, and a process of bonding the second interlayer film sheet to the surface from which the substrate of the first laminate is peeled in the second process.

A laminated interlayer film sheet for laminated glass without a substrate can be manufactured using this method and a reflective laminated glass without a substrate can be easily manufactured using the laminated interlayer film sheet for laminated glass. In order for the substrate to be stably peeled off without damage or the like, the temperature of the substrate at the time when the substrate is peeled off from the light reflection layer of the cholesteric liquid crystal phase is preferably 40°C or higher and more preferably 40°C to 60°C.

[Laminated glass]

The laminated glass of the present invention includes two sheets of glass and the laminated interlayer film sheet for glass of the present invention included between the two sheets of glass.

(Configuration of laminated glass)

Figs. 6 to 8 are cross-sectional views of an embodiment of laminated glass of the present invention.

Fig. 6 illustrates an example in which glass plates 32 and 34 are respectively bonded to both surfaces of the laminated interlayer film sheet for laminated glass illustrated in Fig. 3.

Fig. 7 illustrates an example in which glass plates 32 and 34 are respectively bonded to both surfaces of the laminated interlayer film sheet for laminated glass illustrated in Fig. 4.

Fig. 8 illustrates an example in which glass plates 32 and 34 are respectively bonded to both surfaces of the laminated interlayer film sheet for laminated glass illustrated in Fig. 5.

The laminated interlayer film sheet of laminated glass of the present invention can be made into laminated glass interposed between two sheets of glass plates. As the glass plate, a normal glass plate can be used.

Heat-absorbing glass having absorption in the visible light area can be used for improving the heat shielding performance by being combined with the light reflection plate using the cholesteric liquid crystal phase of the present invention. By adjusting absorption of the visible light area, visibility (transmittance) and heat shielding performance as glass can be adjusted. The absorption of the visible light area or the color tone as transmitted light can be adjusted by the heat-absorbing glass containing metal oxides such as iron, tin, nickel, cobalt, and selenium as described in Japanese Patent No. 2544035 and Japanese Patent No. 2617223. For example, in a case of being used as windshields for a vehicle, it is preferable to improve heat shielding performance while absorption in the visible light area is suppressed so as to satisfy "a visible light transmittance (standard light source A) of 70% or more" defined by JIS-R-3211 as laminated glass and the color tone of the transmitted light is adjusted. As the heat-absorbing glass, the visible light transmittance (standard light source A) is preferably in the range of 80% to 95%, and a dominant wavelength measured using the standard A light source is preferably in the range of 495 nm to 560 nm.

The thickness of the glass plate is not particularly limited and a preferred range thereof is changed depending on usage. For example, in the usage of windshields (window shield) of a transport vehicle, it is preferable to use a glass plate having a thickness of 2.0 mm to 2.3 mm in general. Further, in the usage of a heat-shielding window material for a building such as a house or a building, it is preferable to use a glass plate having a thickness of 40 μm to 300 μm in general. However, the range of the thickness is not limited to the above.

[Method of manufacturing laminated glass]

The laminated interlayer film sheet for laminated glass of the present invention can be made into laminated glass by being interposed between two sheets of glass plates.

The method of manufacturing the laminated glass of the present invention includes a process of manufacturing a laminate sandwiched between glass plates by interposing the laminated interlayer film sheet for laminated glass between two sheets of glass plates and a process of heating and pressing the laminate sandwiched between the glass plates.

As a specific manufacturing method, a known method of manufacturing laminated glass can be appropriately used.

In general, a method of interposing a laminated interlayer film sheet for laminated glass between two sheets of glass plates, repeatedly performing a heat treatment and a pressure treatment (squeezing or the like using a rubber roller) for several times, and finally performing a heat treatment using an autoclave or the like under the pressure condition is employed.

The manufacturing method of the present invention includes a process of heating and pressing a laminate sandwiched between the glass plates.

In the manufacturing method of the present invention, it is preferable to heat and press the laminate sandwiched between the glass plates in which two interlayer films are not in contact to each other.

Bonding the laminate sandwiched between the glass plates to the glass plates may be attained, for example, by prebonding them under reduced pressure, using a vacuum bag or the like, at a temperature of 80°C to 120°C for a period of from 30 minutes to 60 minutes, and thereafter bonding them in an autoclave under a pressure of from 1.0 MPa to 1.5 MPa at a temperature of from 120°C to 150°C thereby giving laminated glass in which the laminate is sandwiched between the two glass plates. If desired, they may be bonded to each other via an adhesive material or the like.

In this case, preferably, the pressure is from 1.0 MPa to 1.5 MPa, the temperature is from 120°C to 150°C, and the thermally bonding time is from 20 minutes to 90 minutes.

After the thermal bonding, the cooling mode is not particularly limited. While the pressure is suitably purged, the laminated glass to be obtained may be spontaneously kept cooled. In the present invention, it is desirable that the system is cooled while the pressure therein is kept as such after the thermal bonding, in terms of preventing the laminated glass to be obtained from being wrinkled or cracked. The mode of cooling the system while the pressure is kept as such means that the apparatus is so cooled so that the inner pressure inside the apparatus at 40°C could be from 75% to

100% of the inner pressure inside the apparatus where the laminated glass has been thermally bonded (preferably at 130°C). The method of cooling the system while the pressure therein is kept as such is not specifically defined so far as the pressure in the system when cooled to 40°C could fall within the above range. However, preferred is an embodiment where the inner area of the apparatus is gradually cooled with no pressure leak therethrough in such a manner that the inner pressure inside the apparatus could naturally lower with the decrease in the temperature therein, or an embodiment where the system is cooled with further external pressure in such a manner that the inner pressure inside the apparatus could not lower with the decrease in the temperature therein. In case where the system is cooled while the pressure therein is kept as such, it is desirable that the laminated glass is thermally bonded at a temperature from 120°C to 150°C and then left cooled for 1 hour to 5 hours to 40°C.

Preferably, the method of the present invention includes a process of cooling the system while the pressure therein is kept as such, then purging the pressure. Concretely, it is desirable that the system is first cooled while the pressure therein is kept as such, then after the temperature inside the autoclave has reached 40°C or lower, the system is cooled by purging the pressure.

From the above, it is desirable that the method of manufacturing laminated glass of the present invention includes a process of laminating the first glass, the first interlayer film sheet, the light reflection layer, the second interlayer film, and the second glass in this order, a process of thermally bonding them under a pressure of 1.0 MPa to 1.5 MPa at a temperature of 120°C to 150°C, a process of cooling the system while the pressure therein is kept as such, and a process of releasing the pressure.

The range of thermally bonding the light reflection layer (or the light reflection plate) to the interlayer film may be the range that covers the entire area of the glass plates, but may be the peripheral area of the glass plates. Thermally bonding the two at the peripheral area prevents the laminated glass from being wrinkled.

[Member for window]

The light reflection plate of the present invention exhibits the selective reflection characteristic with reflection peaks in the ranges of 850 nm to 900 nm, 1010 nm to 1070 nm, and 1190 nm to 1290 nm corresponding to the peak of solar light energy. The reflection plate having such a characteristic is bonded to a building such as a house, an office building, or the like or a window for a vehicle such as a vehicle or the like as a member for shielding heat of sunlight. Alternatively, the light reflection plate of the present invention can be provided for the usage as a member itself (for example, glass for shielding heat or a film for shielding heat) for shielding heat of sunlight.

Another important performance as the light reflection plate is transmittance and haze of visible light. It is possible to provide a light reflection plate exhibiting preferable transmittance and haze of visible light by selecting materials and adjusting manufacturing conditions or the like according to the usage. For example, in an embodiment in which a light reflection plate is used for the usage requiring high transmittance of visible light, a light reflection plate in which the transmittance of visible light is 90% or more and the reflectance of infrared satisfies the above-described reaction can be provided.

Preferably, the light reflection layer of the present invention, the light reflection plate of the present invention, the laminated interlayer film sheet for glass of the present invention, and the laminated glass of the present invention are used as members for windows of buildings or vehicles.

[Examples]

The characteristics of the present invention are described more concretely with reference to the following Examples and Comparative Examples (in addition, Comparative Examples are not known technologies). In the following Examples, the material used, the amount and ratio thereof, the details of the treatment, and the treatment procedures may be suitably modified or changed in a range not departing from the scope of the present invention. Accordingly, the scope of the present invention should not be limitatively interpreted by the Examples described below.

[Manufacturing Example 1]

<Preparation of coating liquid (liquid crystal composition)>

A coating liquid (R1) having the composition listed in Table below was prepared.

Further, a perfluoroalkyl group-containing alignment control agent (6) is a compound (6) exemplified as a specific example of the compound represented by the general formula (I) . In addition, a coating property imparting agent Olefin PD-005 is a hydrophilic group-containing coating property imparting agent.

[Table 1]

| Table of composition of coating liquid (R1) | | |
|---|---|---|
| Materials (type) | Names of materials (manufacturer) | Doses |
| Rod-shaped liquid crystal compound | Liquid crystal compound IV-14 | 100.000 parts by mass |
| Chiral agent | LC-756 (BASF) | 2.359 parts by mass |
| Polymerization initiator | Irgacure 819 (BASF) | 4.192 parts by mass |
| Alignment control agent | Alignment control agent (6) | 0.005 parts by mass |
| Coating property imparting agent | Olefin PD-005 (Nissin Chemical Industry Co., Ltd.) | 0.050 parts by mass |
| Solvent | 2-butanone (Wako Pure Chemical Industries, Ltd.) | 156.552 parts by mass |

In addition, coating liquids (R2) to (R7) were prepared in the same manner as the above except that the dose of the alignment control agent (6) of the coating liquid (R1) was changed to the amount listed in Table below.

[Table 2]

| Amounts of alignment control agent of coating liquids (R2) to (R7) | |
|---|---|
| Coating liquids | Amount of alignment control agent (6) |
| Coating liquid (R2) | None |
| Coating liquid (R3) | 0.003 parts by mass |
| Coating liquid (R4) | 0.002 parts by mass |
| Coating liquid (R5) | 0.015 parts by mass |
| Coating liquid (R6) | 0.020 parts by mass |
| Coating liquid (R7) | 0.025 parts by mass |

In addition, coating liquids (R8) to (R13) were prepared in the same manner as the above except that the dose of the coating property imparting agent Olefin PD-005 of the coating liquid (R1) was changed to the amount listed in Table below.

[Table 3]

| Amounts of coating liquid imparting agent of coating liquids (R8) to (R13) | |
|---|---|
| Coating liquids | Amount of Olefin PD-005 |
| Coating liquid (R8) | None |
| Coating liquid (R9) | 0.020 parts by mass |
| Coating liquid (R10) | 0.030 parts by mass |
| Coating liquid (R11) | 0.150 parts by mass |
| Coating liquid (R12) | 0.200 parts by mass |
| Coating liquid (R13) | 0.250 parts by mass |

A coating liquid (L1) having the composition listed in Table below was prepared.

[Table 4]

| Table of composition of coating liquid (L1) | | |
|---|---|---|
| Materials (type) | Names of materials (manufacturer) | Doses |
| Rod-shaped liquid crystal compound | RM-257 (Merch) | 100.00 parts by mass |

(continued)

| Table of composition of coating liquid (L1) | | |
|---|---|---|
| Materials (type) | Names of materials (manufacturer) | Doses |
| Chiral agent | Compound 1 shown below | 1.481 parts by mass |
| Polymerization initiator | Irgacure 819 (BASF) | 4.192 parts by mass |
| Alignment control agent | Alignment control agent (6) | 0.005 parts by mass |
| Coating property imparting agent | Olefin PD-005 (Nissin Chemical Industry Co., Ltd.) | 0.050 parts by mass |
| Solvent | 2-butanone (Wako Pure Chemical Industries, Ltd.) | 156.552 parts by mass |

[Chem. 32]

Chiral agent: compound 1 (compound described in JP-A-2002-179668)

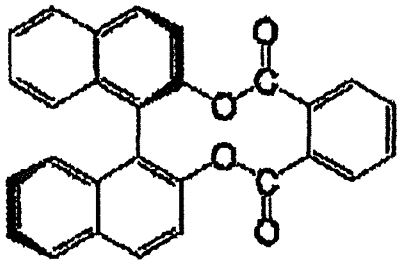

In addition, coating liquids (L2) to (L5) were prepared in the same manner as the above except that the dose of the alignment control agent (6) of the coating liquid (L1) and the dose of the coating property imparting agent Olefin PD-005 were changed to the amounts listed in Table below.

[Table 5]

| Amounts of alignment control agent and coating liquid imparting agent of coating liquids (L2) to (L5) | | |
|---|---|---|
| Coating liquids | Amount of alignment control agent (6) | Amount of Olefin PD-005 |
| Coating liquid (L2) | 0.003 parts by mass | 0.050 parts by mass |
| Coating liquid (L3) | 0.015 parts by mass | 0.050 parts by mass |
| Coating liquid (L4) | 0.005 parts by mass | 0.030 parts by mass |
| Coating liquid (L5) | 0.005 parts by mass | 0.150 parts by mass |

[Example 1]

<Manufacture 1 of light reflection plate>

The prepared coating liquid (R1) was used to prepare a light reflection plate by the following procedures. As a substrate, a PET film (manufactured by Fuj if ilm Co., Ltd., with no undercoat layer, thickness: 75 μm) was used by applying a rubbing treatment (Rayon cloth, pressure: 0.1 kgf, rotation speed: 1000 rpm, transportation speed: 10 m/min, times: one round trip).

(1) The PET film was coated with the coating liquid (R1) such that the thickness of the film after drying became 4 μm using a wire bar at room temperature.
(2) The resultant was dried for 30 seconds at room temperature, the solvent was removed, and the resultant was heated for 2 minutes at 85°C to enter a state of a cholesteric liquid crystal phase at 40°C. Subsequently, UV light was radiated for 6 seconds to 12 seconds at an output of 60% using an electrodeless lamp "D valve" (90 mW/cm2)

(manufactured by Fusion UV systems Inc.), and the cholesteric liquid crystal phase was fixed, thereby preparing a film (light reflection layer). This film was set to the light reflection plate of Example 1.

<Evaluation 1 of light reflection plate>

(Haze)

Determination was performed on the prepared light reflection plate based on the following criteria by peeling the PET film which was made into the substrate, extracting the light reflection layer alone, and by measuring the haze using a haze meter "NDH 2000" (manufactured by Nippon Denshoku Industries).

A: The haze was 0.06% or less
B: The range of the haze was 0.06% to 0.08%
C: The range of the haze was 0.08% to 0.10%
D: The haze was more than 0.10%

The results are listed in Table below.

[Comparative Example 1]

A light reflection plate of Comparative Example 1 was prepared by the same procedures as those of Example 1 except that the coating liquid (R1) to be coated was changed to the coating liquid (R2), and the performance was evaluated, and the evaluation results were listed in Table below.

[Examples 2 to 6]

Light reflection plates of Examples 2 to 6 were prepared by the same procedures as those of Example 1 except that the coating liquid (R1) to be coated was changed to the coating liquids (R3) to (R7), and the performance was evaluated, and the evaluation results were listed in Table below.

[Table 6]

| | Light reflection layer (first layer) | | Evaluation results |
|---|---|---|---|
| | Coating liquid | Amount of alignment control agent | Haze |
| Example 1 | R1 | 0.005 parts by mass | 0.05% (A) |
| Comparative Example 1 | R2 | None | 3.00% (D) |
| Example 2 | R3 | 0.002 parts by mass | 0.10% (C) |
| Example 3 | R4 | 0.003 parts by mass | 0.06% (A) |
| Example 4 | R5 | 0.015 parts by mass | 0.06% (A) |
| Example 5 | R6 | 0.020 parts by mass | 0.08% (B) |
| Example 6 | R7 | 0.025 parts by mass | 1.00% (C) |

From Table 6 above, it was understood that the light reflection plate of Comparative Example 1 not using a fluoroalkyl group-containing alignment control agent had large haze even though the light reflection plate was a single layer and was not suitable as a light reflection layer.
When the fluoroalkyl group-containing alignment control agent was used, the alignment property is improved

even with a slight used amount thereof (0.002 parts by mass) so that the haze can be suppressed to be small. When the amount of the fluoroalkyl group-containing alignment control agent to be used was increased, the tendency of suppressing the haze to a minimum was recognized, but when the amount thereof became extremely large (0.025 parts by mass), it acted as an inhibitor with respect to the alignment of the liquid crystal compound so that the haze became worse. In regard to the amount of the fluoroalkyl group-containing alignment control agent to be used, it was confirmed that the optimum range was present.

[Example 7]

<Manufacture 1 of light reflection plate>

The prepared coating liquids (R1) and (L1) were used to prepare a light reflection plate by the following procedures. As a substrate, a PET film (manufactured by Fujifilm Co., Ltd., with no undercoat layer, thickness: 75 μm) was used by applying a rubbing treatment (Rayon cloth, pressure: 0.1 kgf, rotation speed: 1000 rpm, transportation speed: 10 m/min, times: one round trip).

(1) The PET film was coated with the coating liquid (R1) such that the thickness of the film after drying became 4 μm using a wire bar at room temperature.
(2) The resultant was dried for 30 seconds at room temperature, the solvent was removed, and the resultant was heated for 2 minutes at 85°C to enter a state of a cholesteric liquid crystal phase at 40°C. Subsequently, UV light wwas radiated for 6 seconds to 12 seconds at an output of 60% using an electrodeless lamp "D valve" (90 $mW/cm^2$) (manufactured by Fusion UV systems Inc.), and the cholesteric liquid crystal phase was fixed, thereby preparing a film (light reflection layer).
(3) After the light reflection layer was cooled to room temperature, the processes (1) and (2) were repeatedly performed on the curable film of the coating liquid (R1) using the coating liquid (L1), and a light reflection plate having the light reflection layers of the cholesteric liquid crystal phase, on which two layers were laminated, was prepared. This plate was set to the light reflection plate of Example 7.

<Evaluation 2 of light reflection plate>

(Coating property)

Immediately after a curable coating film of a light reflection layer, which is a first layer, was coated with a coating liquid of a liquid crystal composition, which is a second layer, immediately after a solvent was removed by drying at room temperature, and immediately after the film was heated at 85°C, the state of the coated film surface of the second layer was inspected visually, and failure such as unevenness, cissing, and the like and presence of haze were confirmed, and determination was performed based on the following criteria.

A: Abnormal feeling was not recognized even under an intense incandescent lamp, no problem.
B: Abnormal feeling was not recognized under a normal incandescent lamp, no problem.
C: Abnormal feeling was hardly recognized under a normal incandescent lamp, acceptable.
D: Abnormal feeling was recognized even under a normal incandescent lamp, practically not acceptable.

The results are listed in Table below.

(Haze)

Determination was performed on the prepared light reflection plate based on the following criteria by peeling the PET film which was made into the substrate, extracting the laminate of two layers of the light reflection layer, and by measuring the haze using a haze meter "NDH 2000" (manufactured by Nippon Denshoku Industries).

A: The haze was 0.10% or less
B: The range of the haze was 0.10% to 0.12%
C: The range of the haze was 0.12% to 0.15%
D: The haze was more than 0.15%

The results are listed in Table below.

[Comparative Example 2]

A light reflection plate of Comparative Example 2 was prepared by the same procedures as those of Example 7 except that the coating liquid (R1) to be coated was changed to the coating liquid (R8), and the performance was evaluated, and the evaluation results were listed in Table below.

[Examples 8 to 12]

Light reflection plates of Examples 8 to 12 were prepared by the same procedures as those of Example 7 except that the coating liquid (R1) to be coated was changed to the coating liquids (R9) to (R13), and the performance was evaluated, and the evaluation results were listed in Table below.

[Table 7]

| | Light reflection layer (first layer) | | Light reflection layer (second layer) | | | Evaluation results | |
|---|---|---|---|---|---|---|---|
| | Coating liquid | Amount of coating property imparting agent | Coating liquid | Amount of alignment control agent | Amount of coating property imparting agent | Coating property | Haze |
| Example 7 | R1 | 0.050 parts by mass | L1 | 0.005 parts by mass | 0.050 parts by mass | C | 0.09% (A) |
| Comparative Example 2 | R8 | None | | | | D | 2.70% (D) |
| Example 8 | R9 | 0.020 parts by mass | | | | C | 0.14% (C) |
| Example 9 | R10 | 0.030 parts by mass | | | | A | 0.10% (A) |
| Example 10 | R11 | 0.150 parts by mass | | | | A | 0.10% (A) |
| Example 11 | R12 | 0.200 parts by mass | | | | A | 0.12% (B) |
| Example 12 | R13 | 0.250 parts by mass | | | | A | 0.15% © |

From Table 7 above, it was understood that the light reflection plate of Comparative Example 2 not using a hydrophilic group-containing coating property imparting agent for the first light reflection layer had a degraded coating property at the time when the coating liquid of the liquid crystal composition of the second light reflection layer was applied, the shape of the surface was poor, and the haze was largely generated.

When a hydrophilic group-containing coating property imparting agent was used for the first light reflection layer, the coating property became increased at the time when the coating liquid of the liquid crystal composition for the second light reflection layer was coated as the used amount thereof was larger. However, when the hydrophilic group-containing coating property imparting agent of the first light reflection layer became extremely large (0.250 parts by mass), the agent acted to inhibit an aging process of alignment after the solvent of the liquid crystal compound of the second light reflection layer was removed, and the the haze became worse. In regard to the amount of the hydrophilic group-containing coating property imparting agent of the first light reflection layer, it was confirmed that the optimum range was present.

[Examples 13 to 16]

<Manufacture 3 of light reflection plate>

Light reflection plates of Examples 13 to 16 were prepared by the same procedures as those of Example 7 except that the coating liquid (L1) to be coated was changed to the coating liquids (L2) to (L5).

<Evaluation 3 of light reflection plate>

In the same manner as the evaluation 2 of the light reflection plate, evaluation was performed on the coating property and the haze of the light reflection plates of Examples 13 to 16.

The results are listed in Table below.

[Table 8]

| | Light reflection layer (first layer) | | | Light reflection layer (second layer) | | | Evaluation results | |
|---|---|---|---|---|---|---|---|---|
| | Coating liquid | Amount of alignment control agent | Amount of coating property impartin g agent | Coating liquid | Amount of alignment control agent | Amount of coating property imparting agent | Coating property | Haze |
| Example 7 | R1 | 0.005 parts by mass | 0.050 parts by mass | L1 | 0.0005 parts by mass | 0.050 parts by mass | B | 0.09% (A) |
| Example 13 | | | | L2 | 0.003 parts by mass | 0.050 parts by mass | B | 0.12% (B) |
| Example 14 | | | | L3 | 0.015 parts by mass | 0.050 parts by mass | A | 0.08% (A) |
| Example 15 | | | | L4 | 0.005 parts by mass | 0.030 parts by mass | B | 0.09% (A) |
| Example 16 | | | | L5 | 0.005 parts by mass | 0.150 parts by mass | B | 0.09% (A) |

From Table 8 above, when the coating property imparting agent was used for the first light reflection layer, the coating property was maintained even in a case where the amount of the alignment control agent in the coating liquid of the liquid crystal composition for the second light reflection layer was small (0.003 parts by mass).

When the alignment control agent was used for the first light reflection layer, it was confirmed that the alignment control agent in the second layer was preferably used in a slightly larger amount in regard to the haze of the light reflection layer of the second layer (Example 14).

It was confirmed that the used amount of the coating property imparting agent in the second light reflection layer did not significantly affect the coating property of the coating liquid of the second light reflection layer or the haze of a curable coating film (as shown in Table 7, the amount of the coating property imparting agent of a certain light reflection layer affects the coating property of the light reflection layer to be coated or the haze of the coating film, but the layer itself is not affected by the amount thereof).

[Manufacturing Example 2]

<Preparation of coating liquid used for manufacturing light reflection plate, laminated interlayer film sheet for laminated glass, and laminated glass>

(Preparation of coating liquid for adhesion-improving layer)

A coating liquid for an adhesion-improving layer having the composition shown below was prepared.

· Polyvinyl butyral resin B1776 (manufactured by Changchun Co. , Ltd. (Taiwan)) 10 parts by mass
· Methoxy propyl acetate (PGEMA) 100 parts by mass

(Preparation of coating liquid for undercoat layer)

A coating liquid for undercoat layer having the composition shown below was prepared.

· Acrylate resin Jurymer ET-410 (manufactured by Toa Gosei, solid content concentration: 30%) 50 parts by mass
· Methanol 50 parts by mass

(Preparation of coating liquid for alignment layer)

A coating liquid for alignment layer having the composition shown below was prepared.

• Modified polyvinyl alcohol PVA 203 (manufactured by Kuraray) 10 parts by mass
• Glutaraldehyde 0.5 parts by mass
• Water 371 parts by mass
• Methanol 119 parts by mass

(Preparation of coating liquid for undercoat layer)

A coating liquid for an undercoat layer having the composition shown below was prepared.

· Styrene acrylic resin Aron S-1001 (manufactured by Toa Gosei, solid content concentration: 50%) 20 parts by mass
· Methoxy propyl acetate (PGMEA) 80 parts by mass

(Preparation of coating liquid (liquid crystal composition))

Coating liquids (R14) and (R15) were prepared in the same manner as the above except that the dose of a Chiral agent LC-756 of the coating liquid (R1) was changed to the amount listed in Table below.

[Table 9]

| Dose of LC-756 of coating liquids (R14) and (R15) | |
|---|---|
| Coating liquid | Dose of LC-756 |
| Coating liquid (R14) | 2.820 parts by mass |
| Coating liquid (R15) | 3.449 parts by mass |

Further, coating liquids (L6) and (L7) were prepared in the same manner as the above except that the dose of a Chiral agent (compound 1) of the coating liquid (L1) was changed to the amount listed in Table below.

[Table 10]

| Dose of compound 1 of coating liquids (L6) and (L7) | |
|---|---|
| Coating liquid | Dose of compound 1 |
| Coating liquid (L6) | 1.758 parts by mass |
| Coating liquid (L7) | 2.153 parts by mass |

[Example 17]

<Manufacture of light reflection plate>

A PET film (manufactured by Fujifilm Co., Ltd., thickness: 75 μm) was coated with the coating liquid for an undercoat layer using a wire bar such that the film thickness after drying became 0.5 μm. Subsequently, the film was heated at 150°C for 10 minutes, dried, and solidified, thereby forming an adhesion-improving layer (undercoat layer).
Next, the surface of the PET film with the undercoat layer prepared in the above on the side on which the

undercoat layer was not coated was coated with the coating liquid for an undercoat layer using a wire bar such that the film thickness after drying became 0.25 μm. Subsequently, the film was heated at 150°C for 10 minutes, dried, and solidified, thereby forming an undercoat layer.

Subsequently, the formed undercoat layer was coated with the coating liquid for an alignment layer using a wire bar such that the film thickness after drying became 1.0 μm. Next, the resultant was heated at 100°C for 2 minutes, dried, and solidified, thereby forming an alignment layer. The alignment layer was subjected to a rubbing treatment (Rayon cloth, pressure: 0.1 kgf, rotation speed: 1000 rpm, transportation speed: 10 m/min, times: one round trip).

Next, the formed alignment layer was coated with coating liquids (R15), (R14), (R1), (L1), (L6), and (L7) in this order in the same manner as the procedures of Example 7, thereby forming a light reflection layer, on which 6 layers were laminated, of a cholesteric liquid crystal phase.

Next, the surface of the outermost layer of the light reflection layer of the cholesteric liquid crystal phase formed in the above was coated with the coating liquid for adhesion-improving layer using a wire bar such that the film thickness after drying became 1.0 μm. Subsequently, the resultant was heated at 150°C for 10 minutes, dried, and solidified to form an adhesion-improving layer, thereby preparing a light reflection plate.

(Manufacture of laminated interlayer film sheet for laminated glass and laminated glass)

Next, the prepared light reflection plate and a polyvinyl butyral interlayer film sheet for laminated glass (thickness: 380 μm) were subjected to a laminate treatment (heating temperature: 80°C, pressurizing force: 1.5 kg/cm$^2$, transporting speed: 0.1 m/min) using a laminate (manufactured by Taisei Laminator Ltd.), thereby preparing a laminated interlayer film sheet for laminated glass.

Subsequently, the prepared laminated interlayer film sheet for laminated glass was interposed between two sheets of clear glass (thickness: 2 mm), and put into a rubber bag, and the pressure thereof was reduced using a vacuum pump. Subsequently, the temperature was raised to 90°C under reduced pressure, maintained for 30 minutes, and the pressure and temperature were temporarily returned to normal pressure and temperature. Subsequently, the resultant was maintained for 20 minutes under the conditions of a pressure of 1.3 MPa and a temperature of 130°C in an autoclave. Next, the pressure and temperature were returned to normal pressure and temperature, thereby preparing laminated glass with a function of reflecting infrared light of Example 17.

<Evaluation of laminated glass>

(Haze)

Determination was performed on the prepared laminated glass with a function of reflecting infrared light based on the following criteria by measuring the haze using a haze meter "NDH 2000" (manufactured by Nippon Denshoku Industries).

A: The haze was 0.35% or less
B: The range of the haze was 0.35% to 0.50%
C: The range of the haze was 0.50% to 0.80%
D: The haze was more than 0.80%

The results are listed in Table below.

(Transmittance of visible light)

In regard to the prepared laminated glass with a function of reflecting infrared light, a front transmission spectrum on the light reflection layer side of the cholesteric liquid crystal phase was measured in conformity with JIS-R3211 using a spectrophotometer "V-670" (manufactured by JASCO Co., Ltd.), and the transmittance of visible light with respect to the standard light source A was calculated. The transmittance of the visible light was determined based on the following criteria.

A: The transmittance of visible light was 70% or more
D: The transmittance of visible light was less than 70%

The results are listed in Table below.

(Evaluation of heat shielding property)

In regard to the prepared laminated glass with a function of reflecting infrared light, the 5° specular reflection spectrum and the front transmission spectrum on the reflection layer side of the cholesteric liquid crystal phase were measured using a spectrophotometer "V-670" (manufactured by JASCO Co. , Ltd.) to calculate heat shielding performance (transmittance) with respect to a sunlight spectrum in a range of a wavelength of 300 nm to 2500 nm. Determination was performed on heat shielding performance based on the following criteria (it is desirable that the transmittance of the sunlight spectrum be lower).

A: The transmittance of the sunlight spectrum was 50% or less
B: The transmittance of the sunlight spectrum was more than 50% to 60%
C: The transmittance of the sunlight spectrum was more than 60% to 70%
D: The transmittance of the sunlight spectrum was more than 70%

The results are listed in Table below.

[Example 18]

Laminated glass with a function of reflecting infrared light of Example 18 was prepared by the same procedures as those of Example 17 except that clear glass on the PET film substrate side of an infrared light reflection plate among two sheets of clear glass was changed into heat-absorbing glass (transmittance of visible light at standard A light source: 85%, dominant wavelength: 550 nm), and the performance was evaluated, and the evaluation results were listed in Table below.

[Table 11]

| | Evaluation results | | |
|---|---|---|---|
| | Haze | Transmittance of visible light | Haze |
| Example 17 | 0.30% (A) | 84.7% (B) | 57.2% (B) |
| Example 18 | 0.35% (A) | 73.2% (B) | 46.2% (A) |

As listed in Table 11 above, in Examples 17 and 18, the haze was suppressed to be lower even in a mode of laminated glass so that the transmittance of visible light and heat shielding performance were high.

Particularly, Example 18 in which laminated glass was obtained using heat-absorbing glass having absorption in the visible light range showed extremely high heat shielding performance.

From the above-described results, according to Examples of the present invention, it was possible to provide a light reflection plate whose value of the haze was suppressed to be small and whose heat shielding property was excellent and a light reflection layer capable of improving a coating property at the time of laminating and coating of the light reflection layer obtained by fixing the cholesteric liquid crystal phase onto the light reflection layer.

Further, the heat shielding performance could be further improved by means of using heat-absorbing glass having absorption in the visible light area in a case of preparing laminated glass.

[Example 19]

In Examples 17 and 18, after the heating and pressing were completed, cooling was carried out for approximately 3 hours in a state of maintaining the pressure, and the pressure was released at the time when the temperature in the autoclave became 40°C or lower. At this time, the pressure before the release was 0.9 MPa.

In regard to the prepared laminated glass, wrinkles of the polyvinyl butyral resin film and cracks of the film of the infrared reflection layer were evaluated, and it was understood that both were further improved than those of Examples 17 and 18. In addition, when unevenness in reflection of the laminated glass plate was visually confirmed, it was understood that both were further improved than those of Examples 17 and 18.

[Example 20]

PVB serving as a first interlayer film was overlapped on the light reflection layer of the outermost layer (air interface side) of the light reflection plate including the PET as the substrate manufactured in Example 17, and the resultant passed through a laminate roll at a pressure of 0. 2 MPa, at a temperature of 120°C, and at a transportation speed of 0.2 m/min, then the light reflection layer of the outermost layer was bonded to the first interlayer film. At this time, the temperature of the laminate roll on the first interlayer film side was set to 25°C and the temperature of the laminate roll on the PET side was set to 120°C such that embossing of the first interlayer film was not crushed by the laminate roll. Only a PET support was peeled off from the laminated laminate so as to be used as a laminate of the first interlayer film and the infrared light reflection layer laminate. Further, the PVB serving as the second interlayer film was laminated on the surface of the light reflection layer of the outermost layer on the side in which the PET was peeled off. A laminate sandwiched between the overlapped glass plates was produced such that the completed laminate having the infrared light reflection layer laminate and the interlayer film was composed of glass, the first interlayer film, the infrared light reflection layer laminate, the second interlayer film, and glass in this order.

Preliminary pressing was performed on the laminate sandwiched between the obtained glass plates under a vacuum at 95°C for 30 minutes. After the preliminary pressing, the laminate sandwiched between the glass plates was subjected to the pressing treatment while heating at 1.3 MPa and at 120°C in an autoclave, thereby preparing the laminated glass. After the laminated glass was obtained, a portion protruding from the glass was cut and the laminated glass with no substrate was manufactured.

When evaluation was performed on performance of the obtained laminated glass, the results thereof were similar to those of Example 17.

Reference Signs List

12: SUBSTRATE
14a: LIGHT REFLECTION LAYER (LIGHT REFLECTION LAYER X1)
14b: LIGHT REFLECTION LAYER (LIGHT REFLECTION LAYER X2)
16: LIGHT REFLECTION LAYER (LIGHT REFLECTION LAYER X3)
22, 24: INTERLAYER FILM
32, 34: GLASS PLATE

## Claims

**1.** A light reflection layer, comprising:

a first liquid crystal layer obtained by fixing a first curable liquid crystal composition through curing in a state of a cholesteric liquid crystal phase,
wherein the first curable liquid crystal composition contains a polymerizable liquid crystal compound, a fluoroalkyl group-containing alignment control agent, and a hydrophilic group-containing coating property imparting agent.

**2.** The light reflection layer according to Claim 1, wherein the fluoroalkyl group-containing alignment control agent in the first curable liquid crystal composition is contained in the range of 0.003% by mass to 0.02% by mass with respect to the polymerizable liquid crystal compound in the first curable liquid crystal composition.

**3.** The light reflection layer according to Claim 1 or 2, wherein the hydrophilic group-containing coating property imparting agent in the first curable liquid crystal composition is contained in the range of 0.03% by mass to 0.2% by mass with respect to the polymerizable liquid crystal compound in the first curable liquid crystal composition.

**4.** The light reflection layer according to any one of Claims 1 to 3, further comprising at least one second liquid crystal layer obtained by being laminated on the first liquid crystal layer and fixing a second curable liquid crystal composition through curing in a state of a cholesteric liquid crystal phase.

**5.** The light reflection layer according to Claim 4, wherein the second curable liquid crystal composition contains a polymerizable liquid crystal compound, a fluoroalkyl group-containing alignment control group, and a hydrophilic group-containing coating property imparting agent.

6. The light reflection layer according to Claim 4 or 5, wherein the fluoroalkyl group-containing alignment control agent in the second curable liquid crystal composition is contained in the range of 0.0.03% by mass to 0.02% by mass with respect to the polymerizable liquid crystal compound in the second curable liquid crystal composition.

7. The light reflection layer according to any one of Claims 4 to 6, wherein the hydrophilic group-containing coating property imparting agent in the second curable liquid crystal composition is contained in the range of 0.03% by mass to 0.2% by mass with respect to the polymerizable liquid crystal compound in the second curable liquid crystal composition.

8. The light reflection layer according to any one of Claims 1 to 7, wherein the hydrophilic group-containing coating property imparting agent is an acetylene glycol-based compound.

9. The light reflection layer according to any one of Claims 1 to 8, wherein a selective reflection characteristic is in an infrared light region.

10. A light reflection plate, comprising
a substrate; and
the light reflection layer according to any one of Claims 1 to 9, which is arranged on the substrate.

11. The light reflection plate according to Claim 10, wherein the substrate is a polymer film.

12. The light reflection plate according to Claim 10 or 11, wherein a selective reflection characteristic is in an infrared light region.

13. A laminated interlayer film sheet for glass, comprising:

the light reflection layer according to any one of Claims 1 to 9 or the light reflection plate according to any one of Claims 10 to 12; and
an interlayer film sheet which is arranged on at least one outermost layer of the light reflection layer or the light reflection plate.

14. The laminated interlayer film sheet for glass according to Claim 13, further comprising interlayer film sheets on both of the outermost layers of the light reflection layer and the light reflection plate respectively.

15. A laminated glass comprising:

two sheets of glass; and
the laminated interlayer film sheet for glass according to Claim 13 or 14, which is interposed between the two sheets of glass.

16. The laminated glass according to Claim 15,
wherein at least one sheet among the two sheets of glass is a heat-absorbing glass,
a visible light transmittance of the heat-absorbing glass at a standard A light source is in the range of 80% to 90%, and a dominant wavelength measured using the standard A light source is in the range of 495 nm to 560 nm.

17. A method of manufacturing a laminated interlayer film sheet for laminated glass, the method comprising:

a first process of bonding a first interlayer film sheet to one surface of the light reflection plate according to any one of Claims 10 to 12 to obtain a first laminate; and
a second process of bonding a second interlayer film sheet to a surface on the opposite side of the surface to which the first interlayer film sheet of the first laminate is bonded.

18. The method of manufacturing the laminated interlayer film sheet for glass according to Claim 17,
wherein the first process includes a process of peeling a substrate included in the light reflection plate from the first laminate, which is performed simultaneously or after a process of bonding the light reflection plate to the first interlayer film sheet, and
the second process includes a process of bonding the second interlayer film sheet to the surface from which the substrate of the first laminate is peeled.

**19.** A method of manufacturing laminated glass, comprising:

a process of manufacturing a laminate sandwiched between glass plates by interposing the laminated interlayer film sheet for laminated glass according to Claim 17 or 18 between two sheets of glass plates; and
a process of heating and pressing the laminate sandwiched between the glass plates.

**20.** A window member for a building or a vehicle which uses the light reflection layer according to any one of Claims 1 to 9, the light reflection plate according to any one of Claims 10 to 12, the interlayer film sheet for glass according to Claim 13 or 14, or the laminated glass according to Claim 15 or 16.

Fig. 1

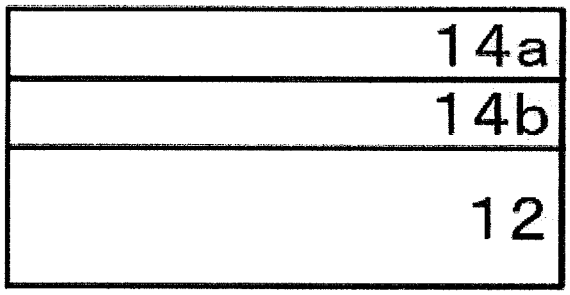


Fig. 2

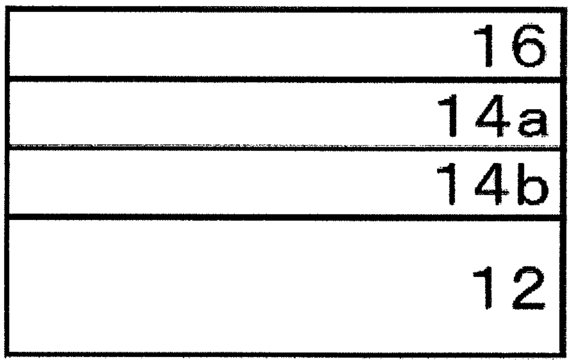


Fig. 3

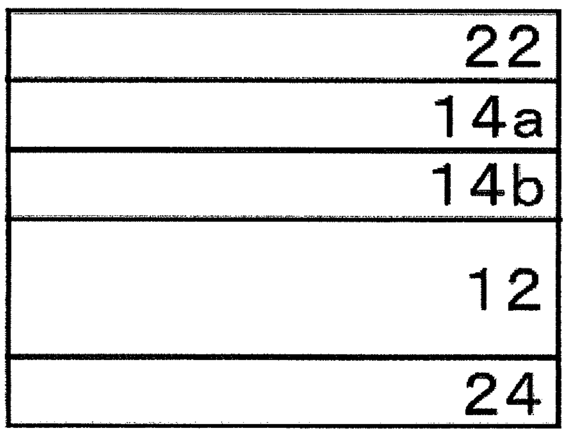

Fig. 4

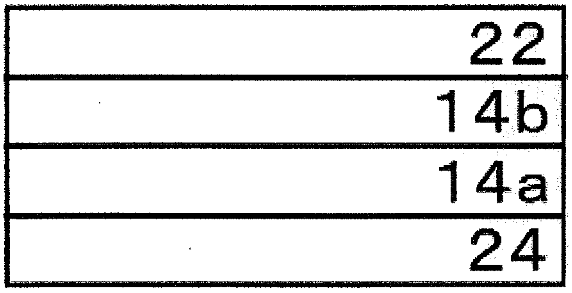


Fig. 5

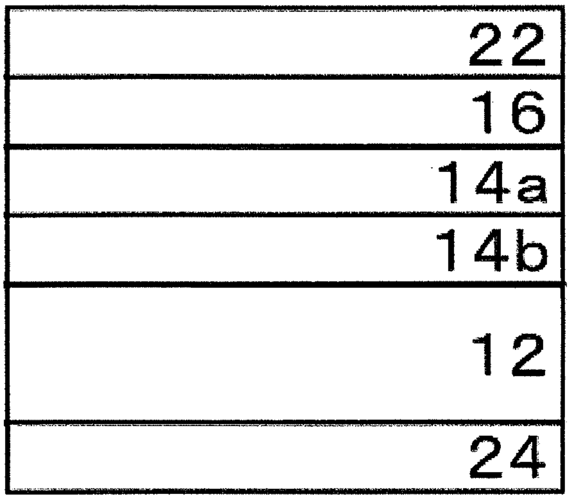

Fig. 6

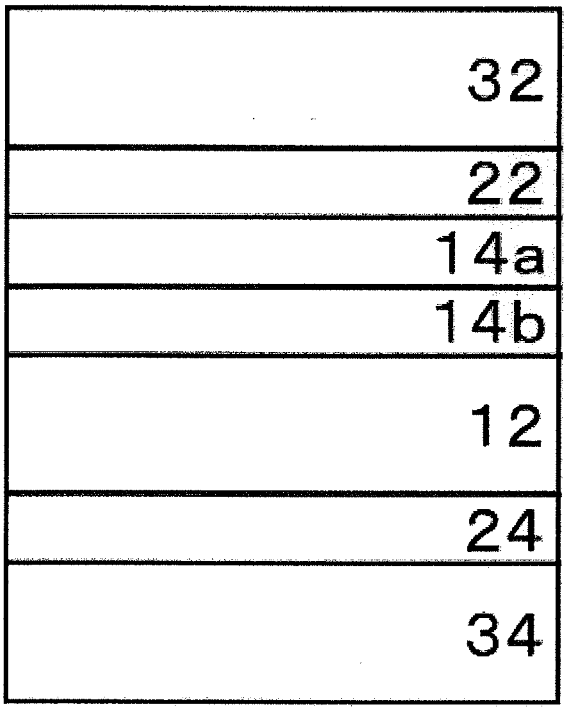


Fig. 7

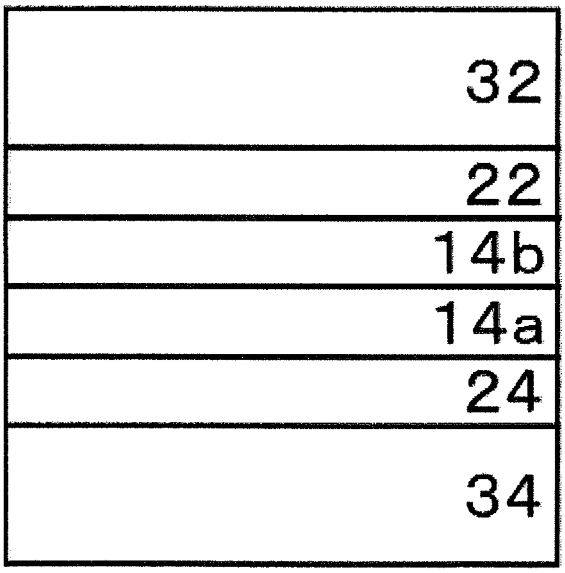

Fig. 8

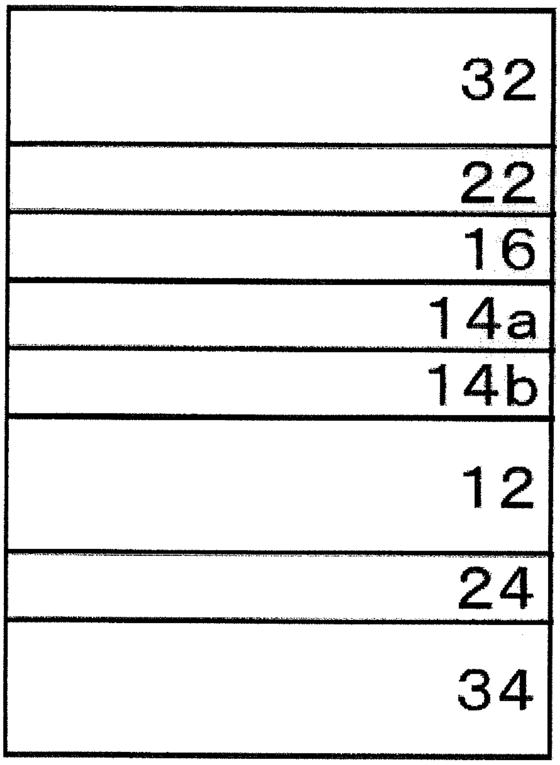
32
22
16
14a
14b
12
24
34

Fig. 9

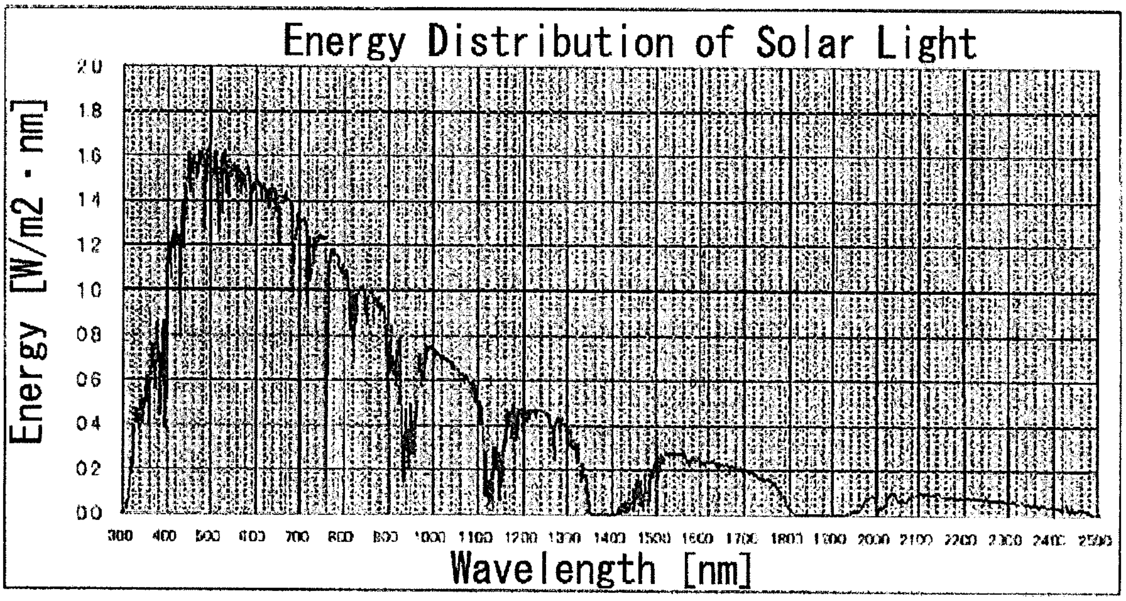
Energy Distribution of Solar Light
Energy [W/m2・nm]
Wavelength [nm]

**INTERNATIONAL SEARCH REPORT**

International application No. PCT/JP2013/058546

A. CLASSIFICATION OF SUBJECT MATTER
*G02B5/26*(2006.01)i, *B32B7/02*(2006.01)i, *C03C27/12*(2006.01)i, *G02B5/30*(2006.01)i

According to International Patent Classification (IPC) or to both national classification and IPC

B. FIELDS SEARCHED

Minimum documentation searched (classification system followed by classification symbols)
G02B5/26, B32B7/02, C03C27/12, G02B5/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2011-154215 A (Fujifilm Corp.), 11 August 2011 (11.08.2011), paragraphs [0046], [0076], [0077], [0091], [0092], [0094], [0095], [0097], [0103], [0106]; fig. 8<br>& US 2011/0181820 A1 & EP 2362248 A2<br>& CN 102141643 A | 1-7,9-20<br>8 |
| Y<br>A | JP 2011-81334 A (Fujifilm Corp.), 21 April 2011 (21.04.2011), paragraphs [0085], [0087], [0092]<br>& US 2012/0099054 A1 & EP 2478396 A<br>& WO 2011/030883 A1 & CN 102498421 A<br>& KR 10-2012-0070568 A | 1-7,9-20<br>8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 June, 2013 (18.06.13) | 25 June, 2013 (25.06.13) |
| Name and mailing address of the ISA/<br>Japanese Patent Office<br>Facsimile No. | Authorized officer<br><br>Telephone No. |

Form PCT/ISA/210 (second sheet) (July 2009)

INTERNATIONAL SEARCH REPORT

International application No. PCT/JP2013/058546

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2012-47812 A (Fujifilm Corp.), 08 March 2012 (08.03.2012), paragraph [0052] & US 2012/0050847 A1 & CN 102375174 A & KR 10-2012-0022653 A | 2,6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6263486 A
- JP 4109914 B
- JP 2009514022 T
- JP 9304770 A
- JP 3745221 B
- JP 2009075197 A
- JP 2006282828 A
- JP 4208990 B
- JP 4504555 T
- JP 2008545556 T
- JP 8027284 A
- JP 2002129162 A
- JP 2003287623 A
- US P2367661 A
- US 2367670 A
- US P2448828 A
- US P2722512 A
- US P3046127 A
- US 2951758 A
- US P3549367 A
- JP 60105667 A
- US P4239850 A
- US P4212970 A
- JP 2002097170 A
- EP 860475 A
- JP 2005105175 A
- JP 2009067956 A
- JP 2544035 B
- JP 2617223 B


### Non-patent literature cited in the description


- **C. DESTRADE et al.** *Mol crysr. Liq. Cryst.,* 1981, vol. 71, 111
- Chemical Quarterly Review, No. 22. Chemistry of Liquid Crystal, 1994
- **B. KOHNE et al.** *Angew. Chem. Soc. Chem. Comm.,* 1985, 1794
- **J. ZHANG et al.** *J. Am. Chem. Soc.,* 1944, vol. 116, 2655
- STN Chiral Agents. Liquid crystal Device Handbook. 1989, 199